# EUROPEAN PATENT APPLICATION

(11) **EP 4 733 914 A1**
(43) Date of publication of application: **29.04.2026**
(21) Application number: 25730000.4
(22) Date of filing: 04.06.2025
(51) Int. Cl.: G06F 3/0484, G06F 1/16, G06F 3/04817, G06F 3/041, G06F 3/0488

(54) **WEARABLE ELECTRONIC DEVICE COMPRISING FLEXIBLE DISPLAY, AND OPERATING METHOD THEREOF**

(30) Priority: 03.09.2024 KR 20240119358; 02.10.2024 KR 20240133696
(71) Applicant: SAMSUNG ELECTRONICS CO., LTD., Yeongtong-gu Suwon-si, Gyeonggi-do 16677 (KR)
(72) Inventor: BYUN, Ikjoo, Suwon-si, Gyeonggi-do 16677 (KR); BAE, Hyerim, Suwon-si, Gyeonggi-do 16677 (KR); SUNG, Wonkyu, Suwon-si, Gyeonggi-do 16677 (KR); LEE, Jungwoo, Suwon-si, Gyeonggi-do 16677 (KR)
(74) Representative: Nederlandsch Octrooibureau
(86) International application number: PCT/KR2025/007650
(87) International publication number: WO 2026/054245

(57) **Abstract**

An electronic device may comprise a housing configured to form an outer surface of the electronic device and including a first housing, a second housing, and a third housing. In the unfolded state of the electronic device, the second housing may be positioned between the first housing and the third housing. The electronic device may comprise a first hinge configured to rotatably connect the first housing and the second housing, a second hinge configured to rotatably connect the second housing and the third housing, a flexible display disposed in the housing, a cover display disposed in the housing and configured to face a direction opposite to a direction which the flexible display faces in the unfolded state of the electronic device, a sensor including sensing circuitry, at least one processor including processing circuitry, and memory storing instructions. The instructions may, when executed by at least one processor individually or collectively, cause the electronic device to identify, using the sensor 176, a folding state of the electronic device. The folding state may include a first folding state in which, among a plurality of areas of the flexible display, an area corresponding to the first hinge and an area corresponding to the second hinge are folded, a second folding state in which one of the area corresponding to the first hinge or the area corresponding to the second hinge is folded, and a third folding state in which the area corresponding to the first hinge and the area corresponding to the second hinge are unfolded. The instructions may. when executed by at least one processor individually or collectively, cause the electronic device to identify, using the sensor, a change in the folding state of the electronic device. The instructions may, when executed by at least one processor individually or collectively, cause the electronic device to, based on a change in the folding state, compare previous display information with pattern information. The previous display information may include layout information and application information of a screen displayed before the folding state is changed. The pattern information may include a plurality of pieces of display information and information about a matching relationship between the plurality of pieces of display information. The instructions, when individually or collectively executed by at least one processor, may cause the electronic device to, based on the previous display information corresponding to one piece of the pattern information, determine next display information as display information matching to the previous display information among the pattern information. The next display information may include layout information and application information for setting a screen to be displayed after the folding state is changed. The instructions, when individually or collectively executed by at least one processor, may cause the electronic device to, based on the next display information, perform a screen construction of the cover display or the flexible display. The screen construction may include an operation for determining an application to be run and a layout of a screen to be displayed on the cover display or the flexible display. Other various embodiments are also available.

## Description

### [Technical Field]

The disclosure relates to a wearable electronic device including a flexible display according to an embodiment and a method for operating the same.

### [Background Art]

More and more services and additional functions are being provided through electronic devices, e.g., smartphones, or other portable electronic devices. To meet the needs of various users and raise use efficiency of electronic devices, communication service carriers or device manufacturers are jumping into competitions to develop electronic devices with differentiated and diversified functionalities. Accordingly, various functions that are provided through electronic devices are evolving more and more.

Recently, various types of electronic devices are being developed that provide a wider screen through multi-display. For example, an electronic device has multiple displays and provides a wide screen through multi-display.

Electronic devices may have a new form factor, such as multi-display (e.g., dual-display) devices (e.g., foldable devices). A foldable device has a folding (or bending) display (e.g., a foldable display or a flexible display) to be used in a folded or unfolded state. Further, the multi-display implementation leads to increased demand for development of a user interface (UI) corresponding to the multi-display and its operation. The above-described information may be provided as related art for the purpose of helping understanding of the disclosure. No claim or determination is made as to whether any of the foregoing is applicable as background art in relation to the disclosure.

### [Disclosure of Invention]

### [Solution to Problems]

According to an embodiment, an electronic device may comprise a housing configured to form an outer surface of the electronic device and including a first housing, a second housing, and a third housing. In the unfolded state of the electronic device, the second housing may be positioned between the first housing and the third housing. The electronic device may comprise a first hinge configured to rotatably connect the first housing and the second housing, a second hinge configured to rotatably connect the second housing and the third housing, a flexible display disposed in the housing, a cover display disposed in the housing and configured to face a direction opposite to a direction which the flexible display faces in the unfolded state of the electronic device, a sensor including sensing circuitry, at least one processor including processing circuitry, and memory storing instructions. The instructions may, when executed by at least one processor individually or collectively, cause the electronic device to identify, using the sensor, a folding state of the electronic device. The folding state may include a first folding state in which, among a plurality of areas of the flexible display, an area corresponding to the first hinge and an area corresponding to the second hinge are folded, a second folding state in which one of the area corresponding to the first hinge or the area corresponding to the second hinge is folded, and a third folding state in which the area corresponding to the first hinge and the area corresponding to the second hinge are unfolded. The instructions may, when executed by at least one processor individually or collectively, cause the electronic device to identify, using the sensor, a change in the folding state of the electronic device. The instructions may, when executed by the at least one processor individually or collectively, cause the electronic device to, based on the change in the folding state, compare previous display information with pattern information. The previous display information may include layout information and application information of a screen displayed before the folding state is changed. The pattern information may include a plurality of pieces of display information and information about a matching relationship between the plurality of pieces of display information. The instructions may, when individually or collectively executed by the at least one processor, cause the electronic device to, based on the previous display information corresponding to one piece of the pattern information, determine next display information as display information matching to the previous display information among the pattern information. The next display information may include layout information and application information for setting a screen to be displayed after the folding state is changed. The instructions may, when individually or collectively executed by the at least one processor, cause the electronic device to, based on the next display information, perform a screen construction of the cover display or the flexible display. The screen construction may include an operation for determining an application to be run and a layout of a screen to be displayed on the cover display or the flexible display.

According to an embodiment, a method for operating an electronic device may comprise identifying a folding state of the electronic device. The folding state may include a first folding state in which, among a plurality of areas of a flexible display of the electronic device, an area corresponding to a first hinge of the electronic device and an area corresponding to a second hinge of the electronic device are folded, a second folding state in which one of the area corresponding to the first hinge or the area corresponding to the second hinge is folded, and a third folding state in which the area corresponding to the first hinge and the area corresponding to the second hinge are unfolded. The method may comprise identifying a change in the folding state. The method may comprise, based on the change in the folding state, comparing previous display information with pattern information. The previous display information may include layout information and application information of a screen displayed before the folding state is changed. The pattern information may include a plurality of pieces of display information and information about a matching relationship between the plurality of pieces of display information. The method may comprise, based on the previous display information corresponding to one piece of the pattern information, determining next display information as display information matching to the previous display information among the pattern information. The next display information may include layout information and application information for setting a screen to be displayed after the folding state is changed. The method may comprise, based on the next display information, performing a screen construction of the cover display or the flexible display. The screen construction may include an operation for determining an application to be run and a layout of a screen to be displayed on the cover display or the flexible display.

According to an embodiment, in a non-transitory computer-readable recording medium storing instructions, the instructions may, when individually or collectively executed by at least one processor of an electronic device, cause the electronic device to perform at least one operation. The at least one operation may comprise identifying a folding state of the electronic device. The folding state may include a first folding state in which, among a plurality of areas of a flexible display of the electronic device, an area corresponding to a first hinge of the electronic device and an area corresponding to a second hinge of the electronic device are folded, a second folding state in which one of the area corresponding to the first hinge or the area corresponding to the second hinge is folded, and a third folding state in which the area corresponding to the first hinge and the area corresponding to the second hinge are unfolded. The at least one operation may comprise identifying a change in the folding state. The at least one operation may comprise, based on the change in the folding state, comparing previous display information with pattern information. The previous display information may include layout information and application information of a screen displayed before the folding state is changed. The pattern information may include a plurality of pieces of display information and information about a matching relationship between the plurality of pieces of display information. The at least one operation may comprise, based on the previous display information corresponding to one piece of the pattern information, determining next display information as display information matching to the previous display information among the pattern information. The next display information may include layout information and application information for setting a screen to be displayed after the folding state is changed. The at least one operation may comprise, based on the next display information, performing a screen construction of the cover display or the flexible display. The screen construction may include an operation for determining an application to be run and a layout of a screen to be displayed on the cover display or the flexible display.

According to an embodiment, an electronic device may comprise a housing configured to form an outer surface of the electronic device and including a first housing, a second housing, and a third housing. In the unfolded state of the electronic device, the second housing may be positioned between the first housing and the third housing. The electronic device may comprise a first hinge configured to rotatably connect the first housing and the second housing, a second hinge configured to rotatably connect the second housing and the third housing, a flexible display disposed in the housing, a cover display disposed in the housing and configured to face a direction opposite to a direction which the flexible display faces in the unfolded state of the electronic device, a sensor including sensing circuitry, at least one processor including processing circuitry, and memory storing instructions. The instructions may, when executed by the at least one processor individually or collectively, cause the electronic device to identify, using the sensor, a folding state of the electronic device. The instructions may, when executed by at least one processor individually or collectively, cause the electronic device to identify, using the sensor, a change in the folding state of the electronic device. The instructions may, when executed by the at least one processor individually or collectively, cause the electronic device to determine next display information by, based on the change in the folding state, comparing previous display information with pattern information. The previous display information may include application information of a screen displayed before the folding state is changed. The pattern information may include a plurality of pieces of display information and information about a matching relationship between the plurality of pieces of display information. The next display information may include application information for setting a screen to be displayed after the folding state is changed. The instructions may, when individually or collectively executed by the at least one processor, cause the electronic device to, based on the next display information, perform a screen construction of the cover display or the flexible display. The screen construction may include an operation for determining an application to be run to be displayed on the cover display or the flexible display.

According to an embodiment, a method for operating an electronic device may comprise identifying, using a sensor, a folding state of the electronic device. The method may comprise identifying, using a sensor, a change in the folding state. The method may comprise determining next display information by, based on the change in the folding state, comparing previous display information with pattern information. The previous display information may include application information of a screen displayed before the folding state is changed. The pattern information may include a plurality of pieces of display information and information about a matching relationship between the plurality of pieces of display information. The next display information may include application information for setting a screen to be displayed after the folding state is changed. The method may comprise, based on the next display information, performing a screen construction of the cover display or the flexible display. The screen construction may include an operation for determining an application to be run to be displayed on the cover display or the flexible display.

According to an embodiment, in a non-transitory computer-readable recording medium storing instructions, the instructions may, when individually or collectively executed by at least one processor of an electronic device, cause the electronic device to perform at least one operation. The at least one operation may comprise identifying, using a sensor, a folding state of the electronic device. The at least one operation may comprise identifying, using a sensor, a change in the folding state. The at least one operation may comprise determining next display information by, based on the change in the folding state, comparing previous display information with pattern information. The previous display information may include application information of a screen displayed before the folding state is changed. The pattern information may include a plurality of pieces of display information and information about a matching relationship between the plurality of pieces of display information. The next display information may include application information for setting a screen to be displayed after the folding state is changed. The at least one operation may comprise, based on the next display information, performing a screen construction of the cover display or the flexible display. The screen construction may include an operation for determining an application to be run to be displayed on the cover display or the flexible display.

According to an embodiment, an electronic device may comprise a housing configured to form an outer surface of the electronic device and including a first housing, a second housing, and a third housing. In the unfolded state of the electronic device, the second housing may be positioned between the first housing and the third housing. The electronic device may comprise a first hinge configured to rotatably connect the first housing and the second housing, a second hinge configured to rotatably connect the second housing and the third housing, a flexible display disposed in the housing, a cover display disposed in the housing and configured to face a direction opposite to a direction which the flexible display faces in the unfolded state of the electronic device, a sensor including sensing circuitry, at least one processor including processing circuitry, and memory storing instructions. The instructions may, when executed by the at least one processor individually or collectively, cause the electronic device to identify, using the sensor, a folding state of the electronic device. The instructions may, when executed by at least one processor individually or collectively, cause the electronic device to identify, using the sensor, a change in the folding state of the electronic device. The instructions may, when executed by the at least one processor individually or collectively, cause the electronic device to determine next display information by, based on the change in the folding state, comparing previous display information with pattern information. The previous display information may include application information of a screen displayed before the folding state is changed. The pattern information may include a plurality of pieces of display information and information about a matching relationship between the plurality of pieces of display information. The next display information may include layout information and application information for setting a screen to be displayed after the folding state is changed. The instructions may, when individually or collectively executed by the at least one processor, cause the electronic device to, based on the next display information, perform a screen construction of the cover display or the flexible display. The screen construction may include an operation for determining a layout of a screen to be displayed on the cover display or the flexible display.

According to an embodiment, a method for operating an electronic device may comprise identifying, using a sensor, a folding state of the electronic device. The method may comprise identifying, using a sensor, a change in the folding state. The method may comprise determining next display information by, based on the change in the folding state, comparing previous display information with pattern information. The previous display information may include application information of a screen displayed before the folding state is changed. The pattern information may include a plurality of pieces of display information and information about a matching relationship between the plurality of pieces of display information. The next display information may include layout information and application information for setting a screen to be displayed after the folding state is changed. The method may comprise, based on the next display information, performing a screen construction of the cover display or the flexible display. The screen construction may include an operation for determining a layout of a screen to be displayed on the cover display or the flexible display.

According to an embodiment, in a non-transitory computer-readable recording medium storing instructions, the instructions may, when individually or collectively executed by at least one processor of an electronic device, cause the electronic device to perform at least one operation. The at least one operation may comprise identifying, using a sensor, a folding state of the electronic device. The at least one operation may comprise identifying, using a sensor, a change in the folding state. The at least one operation may comprise determining next display information by, based on the change in the folding state, comparing previous display information with pattern information. The previous display information may include application information of a screen displayed before the folding state is changed. The pattern information may include a plurality of pieces of display information and information about a matching relationship between the plurality of pieces of display information. The next display information may include layout information and application information for setting a screen to be displayed after the folding state is changed. The at least one operation may comprise, based on the next display information, performing a screen construction of the cover display or the flexible display. The screen construction may include an operation for determining a layout of a screen to be displayed on the cover display or the flexible display.

According to an embodiment, an electronic device may comprise a housing configured to form an outer surface of the electronic device and including a first housing, a second housing, and a third housing. In the unfolded state of the electronic device, the second housing may be positioned between the first housing and the third housing. The electronic device may comprise a first hinge configured to rotatably connect the first housing and the second housing, a second hinge configured to rotatably connect the second housing and the third housing, a flexible display disposed in the housing, a cover display disposed in the housing and configured to face a direction opposite to a direction which the flexible display faces in the unfolded state of the electronic device, a sensor including sensing circuitry, at least one processor including processing circuitry, and memory storing instructions. The instructions may, when executed by the at least one processor individually or collectively, cause the electronic device to identify, using the sensor, a folding state of the electronic device. The folding state may include a first folding state in which, among a plurality of areas of the flexible display, an area corresponding to the first hinge and an area corresponding to the second hinge are folded, a second folding state in which one of the area corresponding to the first hinge or the area corresponding to the second hinge is folded, and a third folding state in which the area corresponding to the first hinge and the area corresponding to the second hinge are unfolded. The instructions may, when executed by the at least one processor individually or collectively, cause the electronic device to display a first screen on the cover display in the first folding state. The instructions may, when individually or collectively executed by the at least one processor, cause the electronic device to, based on the folding state being changed from the first folding state to the second folding state, display a second screen on the flexible display. The second screen may include application to be displayed on a screen in the third folding state and icon(s) for recommending a layout of the screen in the third folding state. The icon(s) may be determined based on first display information of the first screen. The instructions may, when individually or collectively executed by the at least one processor, cause the electronic device to, based on a user input to one of the icon(s), determine next display information including application(s) and the layout of the screen in the third folding state. The display information may correspond to the user input. The instructions may, when individually or collectively executed by the at least one processor, cause the electronic device to, based on the folding state being changed from the second folding state to the third folding state, display a third screen on the flexible display based on the next display information.

According to an embodiment, a method for operating an electronic device may comprise identifying, using a sensor, a folding state of the electronic device. The folding state may include a first folding state in which, among a plurality of areas of the flexible display, an area corresponding to the first hinge and an area corresponding to the second hinge are folded, a second folding state in which one of the area corresponding to the first hinge or the area corresponding to the second hinge is folded, and a third folding state in which the area corresponding to the first hinge and the area corresponding to the second hinge are unfolded. The method may comprise displaying a first screen on the cover display in the first folding state. The method may comprise, based on the folding state being changed from the first folding state to the second folding state, displaying a second screen on the flexible display. The second screen may include application to be displayed on a screen in the third folding state and icon(s) for recommending a layout of the screen in the third folding state. The icon(s) may be determined based on first display information of the first screen. The method may comprise, based on a user input to one of the icon(s), determining next display information including application(s) and the layout of the screen in the third folding state. The display information may correspond to the user input. The method may comprise, based on the folding state being changed from the second folding state to the third folding state, displaying a third screen on the flexible display based on the next display information.

According to an embodiment, in a non-transitory computer-readable recording medium storing instructions, the instructions may, when individually or collectively executed by at least one processor of an electronic device, cause the electronic device to perform at least one operation. The at least one operation may comprise identifying, using a sensor, a folding state of the electronic device. The folding state may include a first folding state in which, among a plurality of areas of the flexible display, an area corresponding to the first hinge and an area corresponding to the second hinge are folded, a second folding state in which one of the area corresponding to the first hinge or the area corresponding to the second hinge is folded, and a third folding state in which the area corresponding to the first hinge and the area corresponding to the second hinge are unfolded. The method may comprise displaying a first screen on the cover display in the first folding state. The method may comprise, based on the folding state being changed from the first folding state to the second folding state, displaying a second screen on the flexible display. The second screen may include application to be displayed on a screen in the third folding state and icon(s) for recommending a layout of the screen in the third folding state. The icon(s) may be determined based on first display information of the first screen. The method may comprise, based on a user input to one of the icon(s), determining next display information including application(s) and the layout of the screen in the third folding state. The display information may correspond to the user input. The method may comprise, based on the folding state being changed from the second folding state to the third folding state, displaying a third screen on the flexible display based on the next display information.

### [Brief Description of Drawings]

FIG. 1A is a block diagram illustrating an electronic device in a network environment according to an embodiment;
FIG. 1B is a block diagram illustrating an electronic device according to an embodiment;
FIG. 2A is a perspective view illustrating an unfolded state of a first type of electronic device according to an embodiment;
FIG. 2B is a perspective view illustrating an unfolded state of a first type of electronic device according to an embodiment;
FIG. 2C is a perspective view illustrating a fully folded state of a first type of electronic device according to an embodiment;
FIG. 2D is a view illustrating a partially folded state of a first type of electronic device according to an embodiment;
FIG. 2E is a view illustrating a partially folded state of a first type of electronic device according to an embodiment;
FIG. 3A is a perspective view illustrating an unfolded state of a second type of electronic device according to an embodiment;
FIG. 3B is a perspective view illustrating an unfolded state of a second type of electronic device according to an embodiment;
FIG. 3C is a view illustrating a folded state of a second type of electronic device according to an embodiment;
FIG. 4A is a view illustrating types of an electronic device according to an embodiment;
FIG. 4B is a front view illustrating an unfolded state of a third type of electronic device according to an embodiment;
FIG. 4C is a rear view illustrating an unfolded state of a third type of electronic device according to an embodiment;
FIG. 4D is a perspective view illustrating a folded state of a third type of electronic device according to an embodiment;
FIG. 4E is a front perspective view illustrating a single-stage folded state of a third type of electronic device according to an embodiment;
FIG. 4F is a rear perspective view illustrating a single-stage folded state of a third type of electronic device according to an embodiment;
FIG. 4G is a front view illustrating a folded state of a third type of electronic device according to an embodiment;
FIG. 4H is a rear view illustrating a folded state of a third type of electronic device according to an embodiment;
FIG. 5A is a flowchart illustrating an operation method of an electronic device according to an embodiment;
FIG. 5B is a flowchart illustrating an operation method of an electronic device according to an embodiment;
FIG. 5C is a flowchart illustrating an operation method of an electronic device according to an embodiment;
FIG. 5D is a flowchart illustrating an operation method of an electronic device according to an embodiment;
FIG. 6 is a view illustrating operations of an electronic device according to an embodiment;
FIG. 7 is a view illustrating operations of an electronic device according to an embodiment;
FIG. 8 is a view illustrating operations of an electronic device according to an embodiment;
FIG. 9 is a view illustrating operations of an electronic device according to an embodiment;
FIG. 10 is a flowchart illustrating an operation method of an electronic device according to an embodiment.
FIG. 11 is a flowchart illustrating an operation method of an electronic device according to an embodiment;
FIG. 12 is a view illustrating operations of an electronic device according to an embodiment;
FIG. 13A is a view illustrating operations of an electronic device according to an embodiment.
FIG. 13B is a view illustrating operations of an electronic device according to an embodiment.
FIG. 14 is a view illustrating operations of an electronic device according to an embodiment;
FIG. 15 is a view illustrating operations of an electronic device according to an embodiment;
FIG. 16 is a view illustrating operations of an electronic device according to an embodiment.
FIG. 17 is a view illustrating operations of an electronic device according to an embodiment.
FIG. 18 is a view illustrating operations of an electronic device according to an embodiment.
FIG. 19 is a view illustrating operations of an electronic device according to an embodiment.

### [Mode for the Invention]

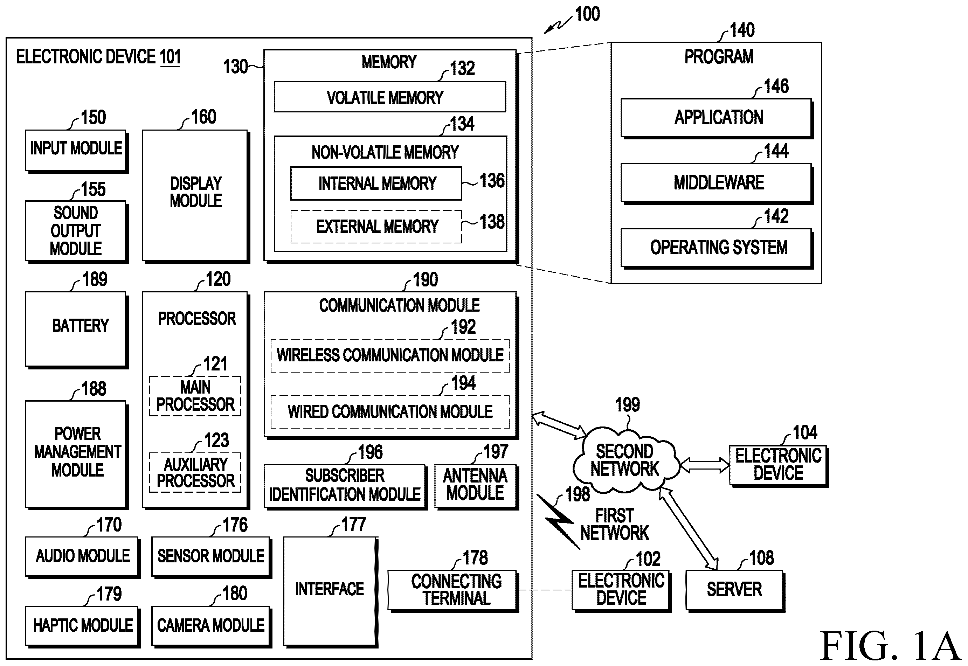

FIG. 1A is a block diagram illustrating an electronic device 101 in a network environment 100 according to an embodiment.

Referring to FIG. 1A, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor. In an embodiment, the sensor module 176 may include sensor circuitry. In an embodiment, the sensor module 176 may include a first sensor, a second sensor, and/or a third sensor. In an embodiment, the sensor circuitry may include a first sensor, a second sensor, and/or a third sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

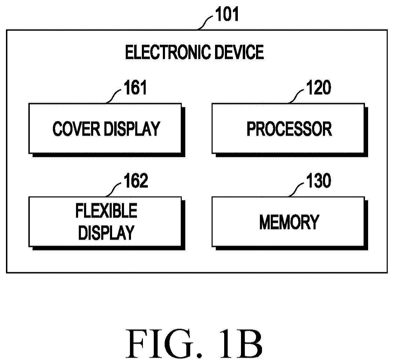

FIG. 1B is a block diagram illustrating an electronic device 101 according to an embodiment.

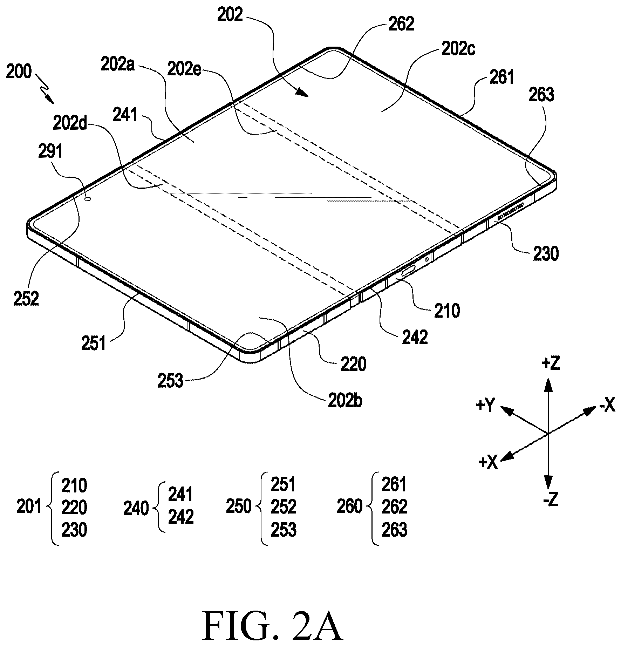

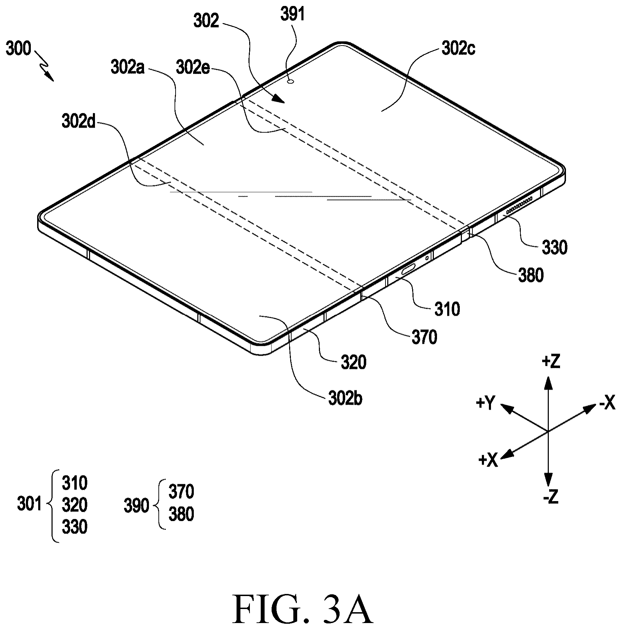

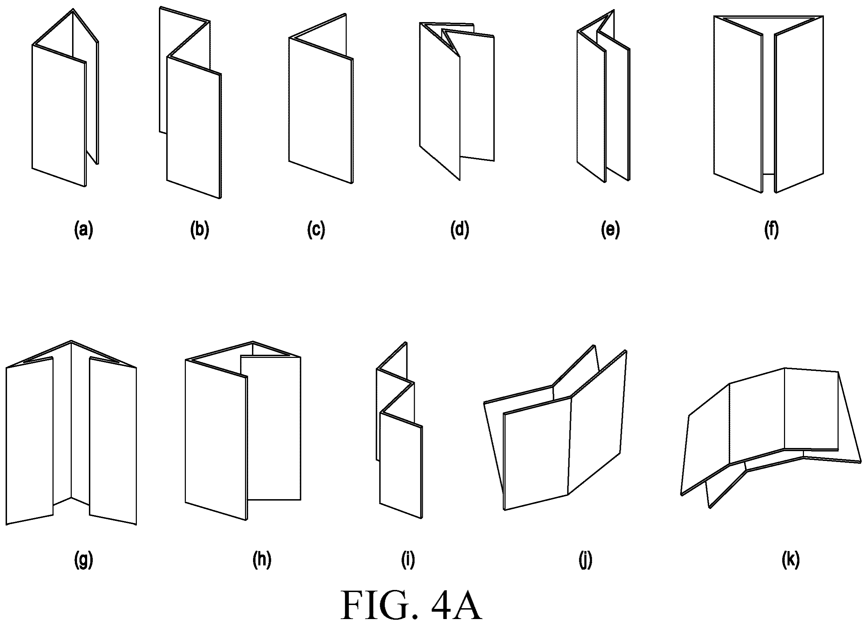

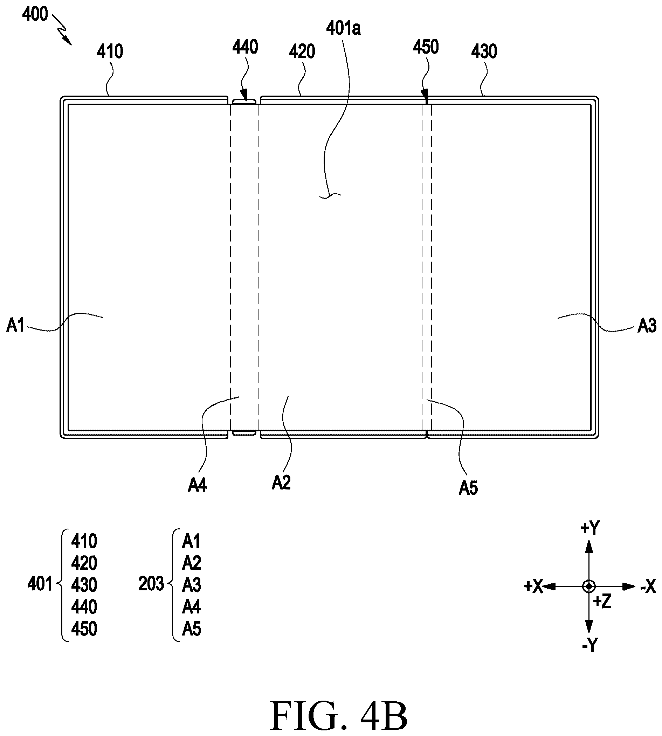

Referring to FIG. 1B, according to an embodiment, an electronic device 101 (e.g., the display module 160 of FIG. 1) may include a flexible display 162 (e.g., 202 of FIG. 2A, 302 of FIG. 3A, the flexible display of FIG. 4A, or 403 of FIG. 4B). According to an embodiment, the electronic device 101 (e.g., the display module 160 of FIG. 1) may include a cover display 161 (e.g., 203 of FIG. 2A, 303 of FIG. 3A, or the cover display of FIG. 4A). For example, the cover display 161 may be configured to face a direction opposite to the direction which the flexible display 162 faces in the unfolded state of the electronic device 101. According to an embodiment, the electronic device 101 may not include the cover display 161.

According to an embodiment, the electronic device 101 may include a housing (e.g., 201 of FIG. 2A, 301 of FIG. 3A, the housing of FIG. 4A, or 401 of FIG. 4B) configured to an outer surface of the electronic device 101.

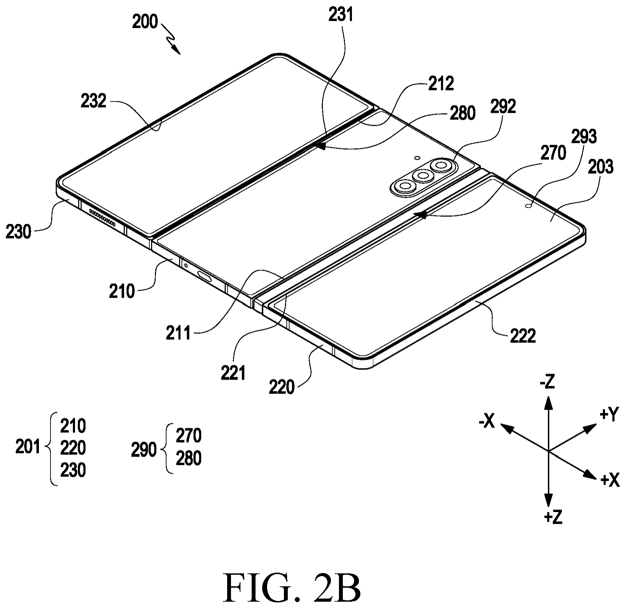

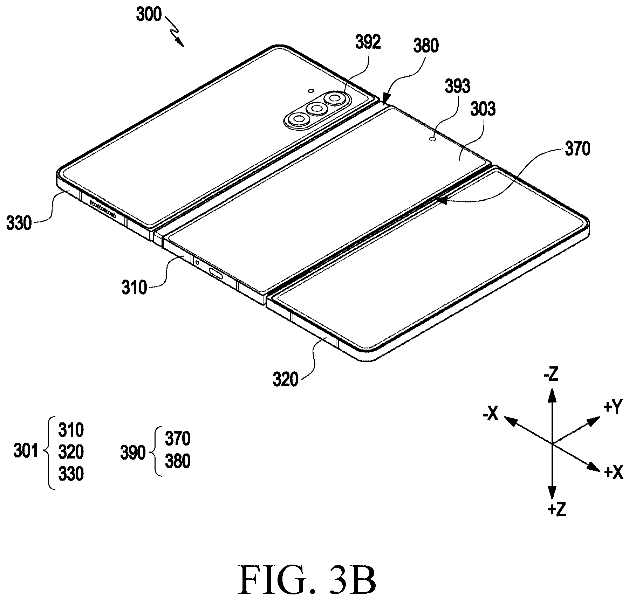

According to an embodiment, the electronic device may include at least one hinge (e.g., 270 and 280 of FIG. 2B, 370 and 380 of FIG. 3B, the hinge of FIG. 4A, or 440 and 450 of FIG. 4B) configured to rotatably connect the housings (e.g., 210, 220, and 230 of FIG. 2A, 310, 320, and 330 of FIG. 3A, the housings of FIG. 4A, or 410, 410, and 430 of FIG. 4B).

According to an embodiment, as described below, in the flexible display 162, as the at least one hinge (e.g., 270 and 280 of FIG. 2B, 370 and 380 of FIG. 3B, the hinge of FIG. 4A, or 440 and 450 of FIG. 4B) rotates, the foldable area (e.g., 202d and 202e of FIG. 2A, 302d and 302e of FIG. 3A, or A4 and A5 of FIG. 4B) among the plurality of areas of the area (e.g., the flexible display 162) corresponding to at least one hinge (e.g., 270 and 280 of FIG. 2B, 370 and 380 of FIG. 3B, the hinge of FIG. 4A, or 440 and 450 of FIG. 4B) may be folded.

Referring to FIGS. 2A, 3A, and 4A, types of the electronic device 101 are described.

FIG. 2A is a perspective view illustrating an unfolded state of a first type of electronic device 200 according to an embodiment. FIG. 2B is a perspective view illustrating an unfolded state of a first type of electronic device 200 according to an embodiment. FIG. 2A may be a view of one side surface (e.g., front surface) of the electronic device 200 as obliquely viewed. FIG. 2B may be a view of the other side surface (e.g., rear surface) of the electronic device 200 as obliquely viewed. According to an embodiment, the electronic device 200 may be the electronic device 101 of FIG. 1A.

According to an embodiment, the electronic device 200 may include a housing 201. The electronic device 200 may include a display 202. The housing 201 may form a space where the display 202 is disposed. The display 202 may be a flexible display 202. At least a portion of the display 202 may be folded or unfolded.

According to an embodiment, the housing 201 may include a first housing 210. The housing 201 may include a second housing 220. The housing 201 may include a third housing 230. The first housing 210 may be disposed between the second housing 220 and the third housing 230. The second housing 220 may be rotatably coupled to the first housing 210. The third housing 230 may be rotatably coupled to the first housing 210. The display 202 may be exposed through a first portion of the first housing 210, a second portion of the second housing 220, and a third portion of the third housing 230. The display 202 may include a first display area 202a corresponding to the first housing 210, a second display area 202b corresponding to the second housing 220, and a third display area 202c corresponding to the third housing 230.

According to an embodiment, a camera 291 (e.g., a front camera) may be disposed in one area of the display 202. The camera 291 (e.g., a front camera) may be configured to capture a scene in the direction that the display 202 faces in the fully unfolded state of the electronic device 200. For example, the camera 291 may be disposed in the first display area 202a. For example, the camera 291 may be disposed in the second display area 202b. For example, the camera 291 may be disposed in the third display area 202c. Although FIG. 2A illustrates that the camera 291 is disposed in the first display area 202a, this is exemplary.

According to an embodiment, referring to FIG. 2B, the electronic device 200 may include a camera 292 (e.g., a rear camera) exposed through the rear surface of the housing 201. The camera 292 (e.g., a rear camera) may be configured to capture a scene in the direction opposite to the direction that the display 202 (e.g., a flexible display) faces in the fully unfolded state of the electronic device 200. For example, the camera 292 may be exposed through the rear surface of the first housing 210. For example, the camera 292 may be exposed through the rear surface of the second housing 220. For example, the camera 292 may be exposed through the rear surface of the third housing 230. Although FIG. 2B illustrates that the camera 292 is exposed through the rear surface of the first housing 210, this is exemplary.

According to an embodiment, the electronic device 200 may include supports 240, 250, and 260. The supports 240, 250, and 260 may support the display 202. The supports 240, 250, and 260 may be coupled to the housing 201. The supports 240, 250, and 260 may be disposed to surround edges of the display 202. The supports 240, 250, and 260 may extend along the circumference of the housing 201. The supports 240, 250, and 260 may include a first support 240 disposed in the first housing 210, a second support 250 disposed in the second housing 220, and a third support 260 disposed in the third housing 230.

According to an embodiment, the supports 240, 250, and 260 may include a first support 240. The first support 240 may support at least a portion of the display 202. The first support 240 may be disposed along an edge of the first housing 210. The first support 240 may include a 1-1th support 241 and a 1-2th support 242. At least a portion of the display 202 may be disposed between the 1-1th support 241 and the 1-2th support 242. The 1-1th support 241 may be disposed at one end portion of the first housing 210, and the 1-2th support 242 may be disposed at the other end portion of the first housing 210. Each of the first, second, and third supports 240, 250, and 260 may be referred to as a "support". The support 240, 250, or 260 may include a non-conductive member. The support 240, 250, or 260 may be referred to as a "deco," "finishing member," or "non-conductive member."

According to an embodiment, the supports 240, 250, and 260 may include a second support 250. The second support 250 may support at least a portion of the display 202. The second support 250 may be disposed along an edge of the second housing 220. The second support 250 may include a 2-1th support 251, a 2-2th support 252, and a 2-3th support 253. At least a portion of the display 202 may be disposed between the 2-2th support 252 and the 2-3th support 253. The 2-1th support 251 may connect the 2-2th support 252 and the 2-3th support 253. The 2-1th support 251 may extend along an edge of the second housing 220. The 2-1th support 251 may be referred to as a "support frame" or a "first support frame". Each of the 2-2th support 252 and the 2-3th support 253 may be referred to as a "second support frame".

According to an embodiment, the supports 240, 250, and 260 may include a third support 260. The third support 260 may support at least a portion of the display 202. The third support 260 may be disposed along an edge of the third housing 230. The third support 260 may include a 3-1th support 261, a 3-2th support 262, and a 3-3th support 263. At least a portion of the display 202 may be disposed between the 3-2th support 262 and the 3-3th support 263. The 3-1th support 261 may connect the 3-2th support 262 and the 3-3th support 263. The 3-1th support 261 may extend along an edge (e.g., the edge 232 of FIG. 2B) of the third housing 230. The 3-1th support 261 may be referred to as a "support frame" or a "first support frame". Each of the 3-2th support 262 and the 3-3th support 263 may be referred to as a "second support frame".

According to an embodiment, the first housing 210 may include a 1-1th side member 211 and a 1-2th side member 212. The 1-1th side member 211 and the 1-2th side member 212 may form two opposite side surfaces, respectively, of the first housing 210. The second housing 220 may be coupled to the 1-1th side member portion 211. The third housing 230 may be coupled to the 1-2th side member 212. The 1-1th side member 211 may be referred to as a "first coupling portion". The 1-2th side member 212 may be referred to as a "second coupling portion". The 1-1th side member 211 may be referred to as a "first portion". The 1-2th side member 212 may be referred to as a "second portion".

According to an embodiment, the first housing 220 may include a 2-1th side member 221 and a 2-2th side member 222. The 2-1th side member 221 and the 2-2th side member 222 may form two opposite side surfaces, respectively, of the second housing 220. The 2-1th side member 221 may be coupled to the first housing 210. The 2-2th side member 222 may form a side surface of the housing 201. The 2-2th side member 222 may be referred to as an "edge". The 2-1th side member 221 may be referred to as a "third side member". The 2-2th side member 222 may be referred to as a "fourth side member".

According to an embodiment, the electronic device 200 may include a cover display 203. The second housing 220 may form a space where the cover display 203 is disposed. For example, the cover display 203 may be disposed between the 2-1th side member 221 and the 2-2th side member 222. The cover display 203 may be a flat display.

In an embodiment, the second housing 220 may be disposed so that one side thereof surrounds an edge of a portion of the display 202 and the other side thereof surrounds an edge of the cover display 203. The electronic device 200 may include an inner space of the second housing 220 formed by being surrounding by the second housing 220 having the cover display 203 as one surface, a portion of the display 202 as the other side parallel to the one side, and a side surface including a 2-1th side member 221 and a 2-2th side member 222.

According to an embodiment, a camera 293 (e.g., a cover display camera) may be disposed in one area of the second housing 220. The camera 293 (e.g., a cover display camera) may be configured to capture a scene in the direction that the cover display 203 faces. The camera 293 (e.g., a cover display camera) may be configured to capture a scene in the direction opposite to the direction that the display 202 (e.g., a flexible display) faces in the fully unfolded state of the electronic device 200.

According to an embodiment, the first housing 230 may include a 3-1th side member 231 and a 3-2th side member 232. The 3-1th side member 231 and the 3-2th side member 232 may form two opposite side surfaces, respectively, of the third housing 230. The 3-1th side member 231 may be coupled to the first housing 210. The 3-2th side member 232 may form a side surface of the housing 201. The 3-2th side member 232 may be referred to as an "edge". The 3-1th side member 231 may be referred to as a "fifth side member". The 3-2th side member 232 may be referred to as a "sixth side member".

According to an embodiment, the cover display may be disposed in the space formed by the third housing 230. For example, the cover display may be disposed between the 3-1th side member 231 and the 3-2th side member 232. The cover display may be a flat display. According to an embodiment, a camera may be disposed in one area of the cover display.

According to an embodiment, the electronic device 200 may include a first hinge 270 and a second hinge 280. The electronic device 200 may include a hinge structure 290 including a first hinge 270 and a second hinge 280. The first hinge 270 may be disposed between the first housing 210 and the second housing 220. The first hinge 270 may be disposed between the 1-1th side member 211 and the 2-1th side member 221. The first hinge 270 may rotatably connect the first housing 210 and the second housing 220. The second hinge 280 may be disposed between the first housing 210 and the third housing 230. The second hinge 280 may be disposed between the 1-2th side member 212 and the 3-1th side member 231. The second hinge 280 may rotatably connect the first housing 210 and the third housing 230. The first hinge 270 may be referred to as a "first hinge member". The second hinge 280 may be referred to as a "second hinge member".

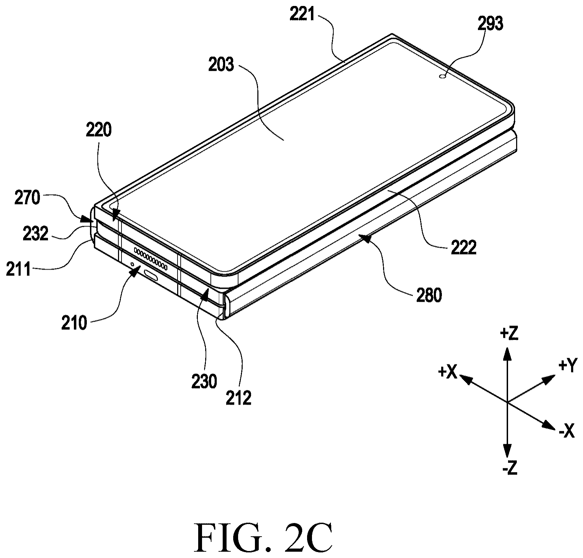

FIG. 2C is a perspective view illustrating a fully folded state of a first type of electronic device 200 according to an embodiment.

According to an embodiment, the second housing 220 may be rotated with respect to the first housing 210. The first hinge 270 may provide a center of rotation to the second housing 220. The first hinge 270 may connect the 1-1th side member 211 and the 2-1th side member 221. The third housing 230 may be rotated with respect to the first housing 210. The second hinge 280 may provide a center of rotation to the third housing 230. The second hinge 280 may connect the 1-2th side member 212 and the 3-1th side member 231.

According to an embodiment, in the fully folded state of the electronic device 200, each of the first, second, and third housings 210, 220, and 230 may be arranged in one direction (e.g., the +Z direction). For example, the third housing 230 may be disposed over (e.g., +Z direction) the first housing 210, and the second housing 220 may be disposed over (e.g., +Z direction) the third housing 230. For example, the third housing 230 may be disposed between the first housing 210 and the second housing 220.

According to an embodiment, in the fully folded state of the electronic device 200, the cover display 203 may be disposed on the externally visible portion of the second housing 220. For example, the cover display 203 may be disposed between the 2-1th side member 221 and the 2-2th side member 222.

The width of the first hinge 270 may be larger than the width of the second hinge 280. For example, in the fully folded state of the electronic device 200, the length of the first hinge 270 extending in the +Z direction may be larger than the length of the second hinge 280 extending in the +Z direction.

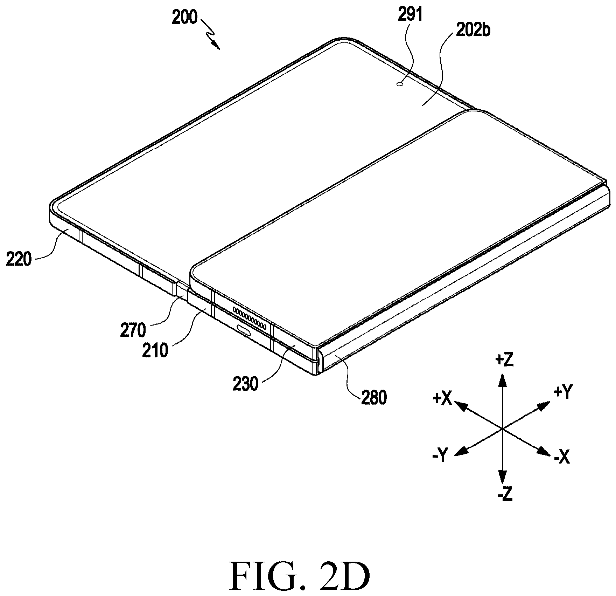

FIG. 2D is a view illustrating a partially folded state of a first type of electronic device 200 according to an embodiment. FIG. 2D may illustrate that only one hinge (e.g., the second hinge 280) of the electronic device 200 is folded while the other hinge (e.g., the first hinge 270) is in a fully unfolded state or half-folded state.

According to an embodiment, the third housing 230 may be rotated with respect to the first housing 210. The second hinge 280 may provide a center of rotation to the third housing 230. As illustrated in FIG. 2D, when the second hinge 280 is fully folded, the third housing 230 may be disposed on the upper side of the first housing 210.

According to an embodiment, the second housing 220 may be rotated with respect to the first housing 210. The first hinge 270 may provide a center of rotation to the second housing 220. As illustrated in FIG. 2D, when the first hinge 270 is fully unfolded, the second housing 220 may be positioned parallel to the first housing 210.

According to an embodiment, as the third housing 230 may be disposed on the upper side of the first housing 210, and the second housing 220 is disposed side by side with the first housing 210, only the second display area 202b disposed on the second housing 220, of the display 202, may be exposed to the outside, and the rear surface of the third housing 230 may face the +Z-axis direction.

According to an embodiment, the electronic device 200 may be deformed so that one hinge (e.g., the second hinge 280) is fully unfolded, and the other hinge (e.g., the first hinge 270) is half-folded. According to an embodiment, in the half-folded state of the electronic device 101, as the second housing 220 is disposed on the upper side of the first housing 210, and the third housing 230 is disposed side by side with the first housing 210, only the third display area 202c disposed on the third housing, of the display 202, may be exposed to the outside, and the rear surface of the third housing 230 may face the -Z-axis direction.

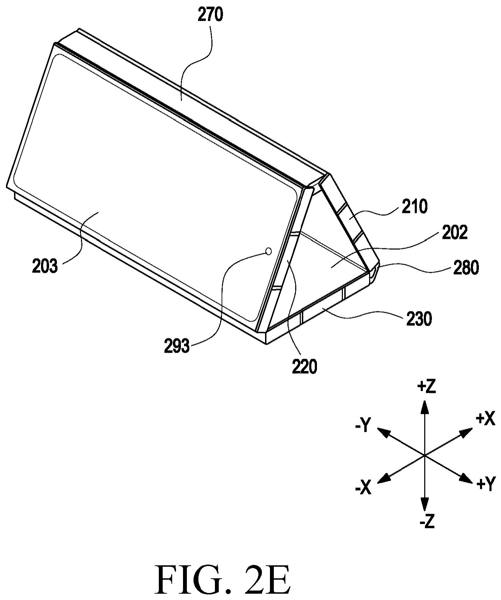

FIG. 2E is a view illustrating a partially folded state of a first type of electronic device 200 according to an embodiment. FIG. 2E may illustrate a state in which the electronic device 200 is folded (semi-folded) so that the plurality of hinges (e.g., the first hinge 270 and the second hinge 280) have an angle within a specific range. For example, the state in which the plurality of hinges (e.g., the first hinge 270 and the second hinge 280) are folded to have an angle within the specific range may be referred to as a prism state or a prism mode. According to an embodiment, as illustrated in FIG. 2E, when the plurality of hinges of the electronic device in the prism state (or prism mode) are disposed parallel to the floor, it may be referred to as a prism flex. According to an embodiment, when the plurality of hinges of the electronic device in the prism state are disposed perpendicular to the floor, it may be referred to as a prism stand.

As illustrated in FIG. 2E, when the first hinge 270 providing a center of rotation to the second housing 220 with respect to the first housing 210 is folded to have an angle within a specific range, and the second hinge 280 providing a center of rotation to the third housing 230 with respect to the first housing 210 is folded to have an angle within the specific range, the first housing 210, the second housing 220, and the third housing 230 may form a triangle in the +Y direction and/or the -Y direction.

According to an embodiment, the display 202 may be folded to have a triangular prism-shaped space, and the cover display 203 may be disposed toward the front surface. According to an embodiment, one surface of the third housing 230, where the display 202 is not disposed may face the floor.

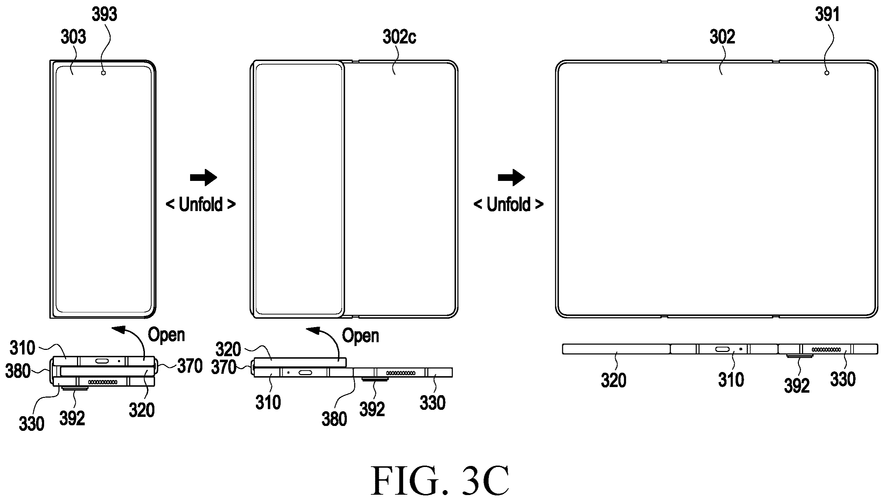

FIGS. 3A, 3B, and 3C are views for describing an electronic device 300 that folds in a different manner as that of the electronic device 200 of FIGS. 2A, 2B, 2C, 2D, and 2E.

FIG. 3A is a perspective view illustrating an unfolded state of a second type of electronic device 300 according to an embodiment. FIG. 3B is a perspective view illustrating an unfolded state of a second type of electronic device 300 according to an embodiment. FIG. 3C is a view illustrating a folded state of a second type of electronic device 300 according to an embodiment. FIG. 3A may be a view of one side surface (e.g., front surface) of the electronic device 300 as obliquely viewed. FIG. 3B may be a view of the other side surface (e.g., rear surface) of the electronic device 300 as obliquely viewed. According to an embodiment, the electronic device 300 may be the electronic device 101 of FIG. 1A.

According to an embodiment, the electronic device 300 may include a housing 301. The electronic device 300 may include a display 302. The housing 301 may form a space where the display 302 is disposed. The display 302 may be a flexible display 302. At least a portion of the display 302 may be folded or unfolded.

According to an embodiment, the housing 301 may include a first housing 310. The housing 301 may include a second housing 320. The housing 301 may include a third housing 330. The first housing 310 may be disposed between the second housing 320 and the third housing 330. The second housing 320 may be rotatably coupled to the first housing 310. The third housing 330 may be rotatably coupled to the first housing 310. The display 302 may be exposed through a first portion of the first housing 310, a second portion of the second housing 320, and a third portion of the third housing 330. The display 302 may include a first display area 302a corresponding to the first housing 310, a second display area 302b corresponding to the second housing 320, and a third display area 302c corresponding to the third housing 330.

According to an embodiment, a camera 391 (e.g., a front camera) may be disposed in one area of the housing 301. The camera 391 (e.g., a front camera) may be configured to capture a scene in the direction that the display 302 faces in the fully unfolded state of the electronic device 300. For example, the camera 391 may be disposed in the first display area 302a. For example, the camera 391 may be disposed in the second display area 302b. For example, the camera 391 may be disposed in the third display area 302c. Although FIG. 3A illustrates that the camera 391 is disposed in the third display area 302c, this is exemplary.

According to an embodiment, referring to FIG. 3B, the electronic device 300 may include a camera 392 (e.g., a rear camera) exposed through the rear surface of the housing 301. The camera 392 (e.g., a rear camera) may be configured to capture a scene in the direction opposite to the direction that the display 302 faces in the fully unfolded state of the electronic device 300. For example, the camera 392 may be exposed through the rear surface of the first housing 310. For example, the camera 392 may be exposed through the rear surface of the second housing 320. For example, the camera 392 may be exposed through the rear surface of the third housing 330. Although FIG. 3B illustrates that the camera 392 is exposed through the rear surface of the third housing 330, this is exemplary.

According to an embodiment, the electronic device 300 may include a cover display 303. The first housing 310 may form a space where the cover display 303 is disposed. The cover display 303 may be a flat display.

According to an embodiment, a camera 393 (e.g., a cover display camera) may be disposed in one area of the cover display 303. The camera 393 (e.g., a cover display camera) may be configured to capture a scene in the direction that the cover display 303 faces. The camera 393 (e.g., a cover display camera) may be configured to capture a scene in the direction opposite to the direction that the display 302 (e.g., a flexible display) faces in the fully unfolded state of the electronic device 300.

According to an embodiment, the cover display may be disposed in the space formed by the second housing 320. For example, the electronic device 300 may include a cover display (e.g., a flat display) disposed on the second housing 320. According to an embodiment, a camera (e.g., a cover display camera) may be disposed in one area of the cover display disposed on the second housing 320.

According to an embodiment, the electronic device 300 may include a first hinge 370 and a second hinge 380. The electronic device 300 may include a hinge structure 390 including a first hinge 370 and a second hinge 380. The first hinge 370 may be disposed between the first housing 310 and the second housing 320. The first hinge 370 may rotatably connect the first housing 310 and the second housing 320. The second hinge 380 may be disposed between the first housing 310 and the third housing 330. The second hinge 380 may rotatably connect the first housing 310 and the third housing 330. The first hinge 370 may be referred to as a "first hinge member". The second hinge 380 may be referred to as a "second hinge member".

Referring to FIG. 3C, a folded state or unfolding operation of the electronic device 300 according to an embodiment may be described.

According to an embodiment, the second housing 320 may be rotated with respect to the first housing 310. The first hinge 370 may provide a center of rotation to the second housing 320. The third housing 330 may be rotated with respect to the first housing 310. The second hinge 380 may provide a center of rotation to the third housing 330.

Referring to FIG. 3C, according to an embodiment, in the fully folded state of the electronic device 300, each of the first, second, and third housings 310, 320, and 330 may be arranged in one direction. For example, the second housing 320 may be disposed over (e.g., +Z direction) the third housing 330, and the first housing 310 may be disposed over (e.g., +Z direction) the second housing 320. For example, the second housing 320 may be disposed between the third housing 330 and the first housing 310.

Referring to FIG. 3C, according to an embodiment, in the fully folded state of the electronic device 300, the cover display 303 may be disposed on the externally visible portion of the first housing 310.

Referring to FIG. 3C, the width of the second hinge 380 may be larger than the width of the first hinge 370. For example, in the fully folded state of the electronic device 300, the extended length of the second hinge 380 may be larger than the extended length of the first hinge 370.

Referring to FIG. 3C, according to an embodiment, the electronic device 300 may be in a state in which only one hinge (e.g., the first hinge 370) is fully folded, and the other hinge (e.g., the second hinge 380) is half-folded.

Referring to FIG. 3C, according to an embodiment, the second housing 320 may be rotated with respect to the first housing 310. The first hinge 370 may provide a center of rotation to the second housing 320. When the first hinge 370 is fully folded, and the second hinge 380 is fully unfolded, the second housing 320 may be disposed on the first housing 310.

Referring to FIG. 3C, according to an embodiment, as the second housing 320 is disposed on the upper side of the first housing 310, and the first housing 310 is disposed side by side with the third housing 330, only the third display area 302c disposed on the third housing 330, of the display 302, may be exposed to the outside, and the rear surface of the second housing 320 may be exposed to the outside.

According to an embodiment, the electronic device 300 may be deformed so that one hinge (e.g., the first hinge 370) is fully unfolded, and the other hinge (e.g., the second hinge 380) is half-folded. According to an embodiment, in the half-folded state of the electronic device 101, as the third housing 330 is disposed on the upper side of the first housing 310, and the second housing 320 is disposed side by side with the first housing 310, only the second display area 302b disposed on the second housing 320, of the display 302, may be exposed to the outside.

According to an embodiment, the second housing 320 may be rotated with respect to the first housing 310. The first hinge 370 may provide a center of rotation to the second housing 320. When the first hinge 370 is fully unfolded, and the second hinge 380 is fully unfolded, the first housing 310, the second housing 320, and the third housing 330 may be disposed side by side.

FIG. 4A is a view illustrating types of an electronic device 101 according to an embodiment.

According to an embodiment, FIG. 4A illustrates various examples of an electronic device (e.g., 101 of FIG. 1A) including at least two or more housings and a flexible display (e.g., 162 of FIG. 1B).

According to an embodiment, the electronic device (e.g., 101 of FIG. 1A) may include two or more housings, hinges connected so that the two or more housings are foldable, and a flexible display.

According to an embodiment, the flexible display may be disposed on two or more housings and may be bent according to the rotational state of the housings. One side of each of the two or more housings may be connected to the hinge, and the two or more housings may rotate about the hinge.

According to an embodiment, the electronic device (e.g., 101 of FIG. 1A) may be formed in various forms according to two or more housing structures and a flexible display provided in the electronic device (e.g., 101 of FIG. 1A) and a rotational state of the housing structures. For example, as illustrated in FIG. 4A, the various forms may include a form (half fold ((c) of FIG. 4A)) in which two areas are formed in the electronic device (e.g., 101 of FIG. 1A) (e.g., flexible display), a form (e.g., tri fold ((a) of FIG. 4A)) in which three areas are formed in the electronic device (e.g., 101 of FIG. 1A) (e.g., flexible display), Z fold ((b) of FIG. 4A), single open gate fold ((f) of FIG. 4A), a form (e.g., double parallel reverse fold ((d) of FIG. 4A)) in which four areas are formed in the electronic device (e.g., 101 of FIG. 1A) (e.g., flexible display), double parallel fold ((e) of FIG. 4A), double gate fold ((g) of FIG. 4A), roll fold ((h) of FIG. 4A), accordion fold ((i) of FIG. 4A), half fold then half fold ((j) of FIG. 4A), and a form (e.g., half fold then tri fold ((k) of FIG. 4A)) in which more areas than those mentioned above are formed in the electronic device (e.g., 101 of FIG. 1A) (e.g., flexible display). The electronic device (e.g., 101 of FIG. 1A) may include housing structures rotatably connected with each other and a flexible display. The housing structures may be rotated into a corresponding form. According to an embodiment, in an electronic device (e.g., 101 of FIG. 1A) including at least two or more housings and at least two or more displays respectively disposed on the housings, the displays of the electronic device (e.g., 101 of FIG. 1A) may form different angles depending on the rotational states of the housings.

Hereinafter, an electronic device (e.g., 101 of FIG. 1A) and a method for operating the same are described by taking an electronic device (e.g., 101 of FIG. 1A) including two housings and a flexible display as an example. However, the operation of deforming and displaying the content of the electronic device (e.g., 101 of FIG. 1A) may also apply to an electronic device (e.g., 101 of FIG. 1A) including three or more housings and a flexible display. Accordingly, the deformed content displayed by the electronic device (e.g., 101 of FIG. 1A) including three or more housings and a flexible display may be perceived one virtual plane by the user.

Meanwhile, although it is described that one display is disposed on a plurality of housings in the electronic device (e.g., 101 of FIG. 1A), different displays may be provided for each of the plurality of housings. Accordingly, the electronic device (e.g., 101 of FIG. 1A) and operation method thereof according to various embodiments, described below, may also be applied to electronic devices (e.g., 101 of FIG. 1A) including at least two or more housings and at least two or more displays disposed on the housings, respectively. For example, the following description of the area of the flexible display corresponding to one housing may be applied to a description of a display corresponding to one housing among the plurality of displays provided in the electronic device (e.g., 101 of FIG. 1A).

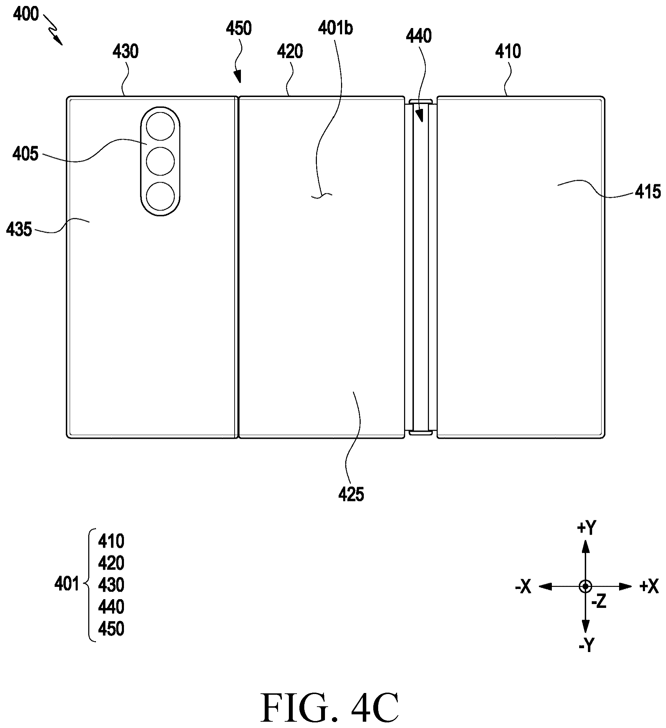

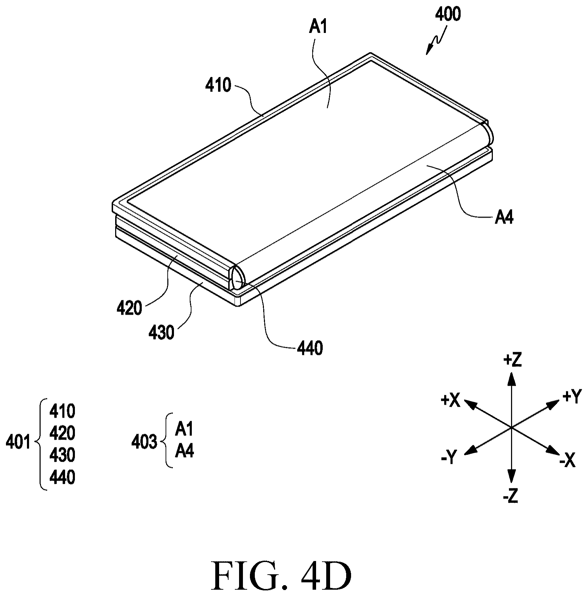

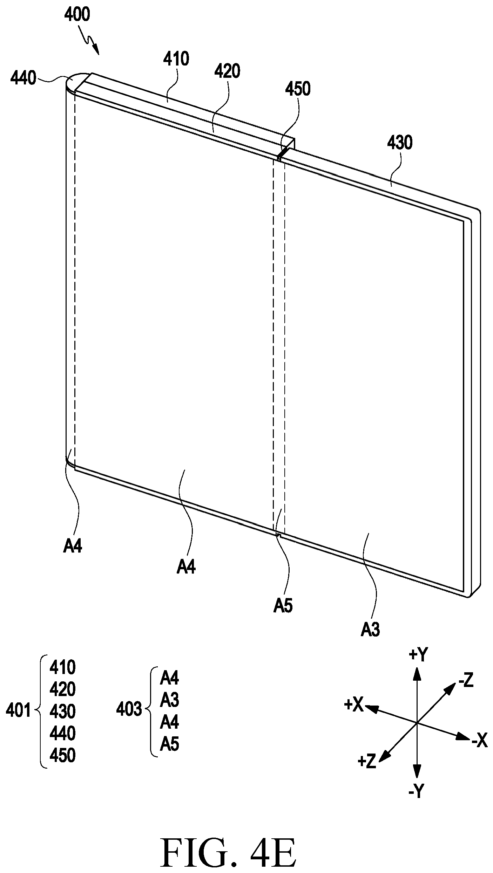

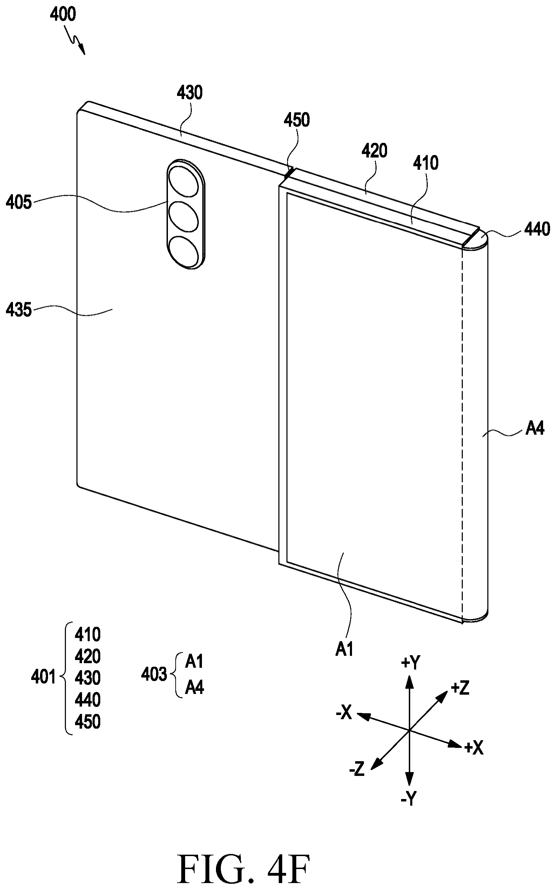

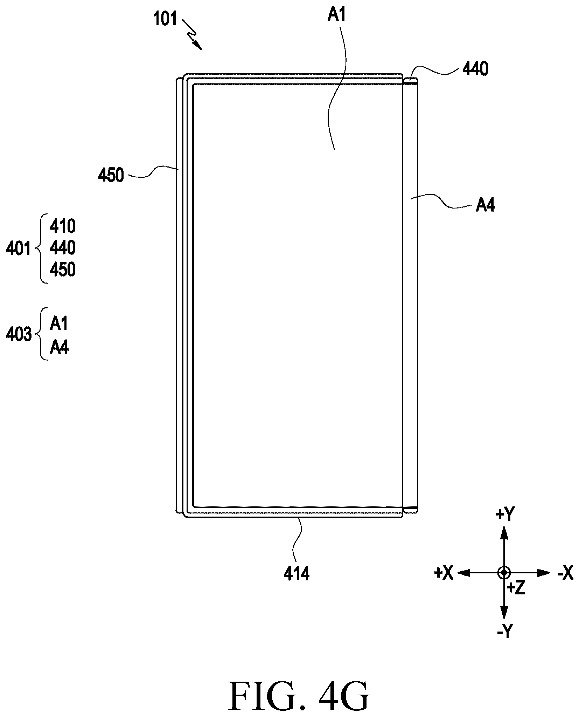

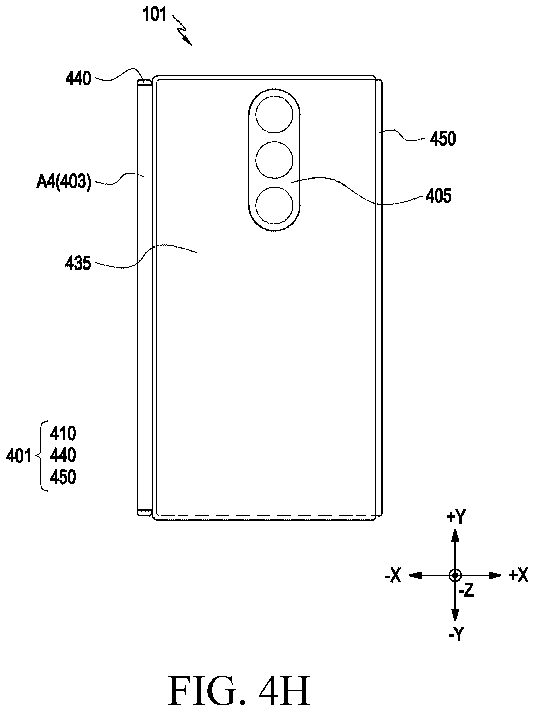

FIG. 4B is a front view illustrating an unfolded state of a third type of electronic device according to an embodiment. FIG. 4C is a rear view illustrating an unfolded state of a third type of electronic device according to an embodiment. FIG. 4D is a perspective view illustrating a folded state of a third type of electronic device according to an embodiment. FIG. 4E is a front perspective view illustrating a single-stage folded state of a third type of electronic device according to an embodiment. FIG. 4F is a rear perspective view illustrating a single-stage folded state of a third type of electronic device according to an embodiment. FIG. 4G is a front view illustrating a folded state of a third type of electronic device according to an embodiment. FIG. 4H is a rear view illustrating a folded state of a third type of electronic device according to an embodiment.

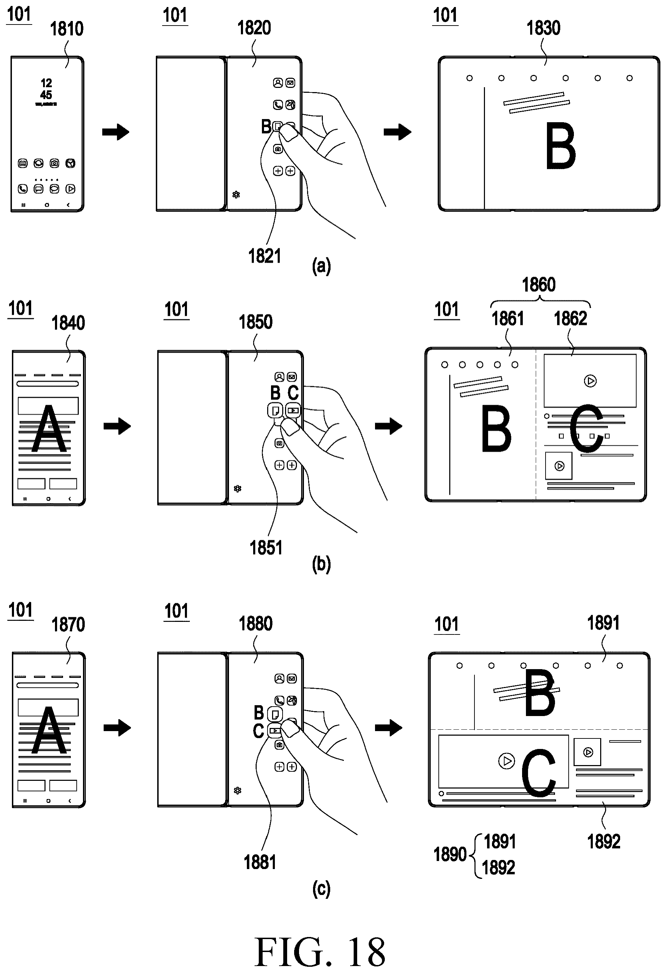

Referring to FIGS. 4B to 4H, the structure of the third type of electronic device 400 may be described. The electronic device 400, as an example of the electronic device 101 shown in FIG. 1, may be a foldable or bendable electronic device 400. The configuration of the electronic device 400 of FIGS. 4B and 18 may be identical in whole or part to the configuration of the electronic device 101 of FIG. 1.

Hereinafter, for convenience of description, a spatial coordinate system (or Cartesian coordinate system) including the X axis, Y axis, or Z axis may be illustrated in the drawings.

According to an embodiment, an electronic device 400 may include a housing 401 and a flexible display 403 (e.g., the display module 160 of FIG. 1) disposed in a space formed by the housing 401.

According to an embodiment, the housing 401 of the electronic device 400 may be defined and/or referred to as a foldable housing 401 or a deformable housing 401.

According to an embodiment, in the state in which the electronic device 400 is unfolded (e.g., FIG. 4B), the surface on which the flexible display 403 is disposed (or the surface where the flexible display 403 is viewed from the outside of the electronic device 400) may be defined as a front surface 401a of the electronic device 400. In the unfolded state (e.g., FIG. 4C) of the electronic device 400, the opposite surface of the front surface 401a may be defined as a rear surface 401b of the electronic device 400. Further, the surface surrounding the space between the front surface 401a and the rear surface 401b may be defined as a side surface of the electronic device 400.

According to an embodiment, the housing 401 of the electronic device 400 may include a first housing 410, a second housing 420, and a third housing 430. The electronic device 400 may include a first hinge 440 and a second hinge 450. The first hinge 440 may be defined and/or referred to as a first hinge assembly. The second hinge 450 may be defined and/or referred to as a second hinge assembly.

According to an embodiment, the first hinge 440 may be connected to the first housing 410 or the second housing 420. The second housing 420 may be rotatably connected to the first housing 410 using the first hinge 440. According to an embodiment, the second hinge 450 may be connected to the second housing 420 or the third housing 430. The third housing 430 may be rotatably connected to the second housing 420 using the second hinge 450.

According to an embodiment, the first housing 410 may be connected to the first hinge 440. The first housing 410 may include a first front surface facing the first direction (e.g., the +Z direction of FIG. 4B), and a first rear surface facing the second direction (e.g., the -Z direction of FIG. 4C) opposite to the first direction. The second housing 420 may be connected to the first hinge 440. The second housing 420 may include a second front surface facing the first direction (e.g., the +Z direction of FIG. 4B), and a second rear surface facing the second direction (e.g., the -Z direction of FIG. 4C) opposite to the first direction.

According to an embodiment, the first housing 410 may rotate with respect to the second housing 420 around the first hinge 440. The first housing 410 and the second housing 420 may be provided in a folded state (e.g., FIG. 4D, FIG. 4E, and FIG. 4F) or an unfolded state (e.g., FIG. 4B and FIG. 4C). When the first housing 410 and the second housing 420 are in the folded state, the first rear surface of the first housing 410 may face the second rear surface of the second housing 420. When the first housing 410 and the second housing 420 are in the folded state, the first front surface of the first housing 410 may face the direction opposite to the second front surface of the second housing 420. When the first housing 410 and the second housing 420 are in the unfolded state, the first front surface of the first housing 410 may face the same direction as the second front surface of the second housing 420. When the first housing 410 and the second housing 420 are in the unfolded state, the first rear surface of the first housing 410 may face the same direction as the second rear surface of the second housing 420.

According to an embodiment, the second housing 420 may be connected to the second hinge 450. The third housing 430 may be connected to the second hinge 450. The third housing 430 may include a third front surface facing the first direction (e.g., the +Z direction of FIG. 4B), and a third rear surface facing the second direction (e.g., the -Z direction of FIG. 4C) opposite to the first direction.

According to an embodiment, the second housing 420 may rotate with respect to the third housing 430 around the second hinge 450. The second housing 420 and the third housing 430 may be provided in the folded state (e.g., FIG. 4D) or the unfolded state (e.g., FIG. 4B, FIG. 4C, FIG. 4E, and FIG. 4F). When the second housing 420 and the third housing 430 are in the folded state, the second front surface of the second housing 420 may face the third front surface of the third housing 430. When the second housing 420 and the third housing 430 are in the folded state, the second rear surface of the second housing 420 may face the direction opposite to the third rear surface of the third housing 430. When the second housing 420 and the third housing 430 are in the unfolded state, the second front surface of the second housing 420 may face the same direction as the third front surface of the third housing 430. When the second housing 420 and the third housing 430 are in the unfolded state, the second rear surface of the second housing 420 may face the same direction as the third rear surface of the third housing 430.

According to an embodiment, the fully folded state of the electronic device 400 may be defined as a state in which the first housing 410 and the second housing 420 are in the folded state while the second housing 420 and the third housing 430 are in the folded state. According to an embodiment, the fully unfolded state of the electronic device 400 may be defined as a state in which the first housing 410 and the second housing 420 are in the unfolded state while the second housing 420 and the third housing 430 are in the unfolded state.

According to an embodiment, in the fully folded state of the first housing 410 and the second housing 420, the first rear surface and the second rear surface may face each other. According to an embodiment, the first housing 410 and the second housing 420 are disposed on two opposite sides of the first hinge 440 and may have a shape that is generally symmetrical with respect to the first hinge 440. However, the first housing 410 and the second housing 420 do not necessarily have the symmetrical shapes. The angle or distance between the first housing 410 and the second housing 420 may vary depending on whether the state of the first housing 410 and the second housing 420 is the unfolded state, the folded state, or an intermediate state, i.e., a partially unfolded (or partially folded).

According to an embodiment, in the fully folded state of the second housing 420 and the third housing 430, the second front surface and the third front surface may face each other. According to an embodiment, the second housing 420 and the third housing 430 are disposed on two opposite sides of the second hinge 450 and may have a shape that is generally symmetrical with respect to the second hinge 450. However, the second housing 420 and the third housing 430 do not necessarily have the symmetrical shapes. The angle or distance between the second housing 420 and the third housing 430 may vary depending on whether the state of the second housing 420 and the third housing 430 is the unfolded state, the folded state, or an intermediate state, i.e., a partially unfolded (or partially folded).

According to an embodiment, the first housing 410 may include a first rear cover 415. The first rear cover 415 may be disposed on one side of the first hinge 440 on the rear surface 401b of the electronic device 400, and may have, e.g., a substantially rectangular edge. The edge of the first rear cover 415 may be surrounded by side surfaces of the first housing 410.

According to an embodiment, the second housing 420 may include a second rear cover 425. The second rear cover 425 may be disposed on the other side of the first hinge 440 or one side of the second hinge 450 on the rear surface 401b of the electronic device 400, and may have, e.g., a substantially rectangular edge. The edge of the second rear cover 425 may be surrounded by side surfaces of the second housing 420.

According to an embodiment, the third housing 430 may include a third rear cover 435. The third rear cover 435 may be disposed on the other side of the second hinge 450 on the rear surface 401b of the electronic device 400, and may have, e.g., a substantially rectangular edge. The edge of the third rear cover 435 may be surrounded by side surfaces of the third housing 430.

According to an embodiment, the first rear cover 415 and the second rear cover 425 may have a substantially symmetrical shape with respect to the first hinge 440. The second rear cover 425 and the third rear cover 435 may have a substantially symmetrical shape with respect to the second hinge 450. However, the first rear cover 415, the second rear cover 425, and the third rear cover 435 do not necessarily have a mutually symmetrical shape, and in an embodiment, the electronic device 400 may include a first rear cover 415, a second rear cover 425, and a third rear cover 435 having various shapes. In an embodiment, the first rear cover 415 may be integrally formed with the first housing 410. The second rear cover 425 may be integrally formed with the second housing 420. The third rear cover 435 may be integrally formed with the third structure 430.

According to an embodiment, the first rear cover 415, the second rear cover 425, the third rear cover 435, the first housing 410, the second housing 420, and the third housing 430 may form a space in which various components (e.g., a printed circuit board or a battery) of the electronic device 400 may be disposed. According to an embodiment, one or more components may be disposed or visually exposed on the rear surface 401b of the electronic device 400. One or more components or sensors (e.g., the camera 405) may be visually exposed through the third rear cover 435.

According to an embodiment, the flexible display 403 may mean a display in which at least a partial area of the flexible display 403 may be transformed into a flat or curved surface. For example, flexible display 403 may be configured to be at least partially folded or at least partially unfolded.

According to an embodiment, the flexible display 403 may include a first display area A1, a second display area A2, a third display area A3, a first folding area A4, or a second folding area A5. The first display area A1 may be disposed on one side of the first folding area A4, and the second display area A2 may be disposed on the other side of the first folding area A4. The second display area A2 may be disposed on one side of the second folding area A5, and the third display area A3 may be disposed on the other side of the second folding area A5.

According to an embodiment, the first display area A1 may be disposed on the first housing 410. The second display area 2 may be disposed on the second housing 420. The third display area 3 may be disposed on the third housing 430. According to an embodiment, the first folding area A4 may connect the first display area A1 and the second display area A2, and may be disposed on the first hinge 440. The second folding area A5 may connect the second display area A2 and the third display area A3, and may be disposed on the second hinge 450. The area division of the flexible display 403 shown in FIG. 4B is exemplary, and the display may be divided into a plurality of areas (e.g., six or more or three areas) according to the structure or function.

According to an embodiment, the first display area A1 and the second display area A2 may have an overall symmetrical shape with respect to the first folding area A4. The second display area A2 and the third display area A3 may have an overall symmetrical shape with respect to the second folding area A5.

According to an embodiment, in the fully folded state (e.g., FIG. 4D) of the state of the electronic device 400, the first folding area A4 positioned on the first hinge 440 may be exposed to the outside of the electronic device 400, and the second folding area A5 positioned on the second hinge 450 may be disposed inside the electronic device 400 and may not be exposed to the outside. In an embodiment, the first hinge 440 may be defined and/or referred to as an out-folding hinge exposing a portion of the flexible display 403 to the outside of the electronic device 400 in the folded state. The second hinge 450 may be defined and/or referred to as an in-folding hinge that does not expose a portion of the flexible display 403 to the outside in the folded state. In an embodiment, the first hinge 440 may be provided as an in-folding hinge, and the second hinge 450 may be provided as an out-folding hinge.

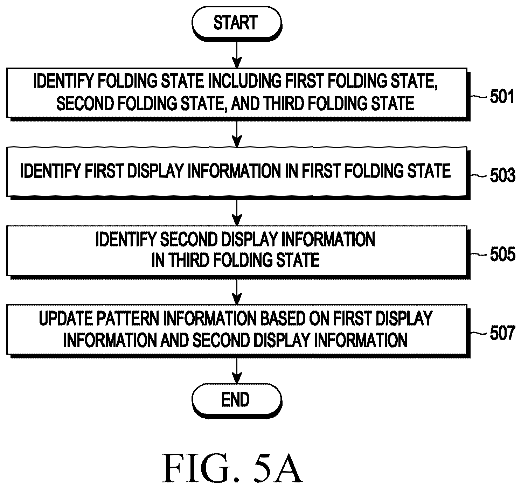

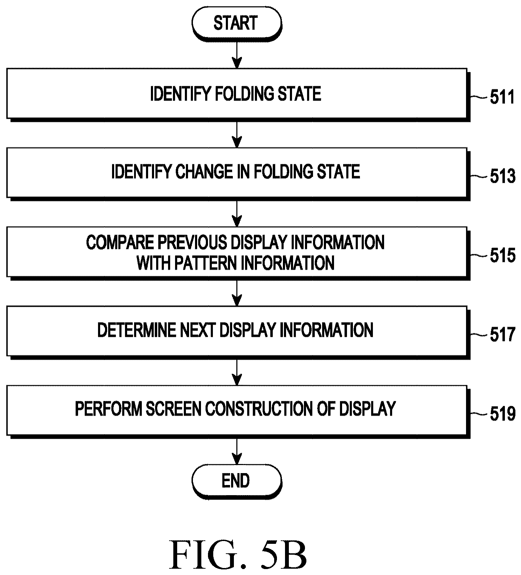

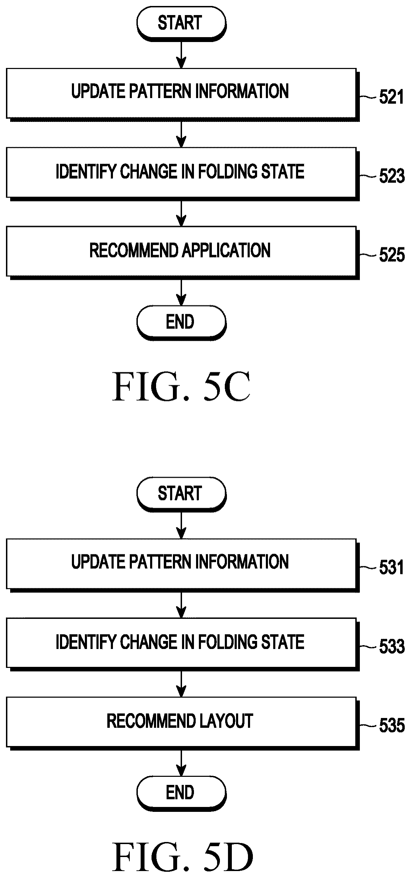

Operations of the electronic device (e.g., the electronic device 101 of FIG. 1A, the electronic device 200 of FIG. 2A, the electronic device 300 of FIG. 3A, or the electronic device (e.g., 101 of FIG. 1A) of FIG. 4A) may be described in detail with reference to the above-described embodiments (e.g., FIG. 1A, FIG. 1B, FIG. 2A, FIG. 2B, FIG. 2C, FIG. 2D, FIG. 2E, FIG. 3A, FIG. 3B, FIG. 3C, and FIG. 4A) and the following embodiments (e.g., the embodiments of FIGS. 5 to 19). Although each of the embodiments is disclosed in separate drawings and separate paragraphs, this is only for convenience of description, and at least some of the above-described embodiments and at least some of the following embodiments may be applied together. At least some of the above-described embodiments and at least some of the following embodiments may be omitted.

In the following embodiments, the electronic device 200 of FIG. 2A, the electronic device 300 of FIG. 3A, the electronic device 101 of FIG. A, or the electronic device 400 of FIG. 4B may be the electronic device 101 of FIG. 1A. In the following embodiments, the components of the electronic device (e.g., the electronic device 200 of FIG. 2A, the electronic device 300 of FIG. 3A, the electronic device 101 of FIG. 4A, or the electronic device 400 of FIG. 4B) may be understood with reference to FIGS. 2A, 2B, 2C, 2D, and 2E, understood with reference to FIGS. 3A, 3B, and 3C, understood with reference to FIG. 4A, or understood with reference to FIGS. 4B, 4C, 4D, 4E, 4F, 4G, and 4H. The electronic device 200 of FIG. 2A, the electronic device 300 of FIG. 3A, the electronic device 101 of FIG. 4A, or the electronic device 400 of FIG. 4B are only different in the folding method, and the following embodiments may be applied to the electronic device 200 of FIG. 2A, the electronic device 300 of FIG. 3A, the electronic device (e.g., 101 of FIG. 1) of FIG. 4A, or the electronic device 400 of FIG. 4B. Therefore, hereinafter, the "electronic device 101" may be the electronic device 101 of FIG. 1A, the electronic device 200 of FIG. 2A, the electronic device 300 of FIG. 3A, the electronic device (e.g., 101 of FIG. 1) of FIG. 4A, or the electronic device 400 of FIG. 4B.

According to an embodiment, the folding state of the electronic device 101 is described as follows.

According to an embodiment, the folding state of the electronic device 101 may include a first folding state (e.g., a fully folded state), a second folding state (e.g., an intermediate folded state), and a third folding state (e.g., a fully unfolded state). However, this is merely an example, and there is no limitation on the folding state of the electronic device 101.

According to an embodiment, the first folding state may be a fully folded state of the electronic device 101 according to the rotation of the hinge (e.g., 270 and 280 of FIG. 2B, 370 and 380 of FIG. 3B, the hinge of FIG. 4A, or 440 and 450 of FIG. 4B) of the electronic device 101. For example, the first folding state may be a state (e.g., the state of FIG. 2C, the first (left) state of FIG. 3C, or the state of FIG. 4D) in which, among the plurality of areas of the flexible display 162, an area (e.g., the first foldable area (e.g., 202d of FIG. 2A, 302d of FIG. 3A, or A4 of FIG. 4B) corresponding to the first hinge (e.g., 270 of FIG. 2B, 380 of FIG. 3B, or 450 of FIG. 4B) of the electronic device 101 and an area (e.g., the second foldable area (e.g., 202e of FIG. 2A, 302e of FIG. 3A, or A5 of FIG. 4B) corresponding to the second hinge (e.g., 280 of FIG. 2B, 30 of FIG. 3B, or 440 of FIG. 4B) are folded.

According to an embodiment, the second folding state may be a single-side open state (e.g., a half open state or a half folded state) of the electronic device 101 according to the rotation of the hinge (e.g., 270 and 280 of FIG. 2B, 370 and 380 of FIG. 3B, the hinge of FIG. 4A, or 440 and 450 of FIG. 4B) of the electronic device 101. For example, the second folding state may be a state (e.g., the state of FIG. 2D, the second (middle) state of FIG. 3C, or the state of FIG. 4E (or FIG. 4F)) in which, among the plurality of areas of the flexible display 162, one of an area (e.g., the first foldable area (e.g., 202d of FIG. 2A, 32d of FIG. 3A, or A4 of FIG. 4B) corresponding to the first hinge (e.g., 270 of FIG. 2B, 380 of FIG. 3B, or 450 of FIG. 4B) of the electronic device 101 or an area (e.g., the second foldable area (e.g., 202e of FIG. 2A, 302e of FIG. 3A, or A5 of FIG. 4B) corresponding to the second hinge (e.g., 280 of FIG. 2B, 370 of FIG. 3B, or 440 of FIG. 4B) is folded.

According to an embodiment, the third folding state may be a fully unfolded state of the electronic device 101 according to the rotation of the hinge (e.g., 270 and 280 of FIG. 2B, 370 and 380 of FIG. 3B, the hinge of FIG. 4A, or 440 and 450 of FIG. 4B) of the electronic device 101. For example, the third folding state may be a state (e.g., the state of FIG. 2A, the state of FIG. 3A, or the state of FIG. 4B (or FIG. 4C)) in which, among the plurality of areas of the flexible display 162, an area (e.g., the first foldable area (e.g., 202d of FIG. 2A, 302d of FIG. 3A, or A4 of FIG. 4B) corresponding to the first hinge (e.g., 270 of FIG. 2B, 380 of FIG. 3B, or 450 of FIG. 4B) of the electronic device 101 and an area (e.g., the second foldable area (e.g., 202e of FIG. 2A, 302e of FIG. 3A, or A5 of FIG. 4B) corresponding to the second hinge (e.g., 280 of FIG. 2B, 370 of FIG. 3B, or 440 of FIG. 4B) are unfolded.

In the disclosure, that the electronic device (e.g., the electronic device 101 of FIG. 1A, the electronic device 200 of FIG. 2A, the electronic device 300 of FIG. 3A, or the electronic devices (e.g., 101 or the electronic device 400 of FIG. 4B) of FIG. 4A) performs a specific operation may mean that the processor 120 such as various pieces of hardware, e.g., micro controlling unit (MCU), field programmable gate array (FPGA), application specific integrated circuit (ASIC), microprocessor, or application processor (AP) included in the electronic device (e.g., the electronic device 101 of FIG. 1A, the electronic device 200 of FIG. 2A, the electronic device 300 of FIG. 3A, or the electronic devices (e.g., 101 or the electronic device 400 of FIG. 4B) of FIG. 4A) performs the specific operation. According to an embodiment, the processor 120 may include processing circuitry. That the electronic device (e.g., the electronic device 101 of FIG. 1A, the electronic device 200 of FIG. 2A, the electronic device 300 of FIG. 3A, or the electronic devices (e.g., 101 or the electronic device 400 of FIG. 4B) of FIG. 4A) perform a specific operation may mean that the processor 120 controls other hardware to perform the specific operation. That the electronic device (e.g., the electronic device 101 of FIG. 1A, the electronic device 200 of FIG. 2A, the electronic device 300 of FIG. 3A, or the electronic devices (e.g., 101 or the electronic device 400 of FIG. 4B) of FIG. 4A) performs a specific operation may mean that at least one instruction for performing the specific operation, stored in storage circuitry (e.g., the memory 130) of the electronic device (e.g., the electronic device 101 of FIG. 1A, the electronic device 200 of FIG. 2A, the electronic device 300 of FIG. 3A, or the electronic devices (e.g., 101 or the electronic device 400 of FIG. 4B) of FIG. 4A) is executed to cause the processor 120 or other hardware to perform the specific operation. The at least one instruction stored in the electronic device (e.g., the electronic device 101 of FIG. 1A, the electronic device 200 of FIG. 2A, the electronic device 300 of FIG. 3A, or the electronic devices (e.g., 101 or the electronic device 400 of FIG. 4B) of FIG. 4A) may, when executed by the processor 120 individually or collectively, cause the electronic device (e.g., the electronic device 101 of FIG. 1A, the electronic device 200 of FIG. 2A, the electronic device 300 of FIG. 3A, or the electronic devices (e.g., 101 or the electronic device 400 of FIG. 4B) of FIG. 4A) to perform at least one operation.

In the following embodiments, the first housing may be 220 of FIG. 2A, 30 of FIG. 3A, or 430 of FIG. 4B. The second housing may be 210 of FIG. 2A, 310 of FIG. 3A, or 420 of FIG. 4B. The third housing may be 230 of FIG. 2A, 320 of FIG. 3A, or 410 of FIG. 4B. The first hinge may be 270 of FIG. 2B, 80 of FIG. 3B, or 450 of FIG. 4B. The second hinge may be 280 of FIG. 2B, 370 of FIG. 3B, or 440 of FIG. 4B.

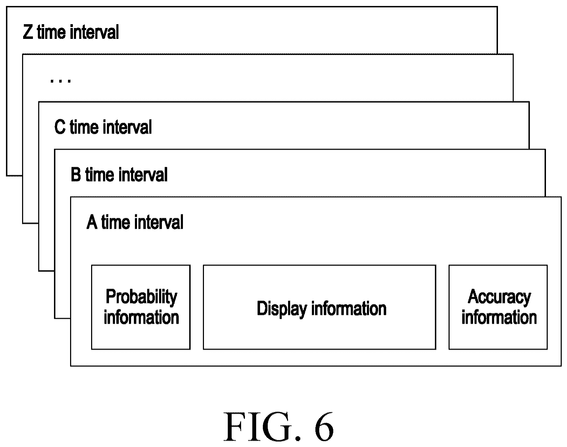

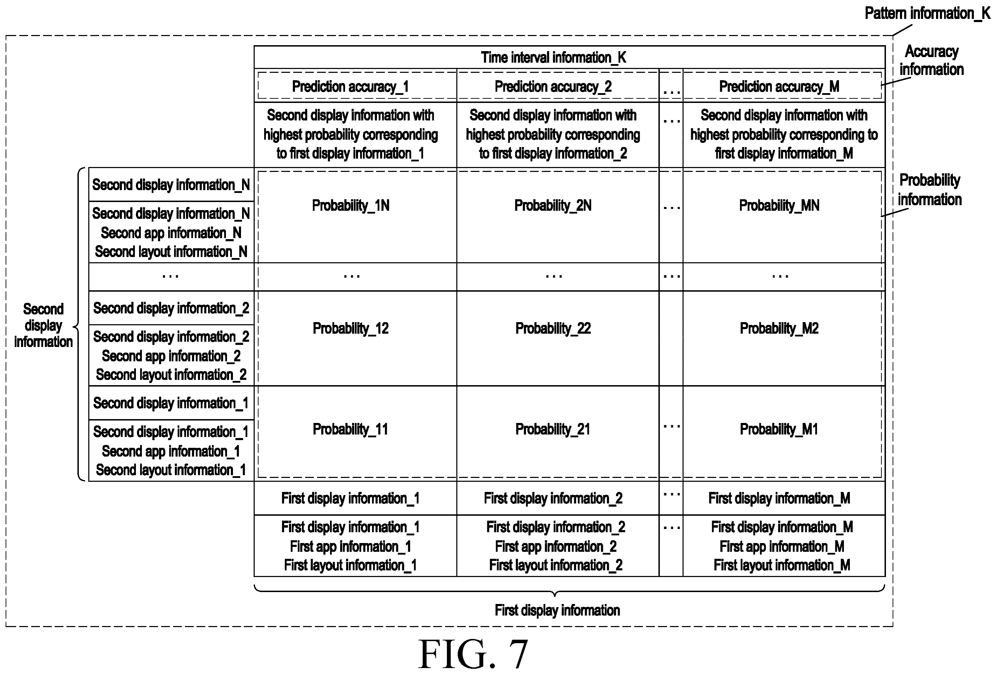

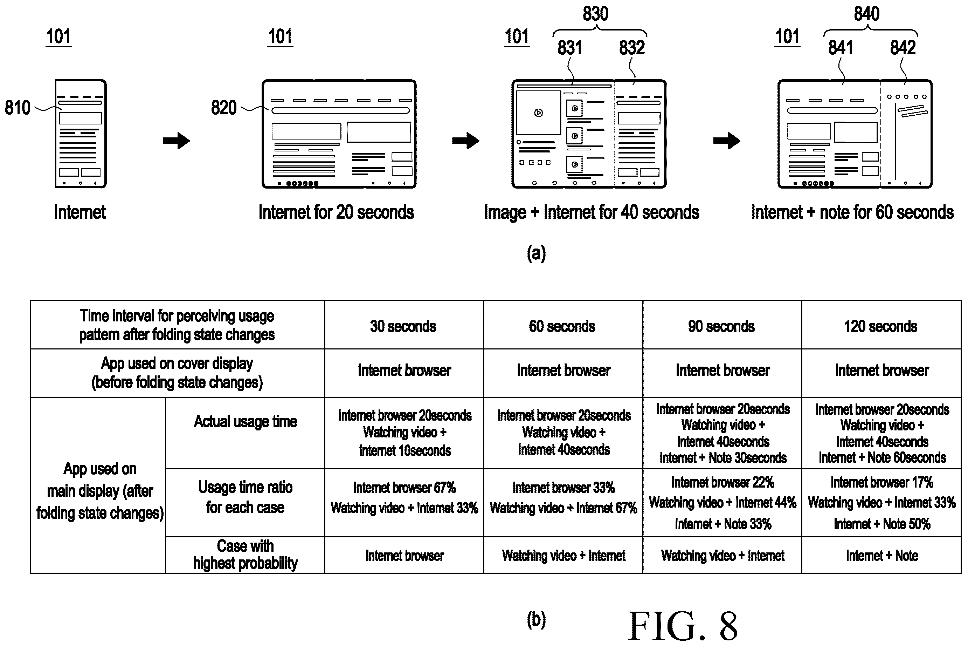

FIG. 5A is a flowchart illustrating an operation method of an electronic device according to an embodiment. FIG. 5B is a flowchart illustrating an operation method of an electronic device according to an embodiment. FIG. 5C is a flowchart illustrating an operation method of an electronic device according to an embodiment. FIG. 5D is a flowchart illustrating an operation method of an electronic device according to an embodiment. FIG. 6 is a view illustrating operations of an electronic device according to an embodiment. FIG. 7 is a view illustrating operations of an electronic device according to an embodiment. FIG. 8 is a view illustrating operations of an electronic device according to an embodiment.

There is no limit to the order in which the operations of FIG. 5A and the operations of FIG. 5B are performed. For example, before the operations of FIG. 5A (or some of the operations of FIG. 5A) are performed, the operations of FIG. 5B may be performed. For example, after the operations of FIG. 5A are performed, the operations of FIG. 5B may be performed.

At least some of the operations of FIG. 5A may be omitted. The order of operations of FIG. 5A may be changed. Operations other than the operations of FIG. 5A may be performed before, while, or after the operations of FIG. 5A are performed.

According to an embodiment, in operation 501, the electronic device 101; 200; 300; 400 may identify the folding state. For example, the folding state of the electronic device 101; 200; 300; 400 may include a first folding state in which among a plurality of areas of the flexible display 162; 202; 302; 403, a first foldable area (e.g., 202d of FIG. 2A, 302d of FIG. 3A, or A4 of FIG. 4B) corresponding to a first hinge 270; 380; 450 and a second foldable area (e.g., 202e of FIG. 2A, 302e of FIG. 3A, or A5 of FIG. 4B) corresponding to the second hinge 280; 370; 440 are folded, a second folding state in which one of the first foldable area (e.g., 202d of FIG. 2A, 302d of FIG. 3A, or A4 of FIG. 4B) corresponding to the first hinge 270; 380; 450 or the second foldable area (e.g., 202e of FIG. 2A, 302e of FIG. 3A, or A5 of FIG. 4B) corresponding to the second hinge 280; 370; 440 is folded, and a third folding state in which the first foldable area (e.g., 202d of FIG. 2A, 302d of FIG. 3A, or A4 of FIG. 4B) corresponding to the first hinge 270; 380; 450 and the second foldable area (e.g., 202e of FIG. 2A, 32e of FIG. 3A, or AS of FIG. 4B) corresponding to the second hinge 280; 370; 440 are unfolded. The electronic devices 101; 200; 300; 400 may identify the folding state of the electronic devices 101; 200; 300; 400 using the sensor 176. The sensor 176 may be a hall sensor, an acceleration sensor, a geomagnetic sensor, or a 6-axis sensor, and there is no limitation on the type of sensor 176. In operation 503, according to an embodiment, the electronic device 101; 200; 300; 400 may identify the first display information of the screen of the cover display 161; 203; 303 while the screen is displayed on the cover display 161; 203; 303 in the first folding state (e.g., in the fully folded state) of the electronic device 101; 200; 300; 400. For example, the first display information may include layout information of the screen of the cover display 161; 203; 303 in the first folding state. For example, the first display information may include application information of the screen of the cover display 161; 203; 303 in the first folding state. For example, the first display information may include layout information and application information of the screen of the cover display 161; 203; 303 in the first folding state. The "application information" may be information about an application that is running. For example, the application information may include information about the name, type, execution state, and/or number of running applications. The "layout information" may include arrangement information of the screen(s) of the running application(s) on the displayed screen. According to an embodiment, the electronic device 101; 200; 300; 400 may identify display information corresponding to a plurality of time intervals. The information corresponding to the plurality of time intervals may include information about layout(s) and information about running application(s). The information about the layout(s) may respectively correspond to the plurality of time intervals. The information about the running application(s) may respectively correspond to the plurality of time intervals. For example, the electronic device 101; 200; 300; 400 may identify a plurality of pieces of first display information while the screen is displayed on the cover display 161; 203; 303 in the first folding state. For example, the electronic device 101; 200; 300; 400 may identify display information during a first period when the screen is displayed on the cover display 161; 203; 303 in the first folding state, and display information during a second period when the screen is displayed on the cover display 161; 203; 303 in the first folding state, and there is no limit to the number (e.g., the number of periods) of the plurality of pieces of first display information.

In operation 505, according to an embodiment, the electronic device 101; 200; 300; 400 may identify the second display information of the screen of the flexible display 162; 202; 302; 403 (e.g., main display) while the screen is displayed on the flexible display 162; 202; 302; 403 in the third folding state (e.g., fully unfolded) of the electronic device 101; 200; 300; 400. For example, the second display information may include layout information of the screen of the flexible display 162; 202; 302; 403 in the third folding state. The second display information may include application information of the screen of the flexible displays 162; 202; 302; 403 in the third folding state. The second display information may include layout information and application information of the screen of the flexible displays 162; 202; 302; 403 in the third folding state. According to an embodiment, the electronic device 101; 200; 300; 400 may identify display information corresponding to a plurality of time intervals. The information corresponding to the plurality of time intervals may include information about layout(s) and information about running application(s). The information about the layout(s) may respectively correspond to the plurality of time intervals. The information about the running application(s) may respectively correspond to the plurality of time intervals. For example, the electronic device 101; 200; 300; 400 may identify the plurality of pieces of second display information while the screen is displayed on the flexible display 162; 202; 302; 403 in the third folding state. For example, the electronic device 101; 200; 300; 400 may identify display information during a third period where the screen is displayed on the flexible display 162; 202; 302; 403 in the third folding state, and display information during a fourth period where the screen is displayed on the flexible display 162; 202; 302; 403 in the third folding state, and there is no limit to the number (e.g., the number of periods) of the plurality of pieces of second display information. According to an embodiment, operations 503 and 505 may be alternately performed multiple times.

According to an embodiment, the electronic device 101; 200; 300; 400 may perform operation 503 and/or operation 505 during an on-time period. The "on-time period" may be a period from the time when the display (e.g., the cover display 161; 203; 303 or the flexible display 162; 202; 302; 403) of the electronic device 101; 200; 300; 400 is turned on to the time when it is turned off. For example, the electronic device 101; 200; 300; 400 may perform operation 503 and/or operation 505 for one on-time period, and may perform operation 515 to be described below based on the first and second display information during the period. According to an embodiment, the electronic device 101; 200; 300; 400 may delete the display information in operation 503 and the display information in operation 505 based on the display (e.g., the cover display 161; 203; 303; 303; 403) or the flexible display 162; 202; 302; 403) being turned off. Thereafter, the electronic device 101; 200; 300; 400 may obtain display information in operation 503 and display information in operation 505 again based on the display (e.g., the cover display 161; 203; 303; 303) or the flexible display 162; 302; 403) being turned on.

According to an embodiment, the electronic device 101; 200; 300; 400 may obtain display information in operation 503 and display information in operation 505 regardless of the on-time period, and may not delete the obtained display information.

In operation 507, according to an embodiment, the electronic device 101; 200; 300; 400 may update pattern information based on the first display information (e.g., display information in operation 503) and the second display information (e.g., display information in operation 505). The pattern information will be described later with reference to FIG. 6. For example, the pattern information may include a plurality of pieces of display information and information about a matching relationship between the plurality of pieces of display information. The pattern information may include a correlation between the plurality of pieces of display information to adapt the user interface from a previous display information to a next display information. For example, the electronic device 101; 200; 300; 400 may update pattern information based on accumulated first display information (e.g., display information in operation 503) and accumulated second display information (e.g., display information in operation 505). According to an embodiment, the electronic device 101; 200; 300; 400 may update pattern information based on an artificial intelligence (AI) application (e.g., on-device AI) of the electronic device 101; 200; 300; 400. For example, a neural network of AI application (e.g., on-device AI) of the electronic device 101; 200; 300; 400 may update the pattern information based the previous display information and the next display information. For example, the neural network may be trained to identify correlations between user interface configurations across different folding states. According to an embodiment, the electronic device 101; 200; 300; 400 may transmit raw data (e.g., first display information and second display information) to the server 108. The server 108 may update the pattern information based on an artificial intelligence (AI) application of the server 108 based on raw data (e.g., first display information and second display information) of the electronic device 101; 200; 300; 400. The server 108 may transmit the pattern information to the electronic device 101; 200; 300; 400. The electronic device 101; 200; 300; 400 may update the pattern information based on the pattern information provided from the server 108. Update of pattern information by an artificial intelligence (AI) application (e.g., on-device AI or server AI) may be understood as "learning" of pattern information.

According to an embodiment, in relation to operation 501, operation 503, operation 505, and operation 507, the third type of electronic device 101; 400 may be described as follows. For example, operation 503 may be understood as an operation of identifying the first display information of the screen in a partial area (e.g., A1) of the flexible display 403 while the screen is displayed in the partial area (e.g., A1) of the flexible display 403 in the first folding state (e.g., the fully folded state) of the electronic device 101; 400. For example, operation 505 may be understood as an operation of identifying the second display information of the screen of the flexible display 403 while the screen is displayed in the entire area (e.g., A1, A2, A3, A4, and A5) of the flexible display 403 in the third folding state (e.g., the fully unfolded state) of the electronic device 101; 400. Alternatively, e.g., operation 503 may be understood as an operation of identifying the first display information of the screen of the first area (e.g., A1) while the screen is displayed in a partial area (e.g., A1) of the flexible display 403 in the first folding state (e.g., the fully folded state) of the electronic device 101; 400, and operation 505 may be understood as an operation of identifying the second display information of the screen of a partial area (e.g., A3, A4, and A5) of the flexible display 403 while the screen is displayed in the partial area (e.g., A3, A4, and A5) of the flexible display 403 in the second folding state (e.g., intermediate folded state) of the electronic device 101; 400. Alternatively, e.g., operation 503 may be understood as an operation of identifying the first display information of the screen of a partial area (e.g., A3, A4, and A5) of the flexible display 403 while the screen is displayed in the partial area (e.g., A3, A4, and A5) of the flexible display 403 in the second folding state (e.g., the intermediate folded state) of the electronic device 101; 400, and operation 505 may be understood as an operation of identifying the second display information of the screen of the flexible display 403 while the screen is displayed in the entire area (e.g., A1, A2, A3, A4, and A5) of the flexible display 403 in the third folding state (e.g., the fully unfolded state). As described above, the third type of electronic device 101; 400 may not include a cover display, and in the case, the operation related to the cover display in the above-described embodiment may be understood as an operation on a partial area (e.g., A1) of the flexible display 403 of the third type of electronic device 101; 400.

According to an embodiment, the pattern information may include a plurality of pieces of display information and information about a matching relationship between the plurality of pieces of display information. The pattern information may include a correlation between the plurality of pieces of display information to adapt the user interface from a previous display information to a next display information. referring to FIG. 6, the pattern information may include a plurality of pieces of pattern information corresponding to the plurality of time intervals. The pattern information respectively corresponding to the plurality of time intervals may include first display information, second display information, and information about a matching relationship between the first display information and the second display information. For example, the matching relationship may include statistical correlations between previous display configurations and subsequent user selections during folding state transitions. The information about the "matching relationship" may include probability information about the matching relationship. The "probability information" may include information about a usage time ratio in the plurality of time intervals. The information about the matching relationship may include accuracy information about the matching relationship. The "accuracy information" may include information about the actual usage ratio based on past usage history.

According to an embodiment, the electronic device 101; 200; 300; 400 may perform an operation based on the plurality of pieces of pattern information. The electronic device 101; 200; 300; 400 may select pattern information with the highest prediction accuracy corresponding to previous display information (e.g., first display information), which is described below, by comparing the previous display information (e.g., first display information) and the plurality of pieces of pattern information, and determine the next display information (e.g., second display information) with the highest probability corresponding to the previous display information (e.g., first display information) based on the probability information about the selected pattern information. However, this is merely an example, and there is no limitation on a method of determining the next display information based on the previous display information and the plurality of pieces of pattern information, which is described in the following embodiments. FIG. 7 may be a view illustrating specific pattern information among a plurality of pieces of pattern information. For example, FIG. 7 may illustrate an example of pattern information (e.g., pattern information_K) corresponding to a specific time interval (e.g., time interval information_K). For example, in FIG. 7, the first display information may include first display information (e.g., first display information_1, first display information_2, to first display information_M) corresponding to the plurality of periods. The first display information may include display information, app information (e.g., application information), and/or layout information, respectively, corresponding to the plurality of periods. In FIG. 7, the second display information may include second display information (e.g., second display information_1, second display information_2, and second display information_N) corresponding to the plurality of periods. The second display information may include display information, app information (e.g., application information), and/or layout information, respectively, corresponding to the plurality of periods. In FIG. 7, the probability information may include probability information (e.g., probability_11, probability_12, probability_1N, probability_21, probability_22, probability_2N, probability_M1, probability_M2, or probability_MN) corresponding to the matching relationship between the first display information (e.g., first display information_1, first display information_2, first display information_M) corresponding to the plurality of periods and the second display information (e.g., second display information_1, second display information_2, and second display information_N) corresponding to the plurality of periods. For example, in FIG. 7, probability_11 may be information about a usage time ratio corresponding to the matching relationship between first display information _1 and second display information_1. For example, the electronic device 101; 200; 300; 400 may display a first screen corresponding to "first display information_1" in the first folding state (e.g., the fully folded state). Thereafter, the electronic device 101; 200; 300; 400 may display a screen corresponding to "second display information_1," a screen corresponding to "second display information_2," or a screen corresponding to "second display information_N" in the third folding state (e.g., the fully unfolded state). In the case, probability_11, probability_12, or probability_1N may be determined according to the ratio (e.g., usage time ratio) of the display periods respectively corresponding to the screen corresponding to "second display information_1", the screen corresponding to "second display information_2", and the screen corresponding to "second display information_N". For example, after the first screen corresponding to "first display information_1" is displayed in the first folding state (e.g., the fully folded state), in the third folding state (e.g., the fully unfolded state), the screen corresponding to "second display information_1" may be displayed for 10 seconds, the screen corresponding to "second display information_2" may be displayed for 20 seconds, and the screen corresponding to "second display information_3" may be displayed for 30 seconds. In the case, probability_11, which is probability information between "first display information_1" and "second display information_1," may be 10/(10+20+30). Probability_12, which is probability information between "first display information_1" and "second display information_2," may be 20/(10+20+30). Probability_13, which is probability information between "first display information_1" and "second display information_3," may be 30/(10+20+30).

According to an embodiment, the electronic device 101; 200; 300; 400 may determine the plurality of time intervals based on an AI application (e.g., an on-device AI or an AI application of a server). For example, referring to FIG. 8, the plurality of time intervals may include a 30-second interval, a 60-second interval, a 90-second interval, and a 120-second interval, but this is merely an example, and there is no limit to the length of the time intervals and the number of time intervals. FIG. 7 may illustrate pattern information corresponding to one of the plurality of time intervals of FIG. 8. The plurality of time intervals are described with reference to FIG. 8. For example, in FIG. 8, the electronic device 101; 200; 300; 400 may display the execution screen 810 of the Internet application in the first folding state (e.g., the fully folded state). Thereafter, the electronic device 101; 200; 300; 400 may display the execution screen 820 of the Internet application for 20 seconds in the third folding state (e.g., the fully unfolded state). Thereafter, the electronic device 101; 200; 300; 400 may display a screen 830 including the execution screen 831 of the image application and the execution screen 832 of the Internet application for 40 seconds in the third folding state (e.g., the fully unfolded state). Thereafter, the electronic device 101; 200; 300; 400 may display a screen 840 including the execution screen 841 of the Internet application and the execution screen 842 of the note application for 60 seconds in the third folding state (e.g., the fully unfolded state). In the case, as illustrated in FIG. 8, the plurality of time intervals may be set to 30 seconds, 60 seconds, 90 seconds, and 120 seconds. In the case, during the first time interval (e.g., 30 seconds), the execution screen 820 of the Internet application is displayed for 20 seconds, and the screen 830 including the execution screen 831 of the image application and the execution screen 832 of the Internet application is displayed for 10 seconds. Therefore, during the first time interval (e.g., 30 seconds), the usage time ratio (e.g., probability) of the execution screen 820 of the Internet application is 20/(20+10), and the usage time ratio (e.g., probability) of the screen 830 including the execution screen 831 of the image application and the execution screen 832 of the Internet application is 10/(20+10). As a result, when the time interval is set to the first time interval (e.g., 30 seconds), the probability (e.g., probability information) that the execution screen 820 of the Internet application is displayed in the third folding state (e.g., the fully unfolded state) after the execution screen 810 of the Internet application is displayed in the first folding state (e.g., the fully folded state) may be 20/(20+10). When the time interval is set to the first time interval (e.g., 30 seconds), the probability (e.g., probability information) that the screen 830 including the execution screen 831 of the image application and the execution screen 832 of the Internet application is displayed in the third folding state (e.g., the fully unfolded state) after the execution screen 810 of the Internet application is displayed in the first folding state (e.g., the fully folded state) may be 10/(20+10). If the time interval is set to the second time interval (e.g., 60 seconds), the probability (e.g., probability information) that the execution screen 820 of the Internet application is displayed in the third folding state (e.g., the fully unfolded state) after the execution screen 810 of the Internet application is displayed in the first folding state (e.g., the fully folded state) may be 20/(20+40), and the probability (e.g., probability information) that the screen including the execution screen 831 of the image application and the execution screen 832 of the Internet application is displayed in the third folding state (e.g., the fully unfolded state) after the execution screen 810 of the Internet application is displayed in the first folding state (e.g., the fully folded state) may be 40/(20+40). As illustrated in FIG. 8, probability information may be determined according to how the time interval is set. As described above, the electronic device 101; 200; 300; 400 may determine the plurality of time intervals based on an AI application (e.g., an on-device AI or an AI application of a server). Referring to FIG. 8, e.g., a plurality of time intervals may include a first time interval (e.g., 30 seconds), a second time interval (e.g., 60 seconds), and a third time interval (e.g., 90 seconds), the second time interval may be longer than the first time interval, the third time interval may be longer than the second time interval, the second time interval may include the first time interval, and the third time interval may include the second time interval, but this is merely an example and there is no limit to the plurality of time intervals. For example, time intervals of 1, 2, and 3 seconds may be set, and the differences in length of each time interval may not be constant.

According to an embodiment, the electronic device 101; 200; 300; 400 may identify display information having the highest probability in one time interval. For example, in FIGS. 7 and 8, when the time interval is the first time interval (e.g., 30 seconds), the display information with the highest probability may include information about the Internet application of 820, and when the time interval is the second time interval (e.g., 60 seconds), the display information with the highest probability may include information about the image application and Internet application of 830. Therefore, when the time interval is the first time interval (e.g., 30 seconds), the electronic device 101; 200; 300; 400 may identify the display information with the highest probability as display information including the application information (e.g., "A running application is the Internet application, and the number of running applications is one") about the Internet application and layout information (e.g., "one application is displayed in full screen"). When the time interval is the second time interval (e.g., 60 seconds), the electronic device 101; 200; 300; 400 may identify the display information with the highest probability as display information including application information (e.g., "running applications are the image application and the Internet application, and the number of running applications is two") about the image application and the Internet application and layout information (e.g., "the image application is displayed on the left, the Internet application is displayed on the right, and the display ratio of the execution screen of the image application and the execution screen of the Internet application is 2:1) about a split screen (e.g., 2:1 split screen).

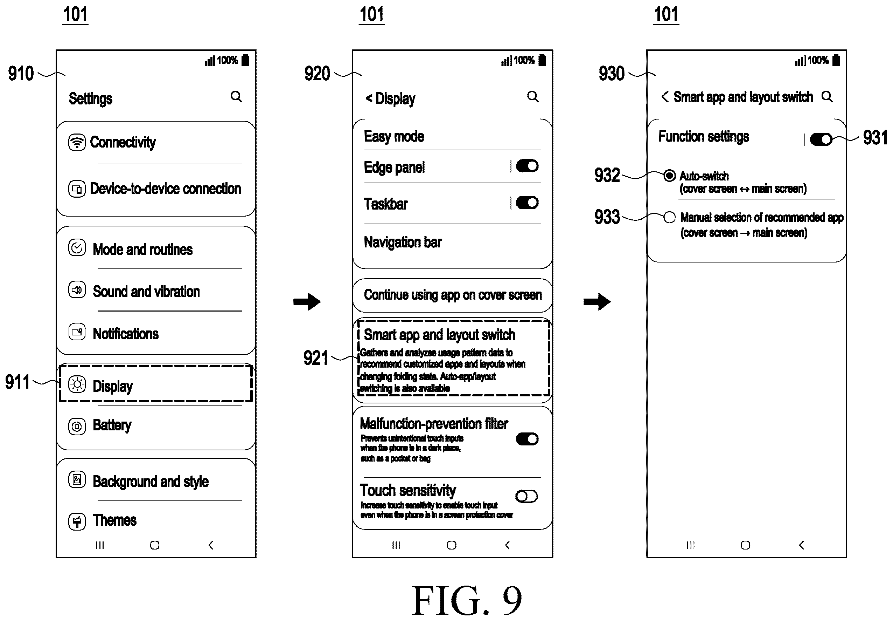

According to an embodiment, FIG. 7 may illustrate pattern information for one time interval. The electronic device 101; 200; 300; 400 may identify pattern information including accuracy information (e.g., information about the actual usage by the past usage history) about the display information. For example, the electronic device 101; 200; 300; 400 may identify accuracy information about the display information with the highest probability. For example, the accuracy information may include information about the actual usage ratio of the screen selected by the "automatic" function and the "manual" function, as described below in FIG. 9. For example, as described below, the electronic device 101; 200; 300; 400 may recommend at least one piece of display information among a plurality of pieces of display information based on probability information and/or accuracy information, and then update pattern information including probability information and/or accuracy information based on display information of the screen that is actually displayed.

At least some of the operations of FIG. 5B may be omitted. The order of operations of FIG. 5B may be changed. Operations other than the operations of FIG. 5B may be performed before, while, or after the operations of FIG. 5B are performed.

Referring to FIG. 5B, in operation 511, according to an embodiment, the electronic device 101; 200; 300; 400 may identify the folding state of the electronic device 101; 200; 300; 400. The folding state may include a first folding state in which among a plurality of areas of the flexible display 162; 202; 302; 403, a first foldable area (e.g., 202d of FIG. 2A, 302d of FIG. 3A, or A4 of FIG. 4B) corresponding to a first hinge 270; 380; 450 and a second foldable area (e.g., 202e of FIG. 2A, 302e of FIG. 3A, or A5 of FIG. 4B) corresponding to the second hinge 280; 370; 440 are folded, a second folding state in which one of the first foldable area (e.g., 202d of FIG. 2A, 302d of FIG. 3A, or A4 of FIG. 4B) corresponding to the first hinge 270; 380; 450 or the second foldable area (e.g., 202e of FIG. 2A, 302e of FIG. 3A, or A5 of FIG. 4B) corresponding to the second hinge 280; 370; 440 is folded, and a third folding state in which the first foldable area (e.g., 202d of FIG. 2A, 302d of FIG. 3A, or A4 of FIG. 4B) corresponding to the first hinge 270; 380; 450 and the second foldable area (e.g., 202e of FIG. 2A, 302e of FIG. 3A, or A5 of FIG. 4B) corresponding to the second hinge 280; 370; 440 are unfolded. The electronic devices 101; 200; 300; 400 may identify the folding state of the electronic devices 101; 200; 300; 400 using the sensor 176. The sensor 176 may be a hall sensor, an acceleration sensor, a geomagnetic sensor, or a 6-axis sensor, and there is no limitation on the type of sensor 176.

In operation 513, according to an embodiment, the electronic device 101; 200; 300; 400 may identify a change in the folding state of the electronic device 101; 200; 300; 400. The electronic device 101; 200; 300; 400 may identify the change in the folding state using the sensor 176. For example, the electronic device 101; 200; 300; 400 may identify that the folding state is changed from the first folding state (e.g., the fully folded state) to the second folding state (e.g., the intermediate folded state). For example, the electronic device 101; 200; 300; 400 may identify that the folding state is changed from the first folding state (e.g., the fully folded state) to the third folding state (e.g., the fully unfolded state). For example, the electronic device 101; 200; 300; 400 may identify that the folding state is changed from the first folding state (e.g., the fully folded state) to the third folding state (e.g., the fully unfolded state) through the second folding state (e.g., the intermediate folded state). For example, the electronic device 101; 200; 300; 400 may identify that the folding state is changed from the second folding state (e.g., the intermediate folded state) to the third folding state (e.g., the fully unfolded state). For example, the electronic device 101; 200; 300; 400 may identify that the folding state is changed from the second folding state (e.g., intermediate folded state) to the first folding state (e.g., the fully folded state). For example, the electronic device 101; 200; 300; 400 may identify that the folding state is changed from the third folding state (e.g., the fully unfolded state) to the first folding state (e.g., the fully folded state). For example, the electronic device 101; 200; 300; 400 may identify that the folding state is changed from the third folding state (e.g., the fully unfolded state) to the second folding state (e.g., the intermediate folded state). For example, the electronic device 101; 200; 300; 400 may identify that the folding state is changed from the third folding state (e.g., the fully unfolded state) to the first folding state (e.g., the fully folded state) through the second folding state (e.g., the intermediate folded state). Embodiments to be described below mainly disclose embodiments where the folding state is changed from the first folding state (e.g., the fully folded state) to the third folding state (e.g., the fully unfolded state), or embodiments where the folding state is changed from the first folding state (e.g., the fully folded state) to the third folding state (e.g., the fully unfolded state) through the second folding state (e.g., the intermediate folded state). This is for convenience of description, and those skilled in the art may understand that embodiments where the folding state is differently changed may also be understood with reference to the following embodiments.

In operation 515, according to an embodiment, the electronic device 101; 200; 300; 400 may compare the previous display information and the pattern information (e.g., the pattern information in operation 507) based on the change in the folding state. The previous display information may include display information of the screen displayed before the folding state is changed.

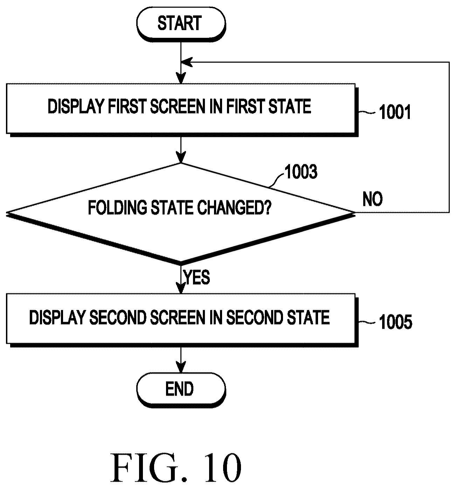

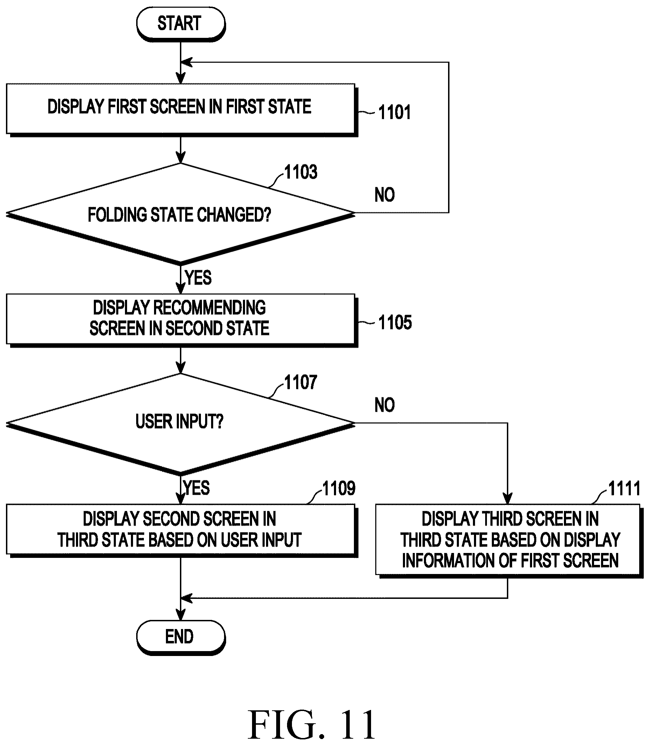

In operation 517, according to an embodiment, the electronic device 101; 200; 300; 400 may determine the next display information based on the previous display information and the pattern information. The next display information may include display information for setting a screen to be displayed after the folding state is changed. According to an embodiment, the electronic device 101; 200; 300; 400 may determine the next display information based on an automatic recommendation operation or a manual selection operation, which is described below with reference to FIGS. 10 and 11. According to an embodiment, the electronic device 101; 200; 300; 400 may determine the next display information as display information matching the previous display information among pattern information based on the previous display information corresponding to one of the pattern information. For example, when the display information of the screen displayed before the folding state changes corresponds to one of the pattern information, the electronic device 101; 200; 300; 400 may determine the next display information using the learned display information. According to an embodiment, the electronic device 101; 200; 300; 400 may determine the next display information based on the previous display information, based on the previous display information not corresponding to the pattern information.

In operation 519, according to an embodiment, the electronic device 101; 200; 300; 400 may perform a screen construction of a display (e.g., the cover display 161; 203; 303 or the flexible display 162; 202; 302; 403). The screen construction may be performed on the cover display 161; 203; 303 or may be performed on the flexible display 162; 202; 302; 403 based on the folding state after the folding state is changed. The screen construction may include an operation for determining an application to be run and a layout of a screen to be displayed on the cover display 161; 203; 303 or the flexible display 162; 202; 302; 403. As described above, when the display information of the screen displayed before the folding state changes corresponds to one of the pattern information, the electronic device 101; 200; 300; 400 may perform a screen construction based on the next display information determined using the learned display information. The electronic device 101; 200; 300; 400 may perform a screen construction based on the next display information determined using the previous display information when the display information displayed before the folding state changes does not correspond to one of the pattern information. Specific embodiments are described below.

At least some of the operations of FIG. 5C may be omitted. The order of operations of FIG. 5C may be changed. Operations other than the operations of FIG. 5C may be performed before, while, or after the operations of FIG. 5C are performed.

Referring to FIG. 5C, an embodiment of operation 5A and/or operation 5B may be understood. For example, FIG. 5C may be an embodiment of a method of recommending an application. The embodiment of FIG. 5C may be carried out simultaneously with the embodiment of FIG. 5D described below. The embodiment of FIG. 5C may be carried out separately from the embodiment of FIG. 5D described below.

Referring to FIG. 5C, in operation 521, according to an embodiment, the electronic device 101; 200; 300; 400 may update pattern information. Operation 521 may be understood with reference to operation 515 of FIG. 5B.

In operation 523, according to an embodiment, the electronic device 101; 200; 300; 400 may identify a change in the folding state. Operation 523 may be understood with reference to operation 503 of FIG. 5A.

In operation 525, according to an embodiment, the electronic device 101; 200; 300; 400 may recommend an application based on pattern information. For example, the electronic device 101; 200; 300; 400 may identify the first application information of the first screen while the first screen is displayed on the cover display 161; 203; 303 in the first folded state. The first application information may include information about a running application of the first screen. The electronic device 101; 200; 300; 400 may identify the second application information of the second screen while the second screen is displayed on the flexible display 162; 202; 302; 403 in the second folding state (e.g., the fully unfolded state). The second application information may include information about a running application of the second screen. The electronic device 101; 200; 300; 400 may update pattern information based on the first application information and the second application information. The pattern information may include first application information, second application information, and information about a matching relationship between the first application information and the second application information. The electronic device 101; 200; 300; 400 may identify the change in the folding state of the electronic device 101; 200; 300; 400 using the sensor 176. The electronic device 101; 200; 300; 400 may determine the next display information by comparing the previous display information and the pattern information based on the change in the folding state. The previous display information may include application information of the screen displayed before the folding state is changed, and the next display information may include application information for setting a screen to be displayed after the folding state is changed. The electronic device 101; 200; 300; 400 may perform a screen construction of the cover display 161; 203; 303 or the flexible display 162; 202; 302; 403 based on the next display information. The screen construction may include an operation of determining a running application to be displayed on the cover display 161; 203; 303 or the flexible display 162; 202; 302; 403.

At least some of the operations of FIG. 5D may be omitted. The order of operations of FIG. 5D may be changed. Operations other than the operations of FIG. 5D may be performed before, while, or after the operations of FIG. 5D are performed.

Referring to FIG. 5D, an embodiment of operation 5A and/or operation 5B may be understood. For example, FIG. 5D may be an embodiment of a method of recommending a layout. The embodiment of FIG. 5D may be carried out simultaneously with the embodiment of FIG. 5C. The embodiment of FIG. 5D may be performed separately from the embodiment of FIG. 5C.

Referring to FIG. 5D, in operation 531, according to an embodiment, the electronic device 101; 200; 300; 400 may update pattern information. Operation 531 may be understood with reference to operation 515 of FIG. 5B.

In operation 533, according to an embodiment, the electronic device 101; 200; 300; 400 may identify a change in the folding state. Operation 533 may be understood with reference to operation 503 of FIG. 5A.

In operation 535, according to an embodiment, the electronic device 101; 200; 300; 400 may recommend a layout based on pattern information. For example, the electronic device 101; 200; 300; 400 may identify the first application information of the first screen while the first screen is displayed on the cover display 161; 203; 303 in the first folded state. The first application information may include information about a running application of the first screen. The electronic device 101; 200; 300; 400 may identify the second application information of the second screen while the second screen is displayed on the flexible display 162; 202; 302; 403 in the second folding state (e.g., the fully unfolded state). The second application information may include information about a running application of the second screen. The electronic device 101; 200; 300; 400 may update pattern information based on the first application information and the second application information. The pattern information may include first application information, second application information, and information about a matching relationship between the first application information and the second application information. The electronic device 101; 200; 300; 400 may identify the change in the folding state of the electronic device 101; 200; 300; 400 using the sensor 176. The electronic device 101; 200; 300; 400 may determine the next display information by comparing the previous display information and the pattern information based on the change in the folding state. The previous display information may include application information of the screen displayed before the folding state is changed, and the next display information may include application information and layout information for setting a screen to be displayed after the folding state is changed. The electronic device 101; 200; 300; 400 may perform a screen construction of the cover display 161; 203; 303 or the flexible display 162; 202; 302; 403 based on the next display information. The screen construction may include an operation of determining a layout to be displayed on the cover display 161; 203; 303 or the flexible display 162; 202; 302; 403.

FIG. 9 is a view illustrating operations of an electronic device according to an embodiment.

Referring to FIG. 9, automatic switching and manual selection may be described. For example, the automatic switching may include an operation of automatically switching the screen according to the next display information based on a change in the folding state. For example, the manual selection may include an operation of displaying a screen (e.g., a recommending screen) that recommends at least one of a plurality of pieces of display information based on a change in folding status, and an operation of identifying a user input through the recommending screen and displaying the screen based on the next display information determined based on a user input. According to an embodiment, information included in the recommending screen may be determined by the electronic device 101; 200; 300; 400. According to an embodiment, some of the information included in the recommending screen may be determined by the electronic device 101; 200; 300; 400, and the rest of the information included in the recommending screen may be determined by a user setting.

According to an embodiment, the electronic device 101; 200; 300; 400 may set an application recommendation operation and/or a layout recommendation operation based on a selection from objects (e.g., 911, 921, 931, 932, and/or 933) on the setting screen (e.g., 910, 920, and 930) as illustrated in FIG. 9. For example, based on a user input of selecting 931, the electronic device 101; 200; 300; 400 may perform an application recommendation operation and/or a layout recommendation operation. The application recommendation operation and/or the layout recommendation operation have been described in FIGS. 5A, 5B, 5C, and 5D, and may be further described with reference to the following embodiments. The application recommendation operation and/or the layout recommendation operation may include an automatic switching operation and a manual selection operation. Based on a user input of selecting 932, the electronic device 101; 200; 300; 400 may perform the automatic switching operation. Based on a user input of selecting 933, the electronic device 101; 200; 300; 400 may perform the manual selection operation. The automatic switching operation may be described with reference to FIG. 10. The manual selection operation may be described with reference to FIG. 11.

FIG. 10 is a flowchart illustrating an operation method of an electronic device according to an embodiment.

At least some of the operations of FIG. 10 may be omitted. The operation order of the operations of FIG. 10 may be changed. Operations other than the operations of FIG. 10 may be performed before, while, or after performing the operations of FIG. 10.

Referring to FIG. 10, an embodiment of operation 5A and/or operation 5B may be understood.

Referring to FIG. 10, in operation 1001, according to an embodiment, the electronic device 101; 200; 300; 400 may display a first screen in a first state (e.g., the fully folded state) or a third folded state (e.g., the fully unfolded state). In an embodiment of FIG. 10, the screen before changing the folding state may be referred to as a first screen. For example, the electronic device 101; 200; 300; 400 may display the first screen on the cover display 161; 203; 303 in the first folding state (e.g., the fully folded state). Alternatively, the electronic device 101; 200; 300; 400 may display the first screen on the flexible display 162; 202; 302; 403 in the third folding state (e.g., the fully unfolded state).

In operation 1003, according to an embodiment, the electronic device 101; 200; 300; 400 may identify a change in the folding state. Operation 1003 may be understood with reference to operation 503 of FIG. 5A. For example, the electronic device 101; 200; 300; 400 may identify that the folding state is changed from the first folding state (e.g., the fully folded state) to the third folding state (e.g., the fully unfolded state). Alternatively, the electronic device 101; 200; 300; 400 may identify that the folding state is changed from the third folding state (e.g., the fully unfolded state) to the first folding state (e.g., the fully folded state).

In operation 1005, according to an embodiment, the electronic device 101; 200; 300; 400 may display a second screen in a second state (e.g., the third folding state (e.g., the fully unfolded state) or the first folding state (e.g., the fully folded state)). In an embodiment of FIG. 10, the screen after changing the folding state may be referred to as a second screen. For example, the electronic device 101; 200; 300; 400 may display the second screen on the flexible display 162; 202; 302; 403 in the third folding state (e.g., the fully unfolded state). Alternatively, the electronic device 101; 200; 300; 400 may display the second screen on the cover display 161; 203; 303 in the first folding state (e.g., the fully folded state). The operation of displaying the second screen in operation 1005 may be understood through the description of operations 505, 507, and 509 of FIG. 5A.

Through the embodiment of FIG. 10, the electronic device 101; 200; 300; 400 may perform the application recommendation operation and/or the layout recommendation operation by the automatic recommendation operation regardless of a user input.

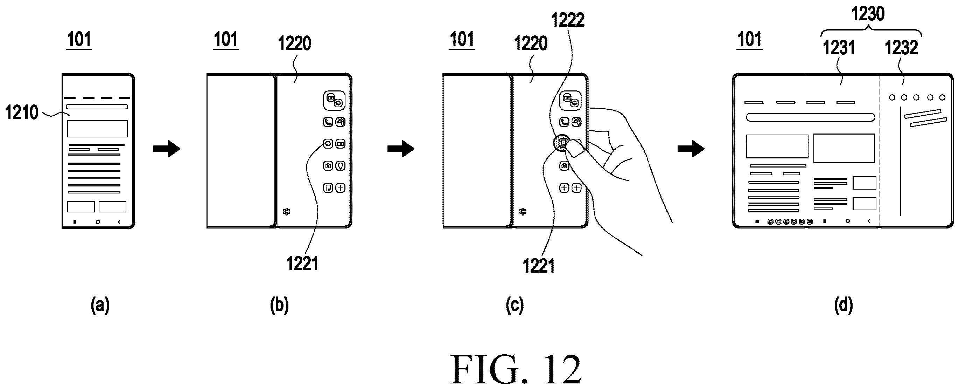

FIG. 11 is a flowchart illustrating an operation method of an electronic device according to an embodiment. FIG. 12 is a view illustrating operations of an electronic device according to an embodiment.

At least some of the operations of FIG. 11 may be omitted. The operation order of the operations of FIG. 11 may be changed. Operations other than the operations of FIG. 11 may be performed before, while, or after performing the operations of FIG. 11.

Referring to FIG. 11, an embodiment of operation 5A and/or operation 5B may be understood.

Referring to FIG. 11, in operation 1101, according to an embodiment, the electronic device 101; 200; 300; 400 may display a first screen in a first state (e.g., the fully folded state) or a third folded state (e.g., the fully unfolded state). In an embodiment of FIG. 11, the screen before changing the folding state may be referred to as a first screen. For example, the electronic device 101; 200; 300; 400 may display the first screen on the cover display 161; 203; 303 in the first folding state (e.g., the fully folded state). Alternatively, the electronic device 101; 200; 300; 400 may display the first screen on the flexible display 162; 202; 302; 403 in the third folding state (e.g., the fully unfolded state). For example, referring to FIG. 12, the electronic device 101; 200; 300; 400 may display the first screen 1210 in the first folding state (e.g., the fully folded state). For example, the first screen 1210 may be an execution screen of an Internet application.

In operation 1103, according to an embodiment, the electronic device 101; 200; 300; 400 may identify a change in the folding state. For example, the electronic device 101; 200; 300; 400 may identify that the folding state is changed from the first folding state (e.g., the fully folded state) to the second folding state (e.g., the intermediate folded state). Alternatively, the electronic device 101; 200; 300; 400 may identify that the folding state is changed from the third folding state (e.g., the fully unfolded state) to the second folding state (e.g., the intermediate folded state). For example, referring to FIG. 12, the electronic device 101; 200; 300; 400 may identify that the folding state is changed from the first folding state (e.g., the fully folded state) to the second folding state (e.g., the intermediate folded state).

In operation 1105, according to an embodiment, the electronic device 101; 200; 300; 400 may display a recommending screen in the second state (e.g., the second folding state (e.g., the intermediate folded state)). The recommending screen may be a screen including icon(s) for recommending at least one piece of display information from among a plurality of pieces of display information. For example, the electronic device 101; 200; 300; 400 may display the first screen, identify a change in the folding state, and identify that the display information while the first screen is displayed corresponds to the first display information of the pattern information. The electronic device 101; 200; 300; 400 may identify a change in the folding state and may display a screen for recommending a plurality of pieces of display information matching the first display information based on the probability information and/or the accuracy information included in the pattern information based on the display information while the first screen is displayed corresponding to the first display information of the pattern information. For example, referring to FIG. 12, the electronic device 101; 200; 300; 400 may display the recommending screen 1220 in the second folding state (e.g., the intermediate folded state). The recommending screen 1220 may include at least one icon for recommending at least one piece of display information among the plurality of pieces of display information. For example, the recommending screen 1220 may include a plurality of icons including an icon 1221 for recommending a note application.

In operation 1107, according to an embodiment, the electronic device 101; 200; 300; 400 may identify whether a user input is input through the recommending screen. For example, the user may input a user input of selecting one icon on the recommending screen of the electronic device 101; 200; 300; 400. According to an embodiment, the electronic device 101; 200; 300; 400 may identify a change in the folding state in a state in which a user input is identified or a user input is not identified. For example, referring to FIG. 12, the electronic device 101; 200; 300; 400 may identify a change in the folding state in a state in which a user input 1222 to the icon 1221 that recommends the note application is identified. According to an embodiment, the electronic device 101; 200; 300; 400 may perform other operations based on whether the user input is identified and the type of the identified user input.

In operation 1109, according to an embodiment, the electronic device 101; 200; 300; 400 may display the second screen in the third state (e.g., the third folding state (e.g., the fully unfolded state) or the first folding state (e.g., the fully folded state)) based on identifying the change in the folding state in a state in which the user input is identified. In an embodiment of FIG. 11, the screen after changing the folding state in a state in which a user input is identified may be referred to as a second screen. For example, the electronic device 101; 200; 300; 400 may display the second screen on the flexible display 162; 202; 302; 403 in the third folding state (e.g., the fully unfolded state). Alternatively, the electronic device 101; 200; 300; 400 may display the second screen on the cover display 161; 203; 303 in the first folding state (e.g., the fully folded state). For example, the electronic device 101; 200; 300; 400 may determine the next display information based on display information of the first screen, pattern information, and user input and display the second screen based on the determined display information. For example, referring to FIG. 12, the electronic device 101; 200; 300; 400 may display a second screen 1230 including an execution screen 1231 of an Internet application and an execution screen 1232 of a note application. Operation 1109 is described with reference to the embodiments of FIGS. 12 to 19.

In operation 1111, according to an embodiment, the electronic device 101; 200; 300; 400 may display the third screen in the third state (e.g., the third folding state (e.g., the fully unfolded state) or the first folding state (e.g., the fully folded state)) based on identifying a change in the folding state in a state in which no user input is identified. In an embodiment of FIG. 11, the screen after changing the folding state in a state in which a user input is not identified may be referred to as a second screen. For example, the electronic device 101; 200; 300; 400 may display the third screen on the flexible display 162; 202; 302; 403 in the third folding state (e.g., the fully unfolded state). Alternatively, the electronic device 101; 200; 300; 400 may display the third screen on the cover display 161; 203; 303 in the first folding state (e.g., the fully folded state). For example, the electronic device 101; 200; 300; 400 may determine the next display information based on the display information of the first screen and display the third screen based on the determined display information. The layout and running application of the third screen in operation 1111 may be different from the layout and running application of the second screen in operation 1109. Operation 1111 is described with reference to the embodiments of FIGS. 12 to 19.

FIG. 3A is a view illustrating operations of an electronic device according to an embodiment.

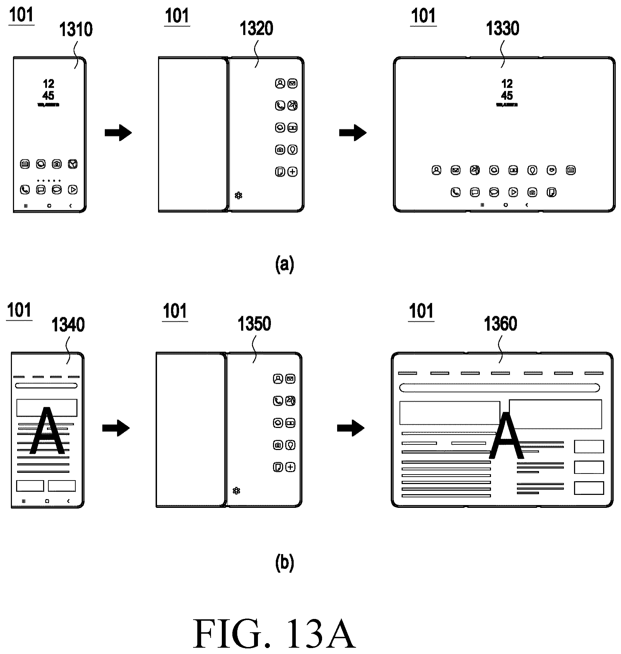

Referring to FIG. 13A, according to an embodiment, the electronic device 101; 200; 300; 400 may determine the next display information based on the previous display information based on a user input not being identified.

For example, in FIG. 13A(a), the electronic device 101; 200; 300; 400 may display a default screen 1310 in the first folding state. The default screen 1310 may be a home screen in the first folding state. The electronic device 101; 200; 300; 400 may display the recommending screen 1320 based on a change to the second folding state. The recommending screen 1320 may be a screen for recommending at least one piece of display information from among a plurality of pieces of display information. The electronic device 101; 200; 300; 400 may display a screen 1330 corresponding to the default screen 1310 based on a change to the third folding state based on a user input not being identified while the recommending screen 1320 is displayed in the second folding state. The screen 1330 corresponding to the default screen 1310 may be a home screen in the third folding state.

For example, in FIG. 13A(b), the electronic device 101; 200; 300; 400 may display the first screen 1340 in the first folding state. The first screen 1340 may be a screen of an Internet application in the first folding state. The electronic device 101; 200; 300; 400 may display the recommending screen 1350 based on a change to the second folding state. The recommending screen 1350 may be a screen for recommending at least one piece of display information among a plurality of pieces of display information based on display information and pattern information of the first screen 1340. The electronic device 101; 200; 300; 400 may display the second screen 1360 corresponding to the first screen 1340 based on a change to the third folding state, based on a user input not being identified while the recommending screen 1350 is displayed in the second folding state. The second screen 1360 may be a screen of an Internet application in the third folding state.

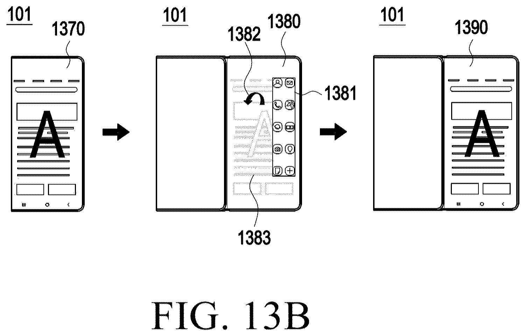

FIG. 13B is a view illustrating operations of an electronic device according to an embodiment.

Referring to FIG. 13B, according to an embodiment, the electronic device 101; 200; 300; 400 may display a recommending screen 1380 and/or a return button 1382. According to an embodiment, the return button 1382 may not be displayed. For example, in FIG. 13B, the electronic device 101; 200; 300; 400 may display the first screen 1370 in the first folding state. The first screen 1370 may be a screen of an Internet application in the first folding state. The electronic device 101; 200; 300; 400 may display the recommending screen 1380 based on a change to the second folding state. The recommending screen 1380 may be a screen for recommending at least one piece of display information among a plurality of pieces of display information based on display information and pattern information of the first screen 1370. For example, the recommending screen 1380 may be a screen displayed on the information 1383 of the first screen 1370 when information 1383 (e.g., information corresponding to the execution screen of the Internet application) is blurred in the second folding state, as illustrated in FIG. 13B. For example, when information 1383 (e.g., information corresponding to the execution screen of the Internet application) of the first screen 1370 is blurred, the electronic device 101; 200; 300; 400 may display a recommending screen 1380 including recommendation app icons 1381 on the information 1383 of the first screen 1370. According to an embodiment, the electronic device 101; 200; 300; 400 may display the return button 1382. For example, the electronic device 101; 200; 300; 400 may display the second screen 1390 in the second folding state by normally displaying the information 1383 of the first screen 1370 that was blurred based on the selection of the return button 1382. In an embodiment, unlike FIG. 13B, in the second folding state as illustrated in FIG. 13A(b), information (e.g., 1383 of FIG. 13B) of the first screen 1370 may not be displayed. In the case, the electronic device 101; 200; 300; 400 may display the second screen 1390 corresponding to the information of the first screen 1370 based on the selection of the return button 1382.

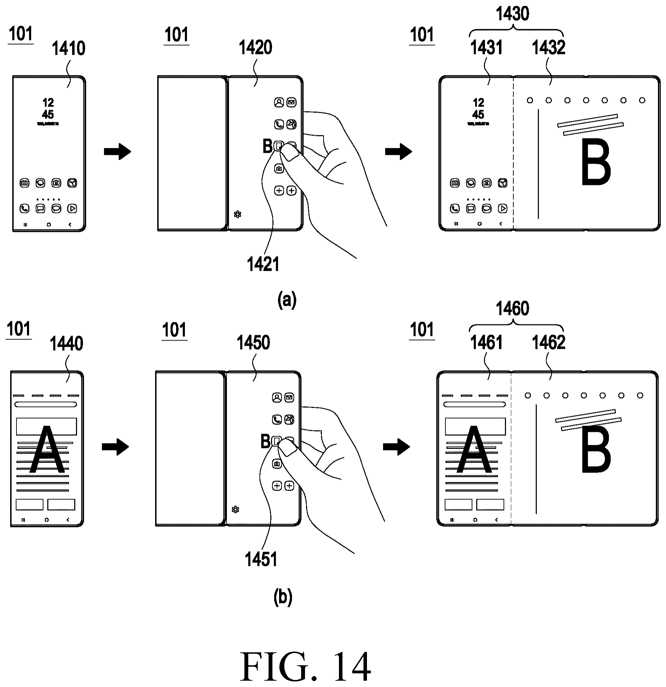

FIG. 14 is a view illustrating operations of an electronic device according to an embodiment.

Referring to FIG. 14, according to an embodiment, the electronic device 101; 200; 300; 400 may determine the next display information based on identifying a first user input (e.g., hold input).

For example, in FIG. 14(a), the electronic device 101; 200; 300; 400 may display the default screen 1410 in the first folding state. The default screen 1410 may be a home screen in the first folding state. The electronic device 101; 200; 300; 400 may display the recommending screen 1420 based on a change to the second folding state. The recommending screen 1420 may be a screen for recommending at least one piece of display information from among a plurality of pieces of display information. The electronic device 101; 200; 300; 400 may identify a first user input while the recommending screen 1420 is displayed in the second folding state. For example, the first user input may be a hold input for selecting the icon 1421 corresponding to the note application. The electronic device 101; 200; 300; 400 may determine the next display information based on display information of the default screen 1410, pattern information, and the first user input. The electronic device 101; 200; 300; 400 may display the screen 1430 based on the determined next display information, based on the change to the third folding state. For example, the screen 1430 may include the home screen 1431 and the execution screen 1432 of the note application. For example, the screen 1430 may be a screen that displays the home screen 1431 and the execution screen 1432 of the note application in 2:1 based on the determined next display information (e.g., layout information of a 2:1 ratio). For example, the screen 1430 may be a screen in which the home screen 1431 is displayed to be narrower on the left side, and the execution screen 1432 of the note application is displayed to be wider on the right side based on the determined next display information (e.g., layout information of a ratio of left 2: right 1).

For example, in FIG. 14(b), the electronic device 101; 200; 300; 400 may display the first screen 1440 in the first folding state. The first screen 1440 may be the execution screen 1440 of the Internet application. The electronic device 101; 200; 300; 400 may display the recommending screen 1450 based on a change to the second folding state. The recommending screen 1450 may be a screen for recommending at least one piece of display information among a plurality of pieces of display information based on display information and pattern information of the first screen 1440. The electronic device 101; 200; 300; 400 may identify a first user input while the recommending screen 1450 is displayed in the second folding state. For example, the first user input may be a hold input for selecting the icon 1451 corresponding to the note application. The electronic device 101; 200; 300; 400 may determine the next display information based on display information of the first screen 1440, pattern information, and the first user input. The electronic device 101; 200; 300; 400 may display the screen 1460 based on the determined next display information, based on the change to the third folding state. For example, the screen 1460 may include the execution screen 1461 of the Internet application and the execution screen 1462 of the note application. For example, the screen 1460 may be a screen that displays the execution screen 1461 of the Internet application and the execution screen 1432 of the note application in 2:1 based on the determined next display information (e.g., layout information of a 2:1 ratio). For example, the screen 1430 may be a screen in which the execution screen 1461 of the Internet application is displayed to be narrower on the left side, and the execution screen 1432 of the note application is displayed to be wider on the right side based on the determined next display information (e.g., layout information of a ratio of left 2: right 1).

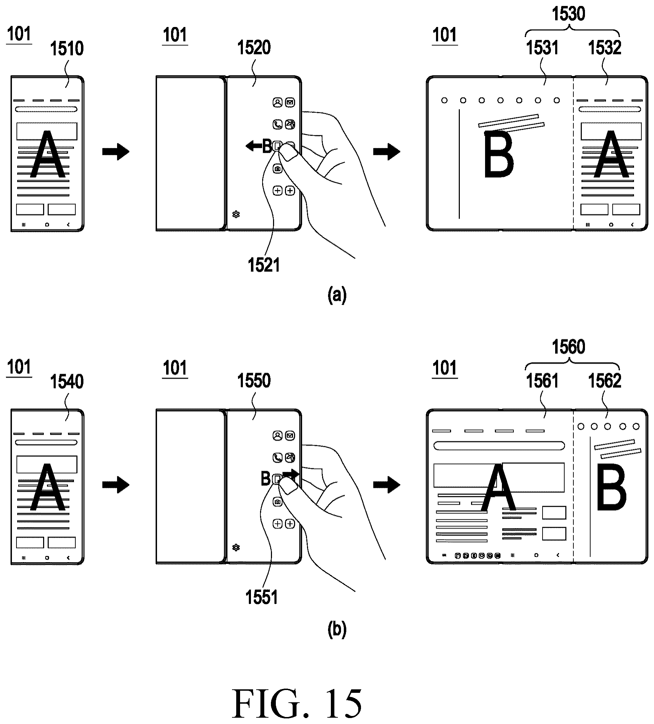

FIG. 15 is a view illustrating operations of an electronic device according to an embodiment.

Referring to FIG. 15, according to an embodiment, the electronic device 101; 200; 300; 400 may determine the next display information based on identifying a second user input (e.g., hold input and drag input).

For example, in FIG. 15(a), the electronic device 101; 200; 300; 400 may display the first screen 1510 in the first folding state. The first screen 1510 may be the execution screen 1510 of the Internet application. The electronic device 101; 200; 300; 400 may display the recommending screen 1520 based on a change to the second folding state. The recommending screen 1520 may be a screen for recommending at least one piece of display information among a plurality of pieces of display information based on display information and pattern information of the first screen 1510. The electronic device 101; 200; 300; 400 may identify the second user input while the recommending screen 1520 is displayed in the second folding state. For example, the second user input may be a hold input for selecting the icon 1521 corresponding to the note application and a drag input in the left direction. The electronic device 101; 200; 300; 400 may determine the next display information based on display information of the first screen 1510, pattern information, and the second user input. The electronic device 101; 200; 300; 400 may display the screen 1530 based on the determined next display information, based on the change to the third folding state. For example, the screen 1530 may include the execution screen 1531 of the note application and the execution screen 1532 of the Internet application. For example, the electronic device 101; 200; 300; 400 may display a screen 1530 that the execution screen 1531 of the note application on the left side and the execution screen 1532 of the Internet application on the right side based on the hold input for selecting the icon 1521 corresponding to the note application and the drag input in the left direction. For example, the screen 1530 may be a screen that displays the execution screen 1531 of the note application and the execution screen 1532 of the Internet application in 2:1 based on the determined next display information (e.g., layout information of a 2:1 ratio). For example, the screen 1430 may be a screen in which the execution screen 1531 of the note application is displayed to be wider on the left side, and the execution screen 1532 of the Internet application is displayed to be narrower on the right side based on the determined next display information (e.g., layout information of a ratio of left 2: right 1).

For example, in FIG. 15(b), the electronic device 101; 200; 300; 400 may display the first screen 1540 in the first folding state. The first screen 1540 may be the execution screen 1540 of the Internet application. The electronic device 101; 200; 300; 400 may display the recommending screen 1550 based on a change to the second folding state. The recommending screen 1550 may be a screen for recommending at least one piece of display information among a plurality of pieces of display information based on display information and pattern information of the first screen 1540. The electronic device 101; 200; 300; 400 may identify the second user input while the recommending screen 1550 is displayed in the second folding state. For example, the second user input may be a hold input for selecting the icon 1551 corresponding to the note application and a drag input in the right direction. The electronic device 101; 200; 300; 400 may determine the next display information based on display information of the first screen 1540, pattern information, and the second user input. The electronic device 101; 200; 300; 400 may display the screen 1560 based on the determined next display information, based on the change to the third folding state. For example, the screen 1560 may include the execution screen 1561 of the Internet application and the execution screen 1562 of the note application. For example, the electronic device 101; 200; 300; 400 may display a screen 1530 that displays the execution screen 1531 of the note application on the right side and the execution screen 1532 of the Internet application on the left side based on the hold input for selecting the icon 1551 corresponding to the note application and the drag input in the right direction. For example, the screen 1530 may be a screen that displays the execution screen 1561 of the Internet application and the execution screen 1562 of the note application in 2:1 based on the determined next display information (e.g., layout information of a 2:1 ratio). For example, the screen 1530 may be a screen in which the execution screen 1561 of the Internet application is displayed to be wider on the left side, and the execution screen 1562 of the note application is displayed to be narrower on the right side based on the determined next display information (e.g., layout information of a ratio of left 2: right 1).

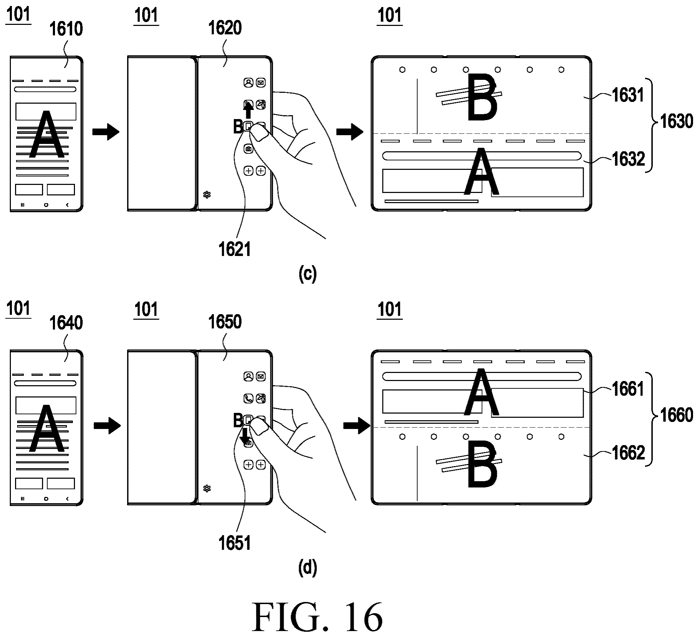

FIG. 16 is a view illustrating operations of an electronic device according to an embodiment.

Referring to FIG. 16, according to an embodiment, the electronic device 101; 200; 300; 400 may determine the next display information based on identifying a second user input (e.g., hold input and drag input).

For example, in FIG. 16(c), the electronic device 101; 200; 300; 400 may display the first screen 1610 in the first folding state. The first screen 1610 may be the execution screen 1610 of the Internet application. The electronic device 101; 200; 300; 400 may display the recommending screen 1620 based on a change to the second folding state. The recommending screen 1620 may be a screen for recommending at least one piece of display information among a plurality of pieces of display information based on display information and pattern information of the first screen 1610. The electronic device 101; 200; 300; 400 may identify the second user input while the recommending screen 1620 is displayed in the second folding state. For example, the second user input may be a hold input for selecting the icon 1621 corresponding to the note application and a drag input in the upper direction. The electronic device 101; 200; 300; 400 may determine the next display information based on display information of the first screen 1610, pattern information, and the second user input. The electronic device 101; 200; 300; 400 may display the screen 1630 based on the determined next display information, based on the change to the third folding state. For example, the screen 1630 may include the execution screen 1631 of the note application and the execution screen 1632 of the Internet application. For example, the electronic device 101; 200; 300; 400 may display a screen 1630 that displays the execution screen 1631 of the note application on the upper side and the execution screen 1632 of the Internet application on the lower side based on the hold input for selecting the icon 1621 corresponding to the note application and the drag input in the upper direction. For example, the screen 1630 may be a screen that displays the execution screen 1631 of the note application and the execution screen 1632 of the Internet application in 1:1 based on the determined next display information (e.g., layout information of a 1:1 ratio).

For example, in FIG. 16(d), the electronic device 101; 200; 300; 400 may display the first screen 1640 in the first folding state. The first screen 1640 may be the execution screen 1640 of the Internet application. The electronic device 101; 200; 300; 400 may display the recommending screen 1650 based on a change to the second folding state. The recommending screen 1650 may be a screen for recommending at least one piece of display information among a plurality of pieces of display information based on display information and pattern information of the first screen 1640. The electronic device 101; 200; 300; 400 may identify the second user input while the recommending screen 1650 is displayed in the second folding state. For example, the second user input may be a hold input for selecting the icon 1551 corresponding to the note application and a drag input in the lower direction. The electronic device 101; 200; 300; 400 may determine the next display information based on display information of the first screen 1640, pattern information, and the second user input. The electronic device 101; 200; 300; 400 may display the screen 1660 based on the determined next display information, based on the change to the third folding state. For example, the screen 1660 may include the execution screen 1661 of the Internet application and the execution screen 1662 of the note application. For example, the electronic device 101; 200; 300; 400 may display a screen 1530 that displays the execution screen 1662 of the note application on the lower side and the execution screen 1661 of the Internet application on the upper side based on the hold input for selecting the icon 1651 corresponding to the note application and the drag input in the lower direction. For example, the screen 1630 may be a screen that displays the execution screen 1661 of the Internet application and the execution screen 1662 of the note application in 1:1 based on the determined next display information (e.g., layout information of a 1:1 ratio).

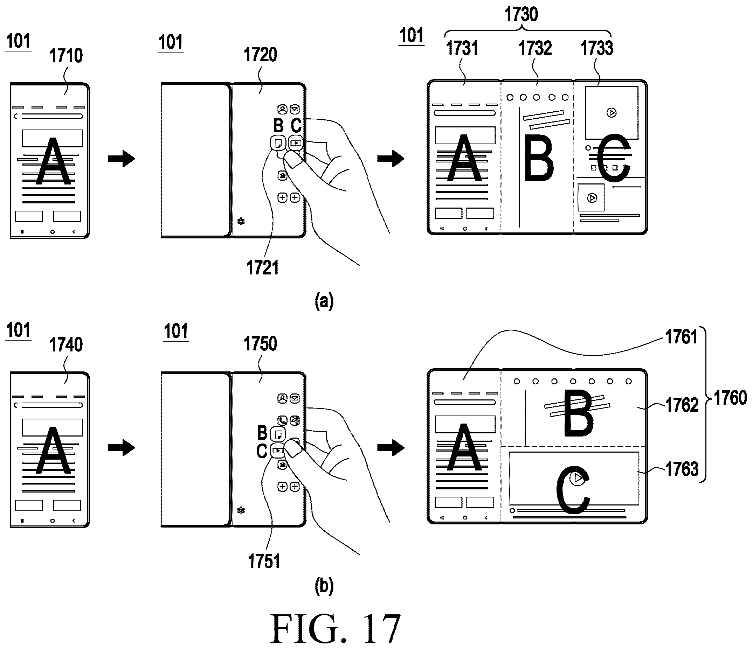

FIG. 17 is a view illustrating operations of an electronic device according to an embodiment.

Referring to FIG. 17, according to an embodiment, the electronic device 101; 200; 300; 400 may determine the next display information based on identifying a first user input (e.g., hold input) to the icon for recommending a plurality of applications.

For example, in FIG. 17(a), the electronic device 101; 200; 300; 400 may display the first screen 1710 in the first folding state. The first screen 1710 may be the execution screen 1710 of the Internet application. The electronic device 101; 200; 300; 400 may display the recommending screen 1720 based on a change to the second folding state. The recommending screen 1720 may be a screen for recommending at least one piece of display information among a plurality of pieces of display information based on display information and pattern information of the first screen 1710. The electronic device 101; 200; 300; 400 may identify a first user input while the recommending screen 1720 is displayed in the second folding state. For example, the first user input may be a hold input for selecting the icon 1721 corresponding to the note application and the image application. For example, the icon 1721 may be an icon in which a first icon corresponding to the note application and a second icon corresponding to the image application are disposed left and right. The electronic device 101; 200; 300; 400 may determine the next display information based on display information of the first screen 1710, pattern information, and the first user input. The electronic device 101; 200; 300; 400 may display the screen 1730 based on the determined next display information, based on the change to the third folding state. For example, the screen 1730 may include the execution screen 1731 of the Internet application, the execution screen 1732 of the note application, and the execution screen 1733 of the image application. For example, the screen 1730 may be a screen in which the execution screen 1731 of the Internet application is displayed on the left side, the execution screen 1732 of the note application is displayed in the middle, and the execution screen 1733 of the image application is displayed on the right side based on the determined next display information (e.g., layout information of a ratio of left 1: middle 1: right 1).

For example, in FIG. 17(b), the electronic device 101; 200; 300; 400 may display the first screen 1740 in the first folding state. The first screen 1740 may be the execution screen 1740 of the Internet application. The electronic device 101; 200; 300; 400 may display the recommending screen 1750 based on a change to the second folding state. The recommending screen 1750 may be a screen for recommending at least one piece of display information among a plurality of pieces of display information based on display information and pattern information of the first screen 1740. The electronic device 101; 200; 300; 400 may identify a first user input while the recommending screen 1750 is displayed in the second folding state. For example, the first user input may be a hold input for selecting the icon 1751 corresponding to the note application and the image application. For example, the icon 1751 may be an icon in which a first icon corresponding to the note application and a second icon corresponding to the image application are disposed vertically. The electronic device 101; 200; 300; 400 may determine the next display information based on display information of the first screen 1740, pattern information, and the first user input. The electronic device 101; 200; 300; 400 may display the screen 1760 based on the determined next display information, based on the change to the third folding state. For example, the screen 1760 may include the execution screen 1761 of the Internet application, the execution screen 1762 of the note application, and the execution screen 1763 of the image application. For example, the screen 1730 may be a screen in which the execution screen 1761 of the Internet application is displayed on the left side, the execution screen 1762 of the note application is displayed on the upper side (e.g., the upper side over the middle and the right side), and the execution screen 1763 of the image application is displayed on the lower side (e.g., the lower side under the middle and the right side) based on the determined next display information (e.g., layout information of a ratio of left 1: upper side 1: lower side 1).

FIG. 18 is a view illustrating operations of an electronic device according to an embodiment.

Referring to FIG. 18, according to an embodiment, the electronic device 101; 200; 300; 400 may determine the next display information based on identifying a third user input (e.g., touch input).

For example, in FIG. 18(a), the electronic device 101; 200; 300; 400 may display the default screen 1810 in the first folding state. The default screen 1810 may be a home screen in the first folding state. The electronic device 101; 200; 300; 400 may display the recommending screen 1820 based on a change to the second folding state. The recommending screen 1820 may be a screen for recommending at least one piece of display information from among a plurality of pieces of display information. The electronic device 101; 200; 300; 400 may identify a third user input while the recommending screen 1820 is displayed in the second folding state. For example, the third user input may be a touch input for selecting the icon 1821 corresponding to the note application. The electronic device 101; 200; 300; 400 may determine the next display information based on display information of the default screen 1810, pattern information, and the third user input. The electronic device 101; 200; 300; 400 may display the screen 1830 based on the determined next display information, based on the change to the third folding state. For example, the screen 1830 may be the execution screen 1830 of the note application. For example, the screen 1430 may be a screen that displays the execution screen 1830 of the note application in full screen based on the determined next display information (e.g., the layout information of the full screen).

For example, in FIG. 18(b), the electronic device 101; 200; 300; 400 may display the first screen 1840 in the first folding state. The first screen 1840 may be the execution screen 1840 of the Internet application. The electronic device 101; 200; 300; 400 may display the recommending screen 1850 based on a change to the second folding state. The recommending screen 1850 may be a screen for recommending at least one piece of display information among a plurality of pieces of display information based on display information and pattern information of the first screen 1840. The electronic device 101; 200; 300; 400 may identify a third user input while the recommending screen 1850 is displayed in the second folding state. For example, the third user input may be a touch input for selecting the icon 1851 corresponding to the note application and the image application. For example, the icon 1851 may be an icon in which a first icon corresponding to the note application and a second icon corresponding to the image application are disposed left and right. The electronic device 101; 200; 300; 400 may determine the next display information based on display information of the first screen 1840, pattern information, and the third user input. The electronic device 101; 200; 300; 400 may display the screen 1860 based on the determined next display information, based on the change to the third folding state. For example, the screen 1860 may include the execution screen 1861 of the note application and the execution screen 1862 of the image application. For example, the screen 1860 may be a screen in which the execution screen 1861 of the note application is displayed on the left side (e.g., the left side of the full screen), and the execution screen 1862 of the image application is displayed on the right side (e.g., the right side of the full screen) based on the determined next display information (e.g., layout information of a ratio of left 1: right 1).

For example, in FIG. 18(c), the electronic device 101; 200; 300; 400 may display the first screen 1870 in the first folding state. The first screen 1870 may be the execution screen 1870 of the Internet application. The electronic device 101; 200; 300; 400 may display the recommending screen 1880 based on a change to the second folding state. The recommending screen 1880 may be a screen for recommending at least one piece of display information among a plurality of pieces of display information based on display information and pattern information of the first screen 1870. The electronic device 101; 200; 300; 400 may identify a third user input while the recommending screen 1880 is displayed in the second folding state. For example, the third user input may be a touch input for selecting the icon 1881 corresponding to the note application and the image application. For example, the icon 1881 may be an icon in which a first icon corresponding to the note application and a second icon corresponding to the image application are disposed vertically. The electronic device 101; 200; 300; 400 may determine the next display information based on display information of the first screen 1870, pattern information, and the third user input. The electronic device 101; 200; 300; 400 may display the screen 1890 based on the determined next display information, based on the change to the third folding state. For example, the screen 1890 may include the execution screen 1891 of the note application and the execution screen 1892 of the image application. For example, the screen 1890 may be a screen in which the execution screen 1891 of the note application is displayed on the upper side (e.g., the upper side of the full screen), and the execution screen 1892 of the image application is displayed on the lower side (e.g., the lower side of the full screen) based on the determined next display information (e.g., layout information of a ratio of upper side 1: lower side 1).

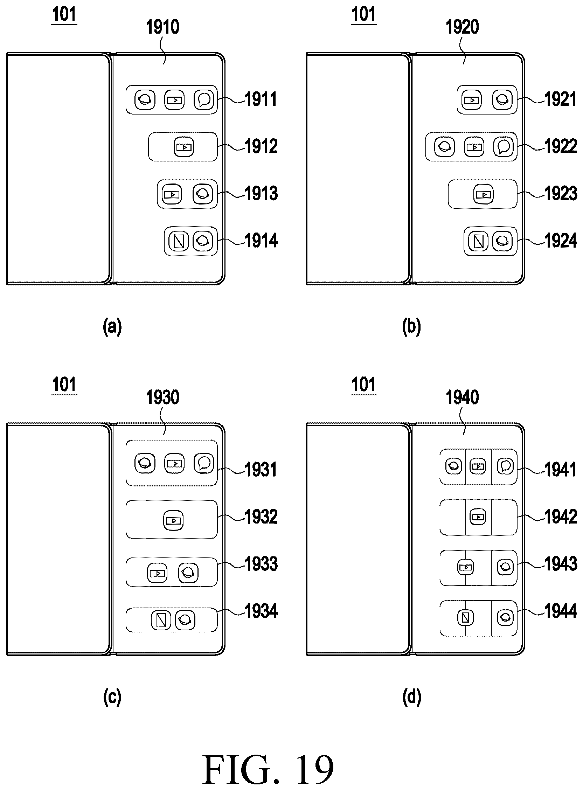

Referring to FIG. 19, example embodiments of displaying the icons of FIG. 18 (e.g., 1821, 1851, and 1881) may be described.

FIG. 19 is a view illustrating operations of an electronic device according to an embodiment.

Referring to FIG. 19, the characteristics(s) of the icon(s) according to an embodiment may be described. According to an embodiment, the electronic device 101; 200; 300; 400 may determine characteristics(s) of icons corresponding to a plurality of pieces of display information included in a screen for recommending a plurality of pieces of display information based on pattern information (e.g., probability information and accuracy information). For example, the characteristic(s) of the icons may include the horizontal length, the vertical length, and/or the display location of the icons. For example, the icons may be configured to represent the characteristics(s) of the screen to be displayed if the icons are selected respectively.

For example, in FIG. 19(a), the electronic device 101; 200; 300; 400 may determine the horizontal lengths of the icons 1911, 1912, 1913, and 1914 of the recommending screen 1910 based on probability information and/or accuracy information. For example, the electronic device 101; 200; 300; 400 may determine that the horizontal length of the icon corresponding to the display information with the higher probability of the probability information and/or higher accuracy of the accuracy information is larger.

For example, in FIG. 19(b), the electronic device 101; 200; 300; 400 may determine the display locations of the icons 1921, 1922, 1923, and 1924 of the recommending screen 1920 based on probability information and/or accuracy information. For example, the electronic device 101; 200; 300; 400 may determine that the display location of the icon corresponding to display information with the higher probability of the probability information and/or higher accuracy of accuracy information is easier for the user to touch.

For example, in FIG. 19(c), the electronic device 101; 200; 300; 400 may determine the vertical lengths of the icons 1931, 1932, 1933, and 1934 of the recommending screen 1930 based on probability information and/or accuracy information. For example, the electronic device 101; 200; 300; 400 may determine that the vertical length of the icon corresponding to the display information with the higher probability of the probability information and/or higher accuracy of the accuracy information is larger.

For example, in FIG. 19(d), the electronic device 101; 200; 300; 400 may display the icons 1941, 1942, 1943, 1944 of the recommending screen 1940 to indicate layout information. For example, 1941 may indicate that three applications are displayed in a 1:1:1 ratio. For example, 1942 may indicate that one application is displayed in full screen. For example, 1943 may indicate that the execution screen of the first application and the execution screen of the second application are displayed in a ratio of 2:1. For example, 1944 may indicate that the execution screen of the third application and the execution screen of the second application are displayed in a ratio of 2:1.

According to an embodiment, the electronic device 101; 200; 300; 400 may recommend a layout and a running application according to the current time based on the usage pattern of the electronic device 101; 200; 300; 400. For example, the electronic device 101; 200; 300; 400 may recommend a layout and a running application according to the current time, based on a specific task being performed at a specific time according to a past usage history.

According to an embodiment, the electronic device 101; 200; 300; 400 may recommend a layout and a running application based on text displayed on the screen.

According to an embodiment, the electronic device 101; 200; 300; 400 may recommend a layout and a running application based on the user's facial expression identified through a camera (e.g., 180 of FIG. 1).

According to an embodiment, the electronic device 101; 200; 300; 400 may recommend a layout and a running application based on external environmental information (e.g., GPS information, weather information, or atmospheric information).

According to an embodiment, the electronic device 101; 200; 300; 400 may recommend a layout and a running application based on sensing information (e.g., information input through a camera (e.g., 180 of FIG. 1) or a microphone (e.g., 150 in FIG. 1)). For example, the electronic device 101; 200; 300; 400 may control the main display (e.g., the flexible display 162; 202; 302; 403) to limit the exposure of important information based on identifying that the user is currently at risk of security and personal information exposure using sensing information.

According to an embodiment, the electronic device 101; 200; 300; 400 may determine whether to recommend a layout and a running application based on an encryption technology and/or a dual authentication technology.

It may be understood by one of ordinary skill in the art that embodiments described herein may be applied interchangeably within the applicable scope. For example, it will be understood by one of ordinary skill in the art that at least some operations of an embodiment described in the disclosure may be omitted and applied, or at least some operations of an embodiment may be interchangeably applied.

The disclosure is not limited to the above-described contents, and other modifications not mentioned will be apparent to one of ordinary skill in the art from the disclosure.

Effects obtainable from the disclosure are not limited to the above-mentioned effects, and other effects not mentioned may be apparent to one of ordinary skill in the art from the following description.

According to an embodiment, an electronic device 101; 200; 300; 400 may comprise a housing configured to form an outer surface of the electronic device 101; 200; 300; 400 and including a first housing 220; 330, a second housing 210; 310, and a third housing 230; 320. The second housing 210; 310 may be disposed between the first housing 220; 330 and the third housing 230; 320 in an unfolded state of the electronic device 101; 200; 300; 400. The electronic device 101; 200; 300; 400 may comprise a first hinge 270; 380; 450 configured to rotatably connect the first housing 220; 330 and the second housing 210; 310, a second hinge 280; 370; 440 configured to rotatably connect the second housing 210; 310 and the third housing 230; 320, a flexible display 162; 202; 302; 403 disposed in the housing, a cover display 161; 203; 303 disposed in the housing and configured to face a direction opposite to a direction which the flexible display 162; 202; 302; 403 faces in the unfolded state of the electronic device 101; 200; 300; 400, a sensor 176 including sensing circuitry, at least one processor 120 including processing circuitry, and memory 130 storing instructions. The instructions may, when executed by the at least one processor 120 individually or collectively, cause the electronic device 101; 200; 300; 400 to identify, using the sensor 176, a folding state of the electronic device 101; 200; 300; 400. The folding state may include a first folding state in which, among a plurality of areas of the flexible display 162; 202; 302; 403, an area corresponding to the first hinge 270; 380; 450 and an area corresponding to the second hinge 280; 370; 440 are folded, a second folding state in which one of the area corresponding to the first hinge 270; 380; 450 or the area corresponding to the second hinge 280; 370; 440 is folded, and a third folding state in which the area corresponding to the first hinge 270; 380; 450 and the area corresponding to the second hinge 280; 370; 440 are unfolded. The instructions may, when executed by the at least one processor 120 individually or collectively, cause the electronic device 101; 200; 300; 400 to identify, using the sensor 176, a change in the folding state of the electronic device 101; 200; 300; 400. The instructions may, when executed by the at least one processor 120 individually or collectively, cause the electronic device 101; 200; 300; 400 to, based on a change in the folding state, compare previous display information with pattern information. The previous display information may include layout information and application information of a screen displayed before the folding state is changed. The pattern information may include a plurality of pieces of display information and information about a matching relationship between the plurality of pieces of display information. The instructions may, when executed by the at least one processor 120 individually or collectively, cause the electronic device 101; 200; 300; 400 to, based on the previous display information corresponding to one piece of the pattern information, determine next display information as display information matching to the previous display information among the pattern information. The next display information may include layout information and application information for setting a screen to be displayed after the folding state is changed. The instructions may, when executed by the at least one processor 120 individually or collectively, cause the electronic device 101; 200; 300; 400 to, based on the next display information, perform a screen construction of the cover display 161; 203; 303 or the flexible display 162; 202; 302; 403. The screen construction may include an operation for determining an application to be run and a layout of a screen to be displayed on the cover display 161; 203; 303 or the flexible display 162; 202; 302; 403.

According to an embodiment, the instructions may, when executed by the at least one processor 120 individually or collectively, cause the electronic device 101; 200; 300; 400 to, while a screen is displayed on the cover display 161; 203; 303 in the first folding state, identify first display information of the screen of the cover display 161; 203; 303. The first display information may include layout information and application information of the screen of the cover display (161; 203; 303) in the first folding state. The instructions may, when executed by the at least one processor 120 individually or collectively, cause the electronic device 101; 200; 300; 400 to, while a screen is displayed on the flexible display 162; 202; 302; 403 in the third folding state, identify second display information of the screen of the flexible display 162; 202; 302; 403. The second display information may include layout information and application information of the screen of the flexible display 162; 202; 302; 403 in the third folding state. The instructions may, when executed by the at least one processor 120 individually or collectively, cause the electronic device 101; 200; 300; 400 to, based on the first display information and the second display information, update pattern information. The pattern information may include the first display information, the second display information, and information about a matching relationship between the first display information and the second display information.

According to an embodiment, the instructions may, when executed by the at least one processor 120 individually or collectively, cause the electronic device 101; 200; 300; 400 to, in the first folding state, display a first screen on the cover display 161; 203; 303. The instructions may, when executed by the at least one processor 120 individually or collectively, cause the electronic device 101; 200; 300; 400 to, based on the identification of the change in the folding state, identify whether display information, which includes layout information and application information while the first screen is displayed, corresponds to the first display information included in the pattern information. The instructions may, when executed by the at least one processor 120 individually or collectively, cause the electronic device 101; 200; 300; 400 to, based on the display information while the first screen is displayed corresponding to the first display information, display a second screen on the flexible display 162; 202; 302; 403 in the third folding state according to layout information and application information of the second display information matching the first display information. The instructions may, when executed by the at least one processor 120 individually or collectively, cause the electronic device 101; 200; 300; 400 to, based on the display information while the first screen is displayed not corresponding to the first display information included in the pattern information, display a third screen on the flexible display 162; 202; 302; 403 in the third folding state based on the display information while the first screen is displayed. A layout and a running application of the third screen may be different from a layout and a running application of the second screen.

According to an embodiment, the second display information may include information corresponding to a plurality of time intervals. The information corresponding to the plurality of time intervals may include information about layout(s) and information about running application(s). The information about layout(s) may respectively correspond to the plurality of time intervals. The information about running application(s) may respectively correspond to the plurality of time intervals. The matching relationship may include statistical correlations between previous display configurations and subsequent user selections during folding state transitions. The information about the matching relationship may include probability information about the matching relationship and accuracy information about the matching relationship. The probability information may include information about a usage time ratio within the plurality of time intervals. The accuracy information may include information about an actual usage ratio by a past usage history. The instructions may, when executed by the at least one processor 120 individually or collectively, cause the electronic device 101; 200; 300; 400 to, based on displaying the first screen, identifying the change in the folding state, and the display information while the first screen may be displayed corresponding to the first display information included in the pattern information, based on the probability information and the accuracy information, display a screen for recommending a plurality of pieces of display information matching the first display information. The instructions may, when executed by the at least one processor 120 individually or collectively, cause the electronic device 101; 200; 300; 400 to, based on the second display information selected from the plurality of pieces of display information, display the second screen.

According to an embodiment, the instructions may, when executed by the at least one processor 120 individually or collectively, cause the electronic device 101; 200; 300; 400 to, in the second folding state, control the flexible display 162, 202, 302, 403 to display the screen for recommending the plurality of pieces of display information.

According to an embodiment, the instructions may, when executed by the at least one processor 120 individually or collectively, cause the electronic device 101; 200; 300; 400 to, while the screen for recommending the plurality of pieces of display information may be displayed, identify a user input for selecting the second display information. The instructions may, when executed by the at least one processor 120 individually or collectively, cause the electronic device 101; 200; 300; 400 to, based on the user input corresponding to a first user input, display the second screen according to a layout and a running application corresponding to the first user input and the second display information. The instructions may, when executed by the at least one processor 120 individually or collectively, cause the electronic device 101; 200; 300; 400 to, based on the user input corresponding to a second user input, display the second screen according to a layout and a running application corresponding to the second user input and the second display information.

According to an embodiment, the instructions may, when executed by the at least one processor 120 individually or collectively, cause the electronic device 101; 200; 300; 400 to, based on the user input for selecting the second display information corresponding to a touch input, display the second screen corresponding to the touch input. he second screen corresponding to the touch input may include an execution screen of a running application corresponding to the second display information. The second screen does may not include an execution screen of a running application in the first folding state.

According to an embodiment, the instructions may, when executed by the at least one processor 120 individually or collectively, cause the electronic device 101; 200; 300; 400 to, based on the user input for selecting the second display information corresponding to a hold input, display the second screen corresponding to the hold input. The second screen corresponding to the hold input may include an execution screen of a running application corresponding to the second display information, and an execution screen of a running application in the first folding state.

According to an embodiment, the instructions may, when executed by the at least one processor 120 individually or collectively, cause the electronic device 101; 200; 300; 400 to, based on the user input for selecting the second display information corresponding to the hold input and a drag input, determine a layout of the second screen corresponding to the hold input based on a direction of the drag input.

According to an embodiment, the instructions may, when executed by the at least one processor 120 individually or collectively, cause the electronic device 101; 200; 300; 400 to, based on identifying that a user input for selecting one of the plurality of pieces of display information is not inputted while the screen for recommending the plurality of pieces of display information is displayed in the second folding state, based on display information including layout information and application information while the first screen may be displayed, display a screen on the flexible display 162, 202, 302, 403 in the third folding state.

According to an embodiment, the instructions may, when executed by the at least one processor 120 individually or collectively, cause the electronic device 101; 200; 300; 400 to, based on the probability information and the accuracy information, determine characteristics of icons corresponding to the plurality of pieces of display information included in the screen for recommending the plurality of pieces of display information. The characteristics of the icons may include a horizontal length, a vertical length, and/or a display location of the icon(s). The icons may be configured to indicate characteristics of a screen to be displayed when the icons may be selected respectively.

According to an embodiment, the plurality of time intervals may include a first time interval, a second time interval, and a third time interval. The second time interval may be longer than the first time interval. The third time interval may be longer than the second time interval. The second time interval may include the first time interval. The third time interval may include the second time interval.

According to an embodiment, a neural network of the electronic device 101; 200; 300; 400 may update the pattern information based the previous display information and the determined next display information. The neural network may be trained to identify correlations between user interface configurations across different folding states.

According to an embodiment, a method for operating an electronic device 101, 200, 300, 400 may comprise identifying a folding state of the electronic device 101, 200, 300, 400. The folding state may include a first folding state in which, among a plurality of areas of a flexible display 162, 202, 302, 403 of the electronic device 101, 200, 300, 400, an area corresponding to a first hinge 270, 380, 450 of the electronic device 101, 200, 300, 400 and an area corresponding to a second hinge 280, 370, 440 of the electronic device 101, 200, 300, 400 are folded, a second folding state in which one of the area corresponding to the first hinge 270, 380, 450 or the area corresponding to the second hinge 280, 370, 440 is folded, and a third folding state in which the area corresponding to the first hinge 270, 380, 450 and the area corresponding to the second hinge 280, 370, 440 are unfolded. The method may comprise identifying a change in the folding state of the electronic device 101; 200; 300; 400. The method may comprise, based on the change in the folding state, comparing previous display information with pattern information. The previous display information may include layout information and application information of a screen displayed before the folding state is changed. The pattern information may include a plurality of pieces of display information and information about a matching relationship between the plurality of pieces of display information. The method may comprise, based on the previous display information corresponding to one piece of the pattern information, determining next display information as display information matching to the previous display information among the pattern information. The next display information may include layout information and application information for setting a screen to be displayed after the folding state is changed. The method may comprise, based on the next display information, performing a screen construction of the cover display 161; 203; 303 or the flexible display 162; 202; 302; 403. The screen construction may include an operation for determining an application to be run and a layout of a screen to be displayed on the cover display 161; 203; 303 or the flexible display 162; 202; 302; 403.

According to an embodiment, the method may comprise, while a screen is displayed on the cover display 161; 203; 303 in the first folding state, identifying first display information of the screen of the cover display 161; 203; 303. The first display information may include layout information and application information of the screen of the cover display 161; 203; 303 in the first folding state. The method may comprise, while a screen is displayed on the flexible display 162; 202; 302; 403 in the third folding state, identifying second display information of the screen of the flexible display 162; 202; 302; 403. The second display information may include layout information and application information of the screen of the flexible display 162; 202; 302; 403 in the third folding state. The method may comprise updating pattern information based on the first display information and the second display information. The pattern information may include the first display information, the second display information, and information about a matching relationship between the first display information and the second display information.

According to an embodiment, the method may comprise displaying a first screen on the cover display 161; 203; 303 in the first folding state. The method may comprise, based on the identification of the change in the folding state, identifying whether display information, which includes layout information and application information while the first screen is displayed, corresponds to the first display information included in the pattern information. The method may comprise, based on the display information while the first screen is displayed corresponding to the first display information, displaying a second screen on the flexible display 162; 202; 302; 403 in the third folding state according to layout information and application information of the second display information matching the first display information. The method may comprise, based on the display information while the first screen is displayed not corresponding to the first display information included in the pattern information, displaying a third screen on the flexible display 162; 202; 302; 403 in the third folding state based on the display information while the first screen is displayed. A layout and a running application of the third screen may be different from a layout and a running application of the second screen.

According to an embodiment, in the method, the second display information may include information corresponding to a plurality of time intervals. The information corresponding to the plurality of time intervals may include information about layout(s) and information about running application(s). The information about layout(s) may respectively correspond to the plurality of time intervals. The information about running application(s) may respectively correspond to the plurality of time intervals. The matching relationship may include statistical correlations between previous display configurations and subsequent user selections during folding state transitions. The information about the matching relationship may include probability information about the matching relationship and accuracy information about the matching relationship. The probability information may include information about a usage time ratio within the plurality of time intervals. The accuracy information may include information about an actual usage ratio by a past usage history. The method may comprise, based on displaying the first screen, identifying the change in the folding state, and the display information while the first screen may be displayed corresponding to the first display information included in the pattern information, based on the probability information and the accuracy information, display a screen for recommending a plurality of pieces of display information matching the first display information. The method may comprise displaying the second screen based on the second display information selected from the plurality of pieces of display information.

According to an embodiment, the method may comprise controlling the flexible display 162; 202; 302; 403 to display the screen for recommending the plurality of pieces of display information.

According to an embodiment, the method may comprise identifying a user input for selecting the second display information while the screen for recommending the plurality of pieces of display information is displayed. The method may comprise, based on the user input corresponding to a first user input, displaying the second screen according to a layout and a running application corresponding to the first user input and the second display information. The method may comprise, based on the user input corresponding to a second user input, displaying the second screen according to a layout and a running application corresponding to the second user input and the second display information.

According to an embodiment, the method may comprise, based on the user input for selecting the second display information corresponding to a touch input, displaying the second screen corresponding to the touch input. The second screen corresponding to the touch input may include an execution screen of a running application corresponding to the second display information. The second screen does may not include an execution screen of a running application in the first folding state.

According to an embodiment, the method may comprise, based on the user input for selecting the second display information corresponding to a hold input, displaying the second screen corresponding to the hold input. The second screen corresponding to the hold input may include an execution screen of a running application corresponding to the second display information, and an execution screen of a running application in the first folding state.

According to an embodiment, the method may comprise, based on the user input for selecting the second display information corresponding to the hold input and a drag input, determining a layout of the second screen corresponding to the hold input based on a direction of the drag input.

According to an embodiment, the method may comprise, based on identifying that a user input for selecting one of the plurality of pieces of display information is not inputted while the screen for recommending the plurality of pieces of display information is displayed in the second folding state, based on display information including layout information and application information while the first screen may be displayed, displaying a screen on the flexible display 162, 202, 302, 403 in the third folding state.

According to an embodiment, the method may comprise, based on the probability information and the accuracy information, determining characteristic(s) of icons corresponding to the plurality of pieces of display information included in the screen for recommending the plurality of pieces of display information, and The characteristics of the icons may include a horizontal length, a vertical length, and/or a display location of the icon(s). The icons may be configured to indicate characteristics of a screen to be displayed when the icons may be selected respectively.

According to an embodiment, in the method, the plurality of time intervals may include a first time interval, a second time interval, and a third time interval. The second time interval may be longer than the first time interval. The third time interval may be longer than the second time interval. The second time interval may include the first time interval. The third time interval may include the second time interval.

According to an embodiment, a neural network of the electronic device 101; 200; 300; 400 may update the pattern information based the previous display information and the determined next display information. The neural network may be trained to identify correlations between user interface configurations across different folding states.

According to an embodiment, in a non-transitory computer-readable recording medium storing instructions, the instructions may, when individually or collectively executed by at least one processor 120 of an electronic device 101; 200; 300; 400, cause the electronic device 101; 200; 300; 400 to perform at least one operation. The at least one operation may comprise identifying a folding state of the electronic device 101; 200; 300; 400. The folding state may include a first folding state in which, among a plurality of areas of a flexible display 162, 202, 302, 403 of the electronic device 101, 200, 300, 400, an area corresponding to a first hinge 270, 380, 450 of the electronic device 101, 200, 300, 400 and an area corresponding to a second hinge 280, 370, 440 of the electronic device 101, 200, 300, 400 are folded, a second folding state in which one of the area corresponding to the first hinge 270, 380, 450 or the area corresponding to the second hinge 280, 370, 440 is folded, and a third folding state in which the area corresponding to the first hinge 270, 380, 450 and the area corresponding to the second hinge 280, 370, 440 are unfolded. The at least one operation may comprise identifying a change in the folding state of the electronic device 101; 200; 300; 400. The at least one operation may comprise, based on the change in the folding state, comparing previous display information with pattern information. The previous display information may include layout information and application information of a screen displayed before the folding state is changed. The pattern information may include a plurality of pieces of display information and information about a matching relationship between the plurality of pieces of display information. The at least one operation may comprise, based on the previous display information corresponding to one piece of the pattern information, determining next display information as display information matching to the previous display information among the pattern information. The next display information may include layout information and application information for setting a screen to be displayed after the folding state is changed. The at least one operation may comprise, based on the next display information, performing a screen construction of the cover display 161; 203; 303 or the flexible display 162; 202; 302; 403. The screen construction may include an operation for determining an application to be run and a layout of a screen to be displayed on the cover display 161; 203; 303 or the flexible display 162; 202; 302; 403.

According to an embodiment, in the recording medium, the at least one operation may comprise, while a screen is displayed on the cover display 161; 203; 303 in the first folding state, identifying first display information of the screen of the cover display 161; 203; 303. The first display information may include layout information and application information of the screen of the cover display 161; 203; 303 in the first folding state. The at least one operation may comprise, while a screen is displayed on the flexible display 162; 202; 302; 403 in the third folding state, identifying second display information of the screen of the flexible display 162; 202; 302; 403. The second display information may include layout information and application information of the screen of the flexible display 162; 202; 302; 403 in the third folding state. The at least one operation may comprise updating pattern information based on the first display information and the second display information. The pattern information may include the first display information, the second display information, and information about a matching relationship between the first display information and the second display information.

According to an embodiment, in the recording medium, the at least one operation may comprise displaying a first screen on the cover display 161; 203; 303 in the first folding state. The at least one operation may comprise, based on the identification of the change in the folding state, identifying whether display information, which includes layout information and application information while the first screen is displayed, corresponds to the first display information included in the pattern information. The at least one operation may comprise, based on the display information while the first screen is displayed corresponding to the first display information, displaying a second screen on the flexible display 162; 202; 302; 403 in the third folding state according to layout information and application information of the second display information matching the first display information. The at least one operation may comprise, based on the display information while the first screen is displayed not corresponding to the first display information included in the pattern information, displaying a third screen on the flexible display 162; 202; 302; 403 in the third folding state based on the display information while the first screen is displayed. A layout and a running application of the third screen may be different from a layout and a running application of the second screen.

According to an embodiment, in the recording medium, the second display information may include information corresponding to a plurality of time intervals. The information corresponding to the plurality of time intervals may include information about layout(s) and information about running application(s). The information about layout(s) may respectively correspond to the plurality of time intervals. The information about running application(s) may respectively correspond to the plurality of time intervals. The matching relationship may include statistical correlations between previous display configurations and subsequent user selections during folding state transitions. The information about the matching relationship may include probability information about the matching relationship and accuracy information about the matching relationship. The probability information may include information about a usage time ratio within the plurality of time intervals. The accuracy information may include information about an actual usage ratio by a past usage history. The at least one operation may comprise, based on displaying the first screen, identifying the change in the folding state, and the display information while the first screen may be displayed corresponding to the first display information included in the pattern information, based on the probability information and the accuracy information, display a screen for recommending a plurality of pieces of display information matching the first display information. The at least one operation may comprise displaying the second screen based on the second display information selected from the plurality of pieces of display information.

According to an embodiment, in the recording medium, the at least one operation may comprise controlling the flexible display 162; 202; 302; 403 to display the screen for recommending the plurality of pieces of display information.

According to an embodiment, in the recording medium, the at least one operation may comprise identifying a user input for selecting the second display information while the screen for recommending the plurality of pieces of display information is displayed. The at least one operation may comprise, based on the user input corresponding to a first user input, displaying the second screen according to a layout and a running application corresponding to the first user input and the second display information. The at least one operation may comprise, based on the user input corresponding to a second user input, displaying the second screen according to a layout and a running application corresponding to the second user input and the second display information.

According to an embodiment, in the recording medium, the at least one operation may comprise, based on the user input for selecting the second display information corresponding to a touch input, displaying the second screen corresponding to the touch input. The second screen corresponding to the touch input may include an execution screen of a running application corresponding to the second display information. The second screen does may not include an execution screen of a running application in the first folding state.

According to an embodiment, in the recording medium, the at least one operation may comprise, based on the user input for selecting the second display information corresponding to a hold input, displaying the second screen corresponding to the hold input. The second screen corresponding to the hold input may include an execution screen of a running application corresponding to the second display information, and an execution screen of a running application in the first folding state.

According to an embodiment, in the recording medium, the at least one operation may comprise, based on the user input for selecting the second display information corresponding to the hold input and a drag input, determining a layout of the second screen corresponding to the hold input based on a direction of the drag input.

According to an embodiment, in the recording medium, the at least one operation may comprise, based on identifying that a user input for selecting one of the plurality of pieces of display information is not inputted while the screen for recommending the plurality of pieces of display information is displayed in the second folding state, based on display information including layout information and application information while the first screen may be displayed, displaying a screen on the flexible display 162, 202, 302, 403 in the third folding state.

According to an embodiment, in the recording medium, the at least one operation may comprise, based on the probability information and the accuracy information, determining characteristic(s) of icons corresponding to the plurality of pieces of display information included in the screen for recommending the plurality of pieces of display information, and The characteristics of the icons may include a horizontal length, a vertical length, and/or a display location of the icon(s). The icons may be configured to indicate characteristics of a screen to be displayed when the icons may be selected respectively.

According to an embodiment, in the recording medium, the plurality of time intervals may include a first time interval, a second time interval, and a third time interval. The second time interval may be longer than the first time interval. The third time interval may be longer than the second time interval. The second time interval may include the first time interval. The third time interval may include the second time interval.

According to an embodiment, a neural network of the electronic device 101; 200; 300; 400 may update the pattern information based the previous display information and the determined next display information. The neural network may be trained to identify correlations between user interface configurations across different folding states.

According to an embodiment, an electronic device 101; 200; 300; 400 may comprise a housing configured to form an outer surface of the electronic device 101; 200; 300; 400 and including a first housing 220; 330, a second housing 210; 310, and a third housing 230; 320. The second housing 210; 310 may be disposed between the first housing 220; 330 and the third housing 230; 320 in an unfolded state of the electronic device 101; 200; 300; 400. The electronic device 101; 200; 300; 400 may comprise a first hinge 270; 380; 450 configured to rotatably connect the first housing 220; 330 and the second housing 210; 310, a second hinge 280; 370; 440 configured to rotatably connect the second housing 210; 310 and the third housing 230; 320, a flexible display 162; 202; 302; 403 disposed in the housing, a cover display 161; 203; 303 disposed in the housing and configured to face a direction opposite to a direction which the flexible display 162; 202; 302; 403 faces in the unfolded state of the electronic device 101; 200; 300; 400, a sensor 176 including sensing circuitry, at least one processor 120 including processing circuitry, and memory 130 storing instructions. The instructions may, when executed by the at least one processor 120 individually or collectively, cause the electronic device 101; 200; 300; 400 to identify, using the sensor 176, a folding state of the electronic device 101; 200; 300; 400. The instructions may, when executed by the at least one processor 120 individually or collectively, cause the electronic device 101; 200; 300; 400 to identify, using the sensor 176, a change in the folding state of the electronic device 101; 200; 300; 400. The instructions may, when executed by the at least one processor 120 individually or collectively, cause the electronic device 101; 200; 300; 400 to determine next display information by, based on the change in the folding state, comparing previous display information with pattern information. The previous display information may include application information of a screen displayed before the folding state is changed. The pattern information may include a plurality of pieces of display information and information about a matching relationship between the plurality of pieces of display information. The next display information may include application information for setting a screen to be displayed after the folding state is changed. The instructions may, when executed by the at least one processor 120 individually or collectively, cause the electronic device 101; 200; 300; 400 to, based on the next display information, perform a screen construction of the cover display 161; 203; 303 or the flexible display 162; 202; 302; 403. The screen construction may include an operation for determining an application to be run to be displayed on the cover display 161; 203; 303 or the flexible display 162; 202; 302; 403.

According to an embodiment, the instructions may, when executed by the at least one processor 120 individually or collectively, cause the electronic device 101; 200; 300; 400 to, while a first screen is displayed on the cover display 161; 203; 303 in a first folding state, identify first application information of the first screen. The first application information may include information about a running application of the first screen. The instructions may, when executed by the at least one processor 120 individually or collectively, cause the electronic device 101; 200; 300; 400 to, while a second screen is displayed on the flexible display 162; 202; 302; 403 in a second folding state, identify second application information of the second screen. The second application information may include information about a running application of the second screen. The instructions may, when executed by the at least one processor 120 individually or collectively, cause the electronic device 101; 200; 300; 400 to, based on the first application information and the second application information, update pattern information. The pattern information may include the first application information, the second application information, and information about a matching relationship between the first application information and the second application information.

According to an embodiment, a method for operating an electronic device 101, 200, 300, 400 may comprise identifying, using the sensor 176, a folding state of the electronic device 101, 200, 300, 400. The method may comprise identifying, using the sensor 176, a change in the folding state of the electronic device 101; 200; 300; 400. The method may comprise determining next display information by, based on the change in the folding state, comparing previous display information with pattern information. The previous display information may include application information of a screen displayed before the folding state is changed. The pattern information may include a plurality of pieces of display information and information about a matching relationship between the plurality of pieces of display information. The next display information may include application information for setting a screen to be displayed after the folding state is changed. The method may comprise, based on the next display information, performing a screen construction of the cover display 161; 203; 303 or the flexible display 162; 202; 302; 403. The screen construction may include an operation for determining an application to be run to be displayed on the cover display 161; 203; 303 or the flexible display 162; 202; 302; 403.

According to an embodiment, the method may comprise, while a first screen is displayed on the cover display 161; 203; 303 in a first folding state, identifying first application information of the first screen. The first application information may include information about a running application of the first screen. The method may comprise, while a second screen is displayed on the flexible display 162; 202; 302; 403 in a second folding state, identifying second application information of the second screen. The second application information may include information about a running application of the second screen. The method may comprise updating pattern information based on the first application information and the second application information. The pattern information may include the first application information, the second application information, and information about a matching relationship between the first application information and the second application information.

According to an embodiment, in a non-transitory computer-readable recording medium storing instructions, the instructions may, when individually or collectively executed by at least one processor 120 of an electronic device 101; 200; 300; 400, cause the electronic device 101; 200; 300; 400 to perform at least one operation. The at least one operation may comprise identifying, using the sensor 176, a folding state of the electronic device 101; 200; 300; 400. The at least one operation may comprise identifying, using the sensor 176, a change in the folding state of the electronic device 101; 200; 300; 400. The at least one operation may comprise determining next display information by, based on the change in the folding state, comparing previous display information with pattern information. The previous display information may include application information of a screen displayed before the folding state is changed. The pattern information may include a plurality of pieces of display information and information about a matching relationship between the plurality of pieces of display information. The next display information may include application information for setting a screen to be displayed after the folding state is changed. The at least one operation may comprise, based on the next display information, performing a screen construction of the cover display 161; 203; 303 or the flexible display 162; 202; 302; 403. The screen construction may include an operation for determining an application to be run to be displayed on the cover display 161; 203; 303 or the flexible display 162; 202; 302; 403.

According to an embodiment, in the recording medium, the at least one operation may comprise, while a first screen is displayed on the cover display 161; 203; 303 in a first folding state, identifying first application information of the first screen. The first application information may include information about a running application of the first screen. The at least one operation may comprise, while a second screen is displayed on the flexible display 162; 202; 302; 403 in a second folding state, identifying second application information of the second screen. The second application information may include information about a running application of the second screen. The at least one operation may comprise updating pattern information based on the first application information and the second application information. The pattern information may include the first application information, the second application information, and information about a matching relationship between the first application information and the second application information.

According to an embodiment, an electronic device 101; 200; 300; 400 may comprise a housing configured to form an outer surface of the electronic device 101; 200; 300; 400 and including a first housing 220; 330, a second housing 210; 310, and a third housing 230; 320. The second housing 210; 310 may be disposed between the first housing 220; 330 and the third housing 230; 320 in an unfolded state of the electronic device 101; 200; 300; 400. The electronic device 101; 200; 300; 400 may comprise a first hinge 270; 380; 450 configured to rotatably connect the first housing 220; 330 and the second housing 210; 310, a second hinge 280; 370; 440 configured to rotatably connect the second housing 210; 310 and the third housing 230; 320, a flexible display 162; 202; 302; 403 disposed in the housing, a cover display 161; 203; 303 disposed in the housing and configured to face a direction opposite to a direction which the flexible display 162; 202; 302; 403 faces in the unfolded state of the electronic device 101; 200; 300; 400, a sensor 176 including sensing circuitry, at least one processor 120 including processing circuitry, and memory 130 storing instructions. The instructions may, when executed by the at least one processor 120 individually or collectively, cause the electronic device 101; 200; 300; 400 to identify, using the sensor 176, a folding state of the electronic device 101; 200; 300; 400. The instructions may, when executed by the at least one processor 120 individually or collectively, cause the electronic device 101; 200; 300; 400 to identify, using the sensor 176, a change in the folding state of the electronic device 101; 200; 300; 400. The instructions may, when executed by the at least one processor 120 individually or collectively, cause the electronic device 101; 200; 300; 400 to determine next display information by, based on the change in the folding state, comparing previous display information with pattern information. The previous display information may include application information of a screen displayed before the folding state is changed. The pattern information may include a plurality of pieces of display information and information about a matching relationship between the plurality of pieces of display information. The next display information may include layout information and application information for setting a screen to be displayed after the folding state is changed. The instructions may, when executed by the at least one processor 120 individually or collectively, cause the electronic device 101; 200; 300; 400 to, based on the next display information, perform a screen construction of the cover display 161; 203; 303 or the flexible display 162; 202; 302; 403. The screen construction may include an operation for determining a layout of a screen to be displayed on the cover display 161; 203; 303 or the flexible display 162; 202; 302; 403.

According to an embodiment, the instructions may, when executed by the at least one processor 120 individually or collectively, cause the electronic device 101; 200; 300; 400 to, while a first screen is displayed on the cover display 161; 203; 303 in a first folding state, identify first application information of the first screen. The first application information may include information about a running application of the first screen. The instructions may, when executed by the at least one processor 120 individually or collectively, cause the electronic device 101; 200; 300; 400 to, while a second screen is displayed on the flexible display 162; 202; 302; 403 in a second folding state, identify second application information of the second screen. The second application information may include information about a running application of the second screen. The instructions may, when executed by the at least one processor 120 individually or collectively, cause the electronic device 101; 200; 300; 400 to, based on the first application information and the second application information, update pattern information. The pattern information may include the first application information, the second application information, and information about a matching relationship between the first application information and the second application information.

According to an embodiment, a method for operating an electronic device 101, 200, 300, 400 may comprise identifying, using a sensor 176, a folding state of the electronic device 101, 200, 300, 400. The method may comprise identifying, using the sensor 176, a change in the folding state of the electronic device 101; 200; 300; 400. The method may comprise determining next display information by, based on the change in the folding state, comparing previous display information with pattern information. The previous display information may include application information of a screen displayed before the folding state is changed. The pattern information may include a plurality of pieces of display information and information about a matching relationship between the plurality of pieces of display information. The next display information may include layout information and application information for setting a screen to be displayed after the folding state is changed. The method may comprise, based on the next display information, performing a screen construction of the cover display 161; 203; 303 or the flexible display 162; 202; 302; 403. The screen construction may include an operation for determining a layout of a screen to be displayed on the cover display 161; 203; 303 or the flexible display 162; 202; 302; 403.

According to an embodiment, the method may comprise, while a first screen is displayed on the cover display 161; 203; 303 in a first folding state, identifying first application information of the first screen. The first application information may include information about a running application of the first screen. The method may comprise, while a second screen is displayed on the flexible display 162; 202; 302; 403 in a second folding state, identifying second application information of the second screen. The second application information may include information about a running application of the second screen. The method may comprise updating pattern information based on the first application information and the second application information. The pattern information may include the first application information, the second application information, and information about a matching relationship between the first application information and the second application information.

According to an embodiment, in a non-transitory computer-readable recording medium storing instructions, the instructions may, when individually or collectively executed by at least one processor 120 of an electronic device 101; 200; 300; 400, cause the electronic device 101; 200; 300; 400 to perform at least one operation. The at least one operation may comprise identifying, using the sensor 176, a folding state of the electronic device 101; 200; 300; 400. The at least one operation may comprise identifying, using the sensor 176, a change in the folding state of the electronic device 101; 200; 300; 400. The at least one operation may comprise determining next display information by, based on the change in the folding state, comparing previous display information with pattern information. The previous display information may include application information of a screen displayed before the folding state is changed. The pattern information may include a plurality of pieces of display information and information about a matching relationship between the plurality of pieces of display information. The next display information may include layout information and application information for setting a screen to be displayed after the folding state is changed. The at least one operation may comprise, based on the next display information, performing a screen construction of the cover display 161; 203; 303 or the flexible display 162; 202; 302; 403. The screen construction may include an operation for determining a layout of a screen to be displayed on the cover display 161; 203; 303 or the flexible display 162; 202; 302; 403.

According to an embodiment, in the recording medium, the at least one operation may comprise, while a first screen is displayed on the cover display 161; 203; 303 in a first folding state, identifying first application information of the first screen. The first application information may include information about a running application of the first screen. The at least one operation may comprise, while a second screen is displayed on the flexible display 162; 202; 302; 403 in a second folding state, identifying second application information of the second screen. The second application information may include information about a running application of the second screen. The at least one operation may comprise updating pattern information based on the first application information and the second application information. The pattern information may include the first application information, the second application information, and information about a matching relationship between the first application information and the second application information.

According to an embodiment, an electronic device 101; 200; 300; 400 may comprise a housing configured to form an outer surface of the electronic device 101; 200; 300; 400 and including a first housing 220; 330, a second housing 210; 310, and a third housing 230; 320. The second housing 210; 310 may be disposed between the first housing 220; 330 and the third housing 230; 320 in an unfolded state of the electronic device 101; 200; 300; 400. The electronic device 101; 200; 300; 400 may comprise a first hinge 270; 380; 450 configured to rotatably connect the first housing 220; 330 and the second housing 210; 310, a second hinge 280; 370; 440 configured to rotatably connect the second housing 210; 310 and the third housing 230; 320, a flexible display 162; 202; 302; 403 disposed in the housing, a cover display 161; 203; 303 disposed in the housing and configured to face a direction opposite to a direction which the flexible display 162; 202; 302; 403 faces in the unfolded state of the electronic device 101; 200; 300; 400, a sensor 176 including sensing circuitry, at least one processor 120 including processing circuitry, and memory 130 storing instructions. The instructions may, when executed by the at least one processor 120 individually or collectively, cause the electronic device 101; 200; 300; 400 to identify, using the sensor 176, a folding state of the electronic device 101; 200; 300; 400. The folding state may include a first folding state in which, among a plurality of areas of the flexible display 162; 202; 302; 403, an area corresponding to the first hinge 270; 380; 450 and an area corresponding to the second hinge 280; 370; 440 are folded, a second folding state in which one of the area corresponding to the first hinge 270; 380; 450 or the area corresponding to the second hinge 280; 370; 440 is folded, and a third folding state in which the area corresponding to the first hinge 270; 380; 450 and the area corresponding to the second hinge 280; 370; 440 are unfolded. The instructions may, when executed by the at least one processor 120 individually or collectively, cause the electronic device 101; 200; 300; 400 to, in the first folding state, display a first screen on the cover display 161; 203; 303. The instructions may, when individually or collectively executed by the at least one processor 120, cause the electronic device 101; 200; 300; 400 to, based on the folding state being changed from the first folding state to the second folding state, display a second screen on the flexible display 162; 202; 302; 403. The second screen may include application to be displayed on a screen in the third folding state and icon(s) for recommending a layout of the screen in the third folding state. The icon(s) may be determined based on first display information of the first screen. The instructions may, when individually or collectively executed by the at least one processor 120, cause the electronic device 101; 200; 300; 400 to, based on a user input to one of the icon(s), determine next display information including application(s) and the layout of the screen in the third folding state. The display information may correspond to the user input. The instructions may, when individually or collectively executed by the at least one processor 120, cause the electronic device 101; 200; 300; 400 to, based on the folding state being changed from the second folding state to the third folding state, display a third screen on the flexible display 162; 202; 302; 403 based on the next display information.

According to an embodiment, a method for operating an electronic device 101, 200, 300, 400 may comprise identifying, using the sensor 176, a folding state of the electronic device 101, 200, 300, 400. The folding state may include a first folding state in which, among a plurality of areas of the flexible display 162; 202; 302; 403, an area corresponding to the first hinge 270; 380; 450 and an area corresponding to the second hinge 280; 370; 440 are folded, a second folding state in which one of the area corresponding to the first hinge 270; 380; 450 or the area corresponding to the second hinge 280; 370; 440 is folded, and a third folding state in which the area corresponding to the first hinge 270; 380; 450 and the area corresponding to the second hinge 280; 370; 440 are unfolded. The method may comprise displaying a first screen on the cover display 161; 203; 303 in the first folding state. The method may comprise, based on the folding state being changed from the first folding state to the second folding state, displaying a second screen on the flexible display 162; 202; 302; 403. The second screen may include application to be displayed on a screen in the third folding state and icon(s) for recommending a layout of the screen in the third folding state. The icon(s) may be determined based on first display information of the first screen. The method may comprise, based on a user input to one of the icon(s), determining next display information including application(s) and the layout of the screen in the third folding state. The display information may correspond to the user input. The method may comprise, based on the folding state being changed from the second folding state to the third folding state, displaying a third screen on the flexible display 162; 202; 302; 403 based on the next display information.

According to an embodiment, in a non-transitory computer-readable recording medium storing instructions, the instructions may, when individually or collectively executed by at least one processor 120 of an electronic device 101; 200; 300; 400, cause the electronic device 101; 200; 300; 400 to perform at least one operation. The at least one operation may comprise identifying, using the sensor 176, a folding state of the electronic device 101; 200; 300; 400. The folding state may include a first folding state in which, among a plurality of areas of the flexible display 162; 202; 302; 403, an area corresponding to the first hinge 270; 380; 450 and an area corresponding to the second hinge 280; 370; 440 are folded, a second folding state in which one of the area corresponding to the first hinge 270; 380; 450 or the area corresponding to the second hinge 280; 370; 440 is folded, and a third folding state in which the area corresponding to the first hinge 270; 380; 450 and the area corresponding to the second hinge 280; 370; 440 are unfolded. The at least one operation may comprise displaying a first screen on the cover display 161; 203; 303 in the first folding state. The at least one operation may comprise, based on the folding state being changed from the first folding state to the second folding state, displaying a second screen on the flexible display 162; 202; 302; 403. The second screen may include application to be displayed on a screen in the third folding state and icon(s) for recommending a layout of the screen in the third folding state. The icon(s) may be determined based on first display information of the first screen. The at least one operation may comprise, based on a user input to one of the icon(s), determining next display information including application(s) and the layout of the screen in the third folding state. The display information may correspond to the user input. The at least one operation may comprise, based on the folding state being changed from the second folding state to the third folding state, displaying a third screen on the flexible display 162; 202; 302; 403 based on the next display information.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program) including one or more instructions that are stored in a storage medium that is readable by a machine (e.g., an electronic device). For example, a processor (e.g., a controller) of the machine may invoke at least one of the one or more instructions stored in the storage medium, and execute it. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101; 200; 300; 400) comprising:
a housing configured to form an outer surface of the electronic device (101; 200; 300; 400) and including a first housing (220; 330), a second housing (210; 310), and a third housing (230; 320), wherein the second housing (210; 310) is disposed between the first housing (220; 330) and the third housing (230; 320) in an unfolded state of the electronic device (101; 200; 300; 400);
a first hinge (270; 380; 450) configured to rotatably connect the first housing (220; 330) and the second housing (210; 310);
a second hinge (280; 370; 440) configured to rotatably connect the second housing (210; 310) and the third housing (230; 320);
a flexible display (162; 202; 302; 403) disposed in the housing;
a cover display (161; 203; 303) disposed in the housing and configured to face a direction opposite to a direction which the flexible display (162; 202; 302; 403) faces in the unfolded state of the electronic device (101; 200; 300; 400);
a sensor (176) including sensing circuitry;
at least one processor (120) including processing circuitry; and
memory (130) storing instructions
wherein the instructions, when executed by at least one processor (120) individually or collectively, cause the electronic device (101; 200; 300; 400) to:
identify, using the sensor (176), a folding state of the electronic device (101; 200; 300; 400), wherein the folding state includes a first folding state in which, among a plurality of areas of the flexible display (162; 202; 302; 403), an area corresponding to the first hinge (270; 380; 450) and an area corresponding to the second hinge (280; 370; 440) are folded, a second folding state in which one of the area corresponding to the first hinge (270; 380; 450) or the area corresponding to the second hinge (280; 370; 440) is folded, and a third folding state in which the area corresponding to the first hinge (270; 380; 450) and the area corresponding to the second hinge (280; 370; 440) are unfolded,
identify, using the sensor (176), a change in the folding state of the electronic device (101; 200; 300; 400),
based on the change of the folding state, compare previous display information with pattern information, wherein the previous display information includes layout information and application information of a screen displayed before the folding state is changed, and the pattern information includes a plurality of pieces of display information and information about a matching relationship between the plurality of pieces of display information,
based on the previous display information corresponding to one piece of the pattern information, determine next display information as display information matching to the previous display information among the pattern information, wherein the next display information includes layout information and application information for setting a screen to be displayed after the folding state is changed, and
based on the next display information, perform a screen construction of the cover display (161; 203; 303) or the flexible display (162; 202; 302; 403), and
wherein the screen construction includes an operation for determining an application to be run and a layout of a screen to be displayed on the cover display (161; 203; 303) or the flexible display (162; 202; 302; 403).

2. The electronic device (101; 200; 300; 400) of claim 1,
wherein the instructions, when executed by at least one processor (120) individually or collectively, cause the electronic device (101; 200; 300; 400) to:
while a screen is displayed on the cover display (161; 203; 303) in the first folding state, identify first display information of the screen of the cover display (161; 203; 303), wherein the first display information includes layout information and application information of the screen of the cover display (161; 203; 303) in the first folding state,
while a screen is displayed on the flexible display (162; 202; 302; 403) in the third folding state, identify second display information of the screen of the flexible display (162; 202; 302; 403), wherein the second display information includes layout information and application information of the screen of the flexible display (162; 202; 302; 403) in the third folding state, and
based on the first display information and the second display information, update pattern information, wherein the pattern information includes the first display information, the second display information, and information about a matching relationship between the first display information and the second display information.

3. The electronic device (101; 200; 300; 400) of claim 1 or 2,
wherein the instructions, when executed by at least one processor (120) individually or collectively, cause the electronic device (101; 200; 300; 400) to:
in the first folding state, display a first screen on the cover display (161; 203; 303),
based on the identification of the change in the folding state, identify whether display information, which includes layout information and application information while the first screen is displayed, corresponds to the first display information included in the pattern information,
based on the display information while the first screen is displayed corresponding to the first display information, display a second screen on the flexible display (162; 202; 302; 403) in the third folding state according to layout information and application information of the second display information matching the first display information, and
based on the display information while the first screen is displayed not corresponding to the first display information included in the pattern information, display a third screen on the flexible display (162; 202; 302; 403) in the third folding state based on the display information while the first screen is displayed, and
wherein a layout and a running application of the third screen are different from a layout and a running application of the second screen.

4. The electronic device (101; 200; 300; 400) of any one of claims 1 to 3,
wherein the second display information includes information corresponding to a plurality of time intervals, wherein the information corresponding to the plurality of time intervals includes information about layout(s) and information about running application(s), the information about layout(s) respectively corresponding to the plurality of time intervals, the information about running application(s) respectively corresponding to the plurality of time intervals,
wherein the matching relationship includes statistical correlations between previous display configurations and subsequent user selections during folding state transitions,
wherein the information about the matching relationship includes probability information about the matching relationship and accuracy information about the matching relationship, wherein the probability information includes information about a usage time ratio within the plurality of time intervals, and the accuracy information includes information about an actual usage ratio by a past usage history, and
wherein the instructions, when executed by at least one processor individually or collectively, cause the electronic device to:
based on displaying the first screen, identifying the change in the folding state, and the display information while the first screen is displayed corresponding to the first display information included in the pattern information:
based on the probability information and the accuracy information, display a screen for recommending a plurality of pieces of display information matching the first display information, and
based on the second display information selected from the plurality of pieces of display information, display the second screen.

5. The electronic device (101; 200; 300; 400) of any one of claims 1 to 4,
wherein the instructions, when executed by at least one processor (120) individually or collectively, cause the electronic device (101; 200; 300; 400) to:
in the second folding state, control the flexible display (162; 202; 302; 403) to display the screen for recommending the plurality of pieces of display information.

6. The electronic device (101; 200; 300; 400) of any one of claims 1 to 5,
wherein the instructions, when executed by at least one processor (120) individually or collectively, cause the electronic device (101; 200; 300; 400) to:
while the screen for recommending the plurality of pieces of display information is displayed, identify a user input for selecting the second display information,
based on the user input corresponding to a first user input, display the second screen according to a layout and a running application corresponding to the first user input and the second display information, and
based on the user input corresponding to a second user input, display the second screen according to a layout and a running application corresponding to the second user input and the second display information.

7. The electronic device (101; 200; 300; 400) of any one of claims 1 to 6,
wherein the instructions, when executed by at least one processor (120) individually or collectively, cause the electronic device (101; 200; 300; 400) to:
based on the user input for selecting the second display information corresponding to a touch input, display the second screen corresponding to the touch input, and
wherein the second screen corresponding to the touch input includes an execution screen of a running application corresponding to the second display information, and the second screen does not include an execution screen of a running application in the first folding state.

8. The electronic device (101; 200; 300; 400) of any one of claims 1 to 7,
wherein the instructions, when executed by at least one processor (120) individually or collectively, cause the electronic device (101; 200; 300; 400) to:
based on the user input for selecting the second display information corresponding to a hold input, display the second screen corresponding to the hold input, and
wherein the second screen corresponding to the hold input includes an execution screen of a running application corresponding to the second display information, and an execution screen of a running application in the first folding state.

9. The electronic device (101; 200; 300; 400) of any one of claims 1 to 8,
wherein the instructions, when executed by at least one processor (120) individually or collectively, cause the electronic device (101; 200; 300; 400) to:
based on the user input for selecting the second display information corresponding to the hold input and a drag input, determine a layout of the second screen corresponding to the hold input based on a direction of the drag input.

10. The electronic device (101; 200; 300; 400) of any one of claims 1 to 9,
wherein the instructions, when executed by at least one processor (120) individually or collectively, cause the electronic device (101; 200; 300; 400) to:
based on identifying that a user input for selecting one of the plurality of pieces of display information is not inputted while the screen for recommending the plurality of pieces of display information is displayed in the second folding state:
based on display information including layout information and application information while the first screen is displayed, display a screen on the flexible display (162; 202; 302; 403) in the third folding state.

11. The electronic device (101; 200; 300; 400) of any one of claims 1 to 10,
wherein the instructions, when executed by at least one processor (120) individually or collectively, cause the electronic device (101; 200; 300; 400) to:
based on the probability information and the accuracy information, determine characteristic(s) of icons corresponding to the plurality of pieces of display information included in the screen for recommending the plurality of pieces of display information, and
wherein the characteristic(s) of the icons include a horizontal length, a vertical length, and/or a display location of the icons, and the icons are configured to indicate characteristic(s) of a screen to be displayed when the icons are selected respectively.

12. The electronic device (101; 200; 300; 400) of any one of claims 1 to 11,
wherein the plurality of time intervals include a first time interval, a second time interval, and a third time interval, and
wherein the second time interval is longer than the first time interval,
the third time interval is longer than the second time interval,
the second time interval includes the first time interval, and
the third time interval includes the second time interval.

13. The electronic device (101; 200; 300; 400) of any one of claims 1 to 12, wherein a neural network of the electronic device (101; 200; 300; 400) is configured to update the pattern information based the previous display information and the determined next display information, and
wherein the neural network is trained to identify correlations between user interface configurations across different folding states.

14. A method for operating an electronic device (101; 200; 300; 400), the method comprising:
identifying a folding state of the electronic device (101; 200; 300; 400), wherein the folding state includes a first folding state in which, among a plurality of areas of a flexible display (162; 202; 302; 403) of the electronic device (101; 200; 300; 400), an area corresponding to a first hinge (270; 380; 450) of the electronic device (101; 200; 300; 400) and an area corresponding to a second hinge (280; 370; 440) of the electronic device (101; 200; 300; 400) are folded, a second folding state in which one of the area corresponding to the first hinge (270; 380; 450) or the area corresponding to the second hinge (280; 370; 440) is folded, and a third folding state in which the area corresponding to the first hinge (270; 380; 450) and the area corresponding to the second hinge (280; 370; 440) are unfolded;
identifying a change in the folding state of the electronic device (101; 200; 300; 400);
based on the change in the folding state, comparing previous display information with pattern information, wherein the previous display information includes layout information and application information of a screen displayed before the folding state is changed, and the pattern information includes a plurality of pieces of display information and information about a matching relationship between the plurality of pieces of display information;
based on the previous display information corresponding to one piece of the pattern information, determining next display information as display information matching to the previous display information among the pattern information, wherein the next display information includes layout information and application information for setting a screen to be displayed after the folding state is changed; and
based on the next display information, performing a screen construction of the cover display (161; 203; 303) or the flexible display (162; 202; 302; 403), and
wherein the screen construction includes an operation for determining an application to be run and a layout of a screen to be displayed on the cover display (161; 203; 303) or the flexible display (162; 202; 302; 403).

15. A non-transitory computer-readable recording medium storing instructions, the instructions, when individually or collectively executed by at least one processor (120) of an electronic device (101; 200; 300; 400), causing the electronic device (101; 200; 300; 400) to perform at least one operation,
the at least one operation comprising:
identifying a folding state of the electronic device, wherein the folding state includes a first folding state in which, among a plurality of areas of a flexible display of the electronic device, an area corresponding to a first hinge of the electronic device and an area corresponding to a second hinge of the electronic device are folded, a second folding state in which one of the area corresponding to the first hinge or the area corresponding to the second hinge is folded, and a third folding state in which the area corresponding to the first hinge and the area corresponding to the second hinge are unfolded;
identifying a change in the folding state of the electronic device (101; 200; 300; 400);
based on the change in the folding state, comparing previous display information with pattern information, wherein the previous display information includes layout information and application information of a screen displayed before the folding state is changed, and the pattern information includes a plurality of pieces of display information and information about a matching relationship between the plurality of pieces of display information;
based on the previous display information corresponding to one piece of the pattern information, determining next display information as display information matching to the previous display information among the pattern information, wherein the next display information includes layout information and application information for setting a screen to be displayed after the folding state is changed; and
based on the next display information, performing a screen construction of the cover display or the flexible display, and
wherein the screen construction includes an operation for determining an application to be run and a layout of a screen to be displayed on the cover display (161; 203; 303) or the flexible display (162; 202; 302; 403).
